# EUROPEAN PATENT APPLICATION

(11) **EP 3 557 905 A1**
(43) Date of publication of application: **23.10.2019**
(21) Application number: 17881515.5
(22) Date of filing: 15.12.2017
(51) Int. Cl.: H04W 36/00, H04W 36/32

(54) **METHOD FOR PERFORMING HANDOVER IN WIRELESS COMMUNICATION SYSTEM AND APPARATUS THEREFOR**

(30) Priority: 15.12.2016 US 201662434433 P; 11.07.2017 US 201762530854 P; 17.10.2017 US 201762573163 P; 26.10.2017 US 201762577658 P; 15.11.2017 US 201762586182 P
(71) Applicant: LG Electronics Inc., Seoul 07336 (KR)
(72) Inventor: YOUN, Myungjune, Seoul 06772 (KR); KIM, Laeyoung, Seoul 06772 (KR); KIM, Hyunsook, Seoul 06772 (KR); RYU, Jinsook, Seoul 06772 (KR); PARK, Sangmin, Seoul 06772 (KR)
(74) Representative: Frenkel, Matthias Alexander
(86) International application number: PCT/KR2017/014825
(87) International publication number: WO 2018/111029

(57) **Abstract**

Disclosed are a method for performing handover in a wireless communication system and a device therefor. Specifically, a method for performing handover of a user equipment (UE) by a session management function (SMF) including a communication module and a process in a wireless communication system may include: checking whether handover for a protocol data unit (PDU) session of the UE may be accepted; and transmitting, to an access and mobility management function (AMF), when handover for some PDU sessions among the PDU sessions of the UE is accepted, only information on some PDU sessions in which the handover is accepted.

## Description

### BACKGROUND OF THE INVENTION

### Field of the invention

The present invention relates to a wireless communication system, and more particularly, to a method for performing or supporting handover in a wireless communication system supporting a plurality of sessions and a service continuity mode and a device for supporting the same.

### Related Art

Mobile communication systems have been developed to provide voice services, while guaranteeing user activity. Service coverage of mobile communication systems, however, has extended even to data services, as well as voice services, and currently, an explosive increase in traffic has resulted in shortage of resource and user demand for a high speed services, requiring advanced mobile communication systems.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive Multiple Input Multiple Output (MIMO), in-band full duplex, non-orthogonal multiple access (NOMA), supporting super-wide band, and device networking, have been researched.

### SUMMARY OF THE INVENTION

The present invention provides a method for performing/supporting handover.

The present invention also provides a method for performing/supporting handover when a UE deviates from a service area of a session management function (SMF).

The present invention also provides a method for performing/supporting handover only for some protocol data units (PDUs) of a UE.

The technical objects of the present invention are not limited to the aforementioned technical objects, and other technical objects, which are not mentioned above, will be apparently appreciated by a person having ordinary skill in the art from the following description.

In an aspect, provided is a method for performing handover of a user equipment (UE) by a session management function (SMF) including a communication module and a process in a wireless communication system which may include: checking whether handover for a protocol data unit (PDU) session of the UE may be accepted; and transmitting, to an access and mobility management function (AMF), when handover for some PDU sessions among the PDU sessions of the UE is accepted, only information on some PDU sessions in which the handover is accepted.

Preferably, instead of information on a PDU session in which the handover is not accepted, information for announcing that the PDU session is not accepted may be transmitted.

Preferably, instead of the information on the PDU session in which the handover is not accepted, an unaccepted cause of the PDU session which is not accepted may be transmitted.

Preferably, the information on the PDU session may include an N3 interface user plane address and an uplink core network tunnel identifier of a user plane function (UPF) and a quality of service (QoS) parameter indicating that the information on the PDU session is information for a radio access network (RAN).

Preferably, the method may further include releasing the PDU session in which the handover is not accepted.

Preferably, the method may further include checking whether a change of the user plane function (UDF) is required.

Preferably, the method may further include, when a new UPF is selected, transmitting an N4 interface session establishment request message for providing a rule related to a packet to the selected UPF.

Preferably, when the PDU session corresponds to a local area data network (LADN) and the UE deviates from an available area of the LADN, user plane connectivity to a UPF corresponding to the PDU session corresponding to the LADN may be deactivated.

Preferably, when the PDU session corresponds to the LADN and an indication that the UE is expected to deviate from the available area of the LADN is received from the AMF, the handover of the PDU session corresponding to the LADN may not be accepted.

In another aspect, provided is a method for performing handover of a user equipment (UE) by an access and mobility management function (AMF) including a communication module and a process in a wireless communication system which may include: receiving, from a session management function (SMF), only information on some PDU sessions in which handover is accepted among PDU sessions of the UE; and generating a list of PDU sessions to be transferred to a radio access network (RAN) based on the received information on the PDU session.

Preferably, instead of information on a PDU session in which the handover is not accepted, information for announcing that the PDU session is not accepted may be received.

Preferably, instead of the information on the PDU session in which the handover is not accepted, an unaccepted cause of the PDU session which is not accepted may be received.

Preferably, a list of PDU sessions which are not accepted may be generated as the list of the PDU sessions, and the list of the PDU sessions which are not accepted may include a PDU which is not accepted by the SMF, a PDU session which is not accepted by the AMF because there is no response from the SMF within a maximum waiting time, and a PDU session which is not accepted by the AMF because there is no sine network slice selection assistance information (S-NSSAI) available within the AMF.

Preferably, a PDU session list which fails in set-up and a cause of a failure may be generated based on the list of the PDU sessions which is not accepted by the RAN.

Preferably, the cause of the failure may include a decision of the SMF, a too late SMF response, a decision of the RAN, and unavailability of the S-NSSAI.

According to an exemplary embodiment of the present invention, even when an SMF does not serve an entire area of a public land mobile network (PLMN), handover of a UE can be efficiently supported.

According to an exemplary embodiment of the present invention, a PDU session in which the handover is not required is released and the handover is performed for only a PDU session in which the handover is required, thereby reducing of resources and signaling loads of a UE and a network.

Advantages which can be obtained in the present invention are not limited to the aforementioned effects and other unmentioned advantages will be clearly understood by those skilled in the art from the following description.

### BRIEF DESCRIPTION OF THE DRAWINGS

In order to help understanding of the present invention, the accompanying drawings which are included as a part of the Detailed Description provide embodiments of the present invention and describe the technical features of the present invention together with the Detailed Description.
FIGS. 1 to 8 illustrate a wireless communication system architecture to which the present invention may be applied.
FIG. 9 illustrates an NG-RAN architecture to which the present invention may be applied.
FIG. 10 is a diagram illustrating a radio protocol stack in a wireless communication system to which the present invention may be applied.
FIG. 11 illustrates a reference architecture of a wireless communication system to which the present invention may be applied.
FIG. 12 more specifically illustrates a resume procedure in a wireless communication system to which the present invention may be applied.
FIGS. 13 and 14 are diagrams illustrating a session activation procedure in a wireless communication system to which the present invention may be applied.
FIGS. 15 to 18 illustrate a handover procedure according to an embodiment of the present invention.
FIG. 19 is a diagram illustrating a network entity layout scenario in a wireless communication system to which the present invention may be applied.
FIGS. 20 to 23 are diagrams illustrating a method for selecting an SMF during a handover procedure according to an embodiment of the present invention.
FIGS. 24 to 30 illustrate a handover procedure according to an embodiment of the present invention.
FIGS. 31 and 32 illustrate a method for performing handover according to an embodiment of the present invention.
FIG. 33 illustrates a block diagram of a communication apparatus according to an embodiment of the present invention.
FIG. 34 illustrates a block diagram of a communication apparatus according to an embodiment of the present invention.

### DESCRIPTION OF EXEMPLARY EMBODIMENTS

In what follows, preferred embodiments according to the present invention will be described in detail with reference to appended drawings. The detailed descriptions provided below together with appended drawings are intended only to explain illustrative embodiments of the present invention, which should not be regarded as the sole embodiments of the present invention. The detailed descriptions below include specific information to provide complete understanding of the present invention. However, those skilled in the art will be able to comprehend that the present invention can be embodied without the specific information.

For some cases, to avoid obscuring the technical principles of the present invention, structures and devices well-known to the public can be omitted or can be illustrated in the form of block diagrams utilizing fundamental functions of the structures and the devices.

A base station in this document is regarded as a terminal node of a network, which performs communication directly with a UE. In this document, particular operations regarded to be performed by the base station may be performed by an upper node of the base station depending on situations. In other words, it is apparent that in a network consisting of a plurality of network nodes including a base station, various operations performed for communication with a UE can be performed by the base station or by network nodes other than the base station. The term Base Station (BS) can be replaced with a fixed station, Node B, evolved-NodeB (eNB), Base Transceiver System (BTS), or Access Point (AP). Also, a terminal can be fixed or mobile; and the term can be replaced with User Equipment (UE), Mobile Station (MS), User Terminal (UT), Mobile Subscriber Station (MSS), Subscriber Station (SS), Advanced Mobile Station (AMS), Wireless Terminal (WT), Machine-Type Communication (MTC) device, Machine-to-Machine (M2M) device, or Device-to-Device (D2D) device.

In what follows, downlink (DL) refers to communication from a base station to a terminal, while uplink (UL) refers to communication from a terminal to a base station. In downlink transmission, a transmitter can be part of the base station, and a receiver can be part of the terminal. Similarly, in uplink transmission, a transmitter can be part of the terminal, and a receiver can be part of the base station.

Specific terms used in the following descriptions are introduced to help understanding the present invention, and the specific terms can be used in different ways as long as it does not leave the technical scope of the present invention.

Embodiments of the present invention can be supported by standard documents disclosed in at least one of wireless access systems including the IEEE 802, 3GPP, and 3GPP2 specifications. In other words, among the embodiments of the present invention, those steps or parts omitted for the purpose of clearly describing technical principles of the present invention can be supported by the documents above. Also, all of the terms disclosed in this document can be explained with reference to the standard documents.

To clarify the descriptions, this document is based on the 3GPP 5G (5 Generation) system, but the technical features of the present invention are not limited to the current descriptions.

Terms used in this document are defined as follows.
- Evolved Packet System (EPS): a network system including an Evolved Packet Core (EPC), that is an Internet Protocol (IP) based packet switched core network, and an access network such as LTE and UTRAN. The EPS is a network of an evolved version of a Universal Mobile Telecommunications System (UMTS).
- eNodeB: a base station of an EPS network. The eNodeB is installed outdoor, and its coverage has a scale of a macro cell.
- International Mobile Subscriber Identity (IMSI): an internationally unique subscriber identity allocated in a mobile communication network.
- Public Land Mobile Network (PLMN): a network configured for the purpose of providing mobile communication services to individuals. The PLMN can be configured for each operator.
- 5G system (5GS): a system composed of a 5G Access Network (AN), a 5G core network and a User Equipment (UE).
- 5G Access Network (5G-AN) (or AN): an access network composed of a New Generation Radio Access Network (NG-RAN) and/or a non-3GPP Access Network (AN) connected to the 5G core network.
- New Generation Radio Access Network (NG-RAN) (or RAN): a Radio Access Network having a common feature of being connected to 5GC and supporting one or more of the following options:
   1) Standalone New Radio.
   2) New radio that is an anchor supporting E-UTRA extension.
   3) Standalone E-UTRA (for example, eNodeB).
   4) Anchor supporting new radio extension
- 5G Core Network (5GC): a core network connected to a 5G access network.
- Network Function (NF): means a processing function adopted in 3GPP within a network or defined in 3GPP. The processing function includes a defined functional behavior and an interface defined in 3GPP.
- NF service: a function exposed by the NF via a service-based interface and consumed by other authenticated NF(s).
- Network Slice: a logical network that provides specific network capability(s) and network feature(s).
- Network Slice instance: a set of NF instance(s) and required resources(s) (e.g., compute, storage, and networking resources) that form a deployed network slice.
- Protocol Data Unit (PDU) Connectivity Service: service providing the exchange of PDU(s) between the UE and a data network.
- PDU Connectivity Service: service providing the exchange of PDU(s) between the UE and a data network.
- PDU Session: association between the UE and the data network providing the PDU Connectivity Service. An association type may be Internet Protocol (IP), Ethernet, or unstructured.
- Non-Access Stratum (NAS): a functional layer for transceiving signaling and a traffic message between the UE and the core network in EPS and 5GS protocol stack. The NAS mainly functions to support mobility of the UE and support a session management procedure.

### 5G system architecture to which present invention is applicable

A 5G system as a technology evolved from a 4-th generation mobile communication technology supports a new radio access technology (RAT), extended (LTE) (eLTE) as an extended technology long term evolution (LTE), non-3GPP (for example, wireless local area network (WLAN)) access, and the like through evolution of the existing mobile communication network or a clean-state structure.

A 5G system architecture is defined to support data connection and service so that deployment uses technologies such as network function virtualization and software defined networking. The 5G system architecture utilizes service-based interactions between control plane (CP) network functions (NFs). Several primary principles and concepts are as follows.
- CP functions and user plane (UP) functions are distinguished and independent scalability, evolution, and flexible deployments (e.g., centralized location or distributed (remote) location) are permitted.
- Function designing is modularized (e.g., flexible and efficient network slicing is enabled)
- Procedures (i.e., set of interactions between the NFs) are defined to be applied even anywhere as services
- If necessary, each NF may directly interact with another NF The architecture does not exclude use of an intermediate function so as to route a control plane message
- Dependency between an access network (AN) and a core network (CN) is minimized. The architecture is defined as a converged core network having a common AN-CN interface integrating different access types (e.g., 3GPP access and non-3GPP access).
- An integrated authentication framework is supported
- "Stateless" NFs are supported in which a "compute" resource is separated from a "storage" resource
- Capability extension is supported
- Concurrent access to local and centralized services is supported. UP functions may be deployed close to the access network in order to support low latency services and the access to a local data network
- Roaming for both local breakout (LBO) traffic and home routed traffic in visited PLMN is supported

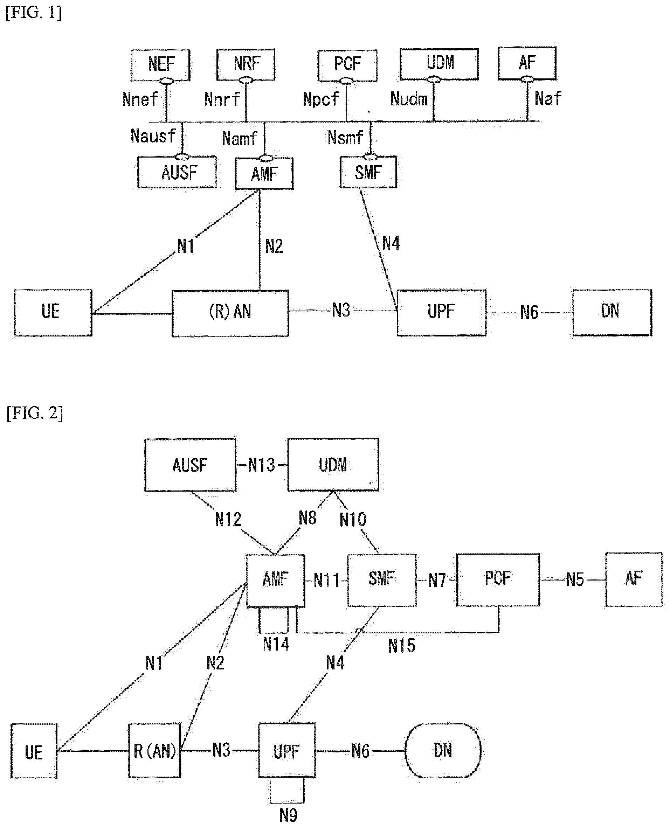

The 5G system may be defined based on the service and an interaction between network functions (NFs) in the architecture for the 5G system may be presented by two following schemes.
- Service-based representation (FIG. 1): Network functions (e.g., AMF) in the control plane (CP) permit other authenticated network functions to access services thereof. The representation also includes a point-to-point reference point.
- Reference point representation (FIG. 2): Represents the interaction between the NF services in the NFs described by the point-to-point reference point (e.g., N11) between two NFs (e.g., AMF and SMF).

FIG. 1 illustrates a wireless communication system architecture to which the present invention may be applied.

A service-based interface illustrated in FIG. 1 represents a set of services provided/exposed by a predetermined NF. The service-based interface is used in the control plane.

Referring to FIG. 1, a 5G system architecture may include various components (i.e., network functions (NFs)). FIG. 1 illustrates some of the various components including an Authentication Server Function (AUSF), a (Core) Access and Mobility Management Function (AMF), a Session Management Function (SMF), a Policy Control function (PCF), an Application Function (AF), a Unified Data Management (UDM), Data network (DN), User plane Function (UPF), a (Radio) Access Network ((R)AN), and a User Equipment (UE).

Respective NFs support the following functions.
- The AUSF stores data for the authentication of the UE.
- The AMF provides a function for the connection and mobility management for each UE, and one AMF can be basically connected to one UE.

More specifically, the AMF supports functions of inter-CN node signaling for mobility between 3GPP access networks, termination of RAN CP interface (i.e., N2 interface), termination N1 of NAS signaling, NAS signaling security (NAS ciphering and integrity protection), AS security control, registration management (registration area management), connection management, idle mode UE reachability (including control and execution of paging retransmission), mobility management control (subscription and policy), support of intra-system mobility and inter-system mobility, support of network slicing, SMF selection, lawful intercept (for an interface to AMF event and L1 system), providing the delivery of a session management (SM) message between UE and SMF, transparent proxy for routing the SM message, access authentication, access authorization including roaming authority check, providing the delivery of a SMS message between UE and SMSF, Security Anchor Function (SEA), Security Context Management (SCM), and the like.

Some or all of the functions of the AMF can be supported in a single instance of one AMF.
- The DN means, for example, operator services, internet access, or 3rd party service. The DN transmits a downlink Protocol Data Unit (PDU) to the UPF or receives the PDU transmitted from the UE from the UPF.
- The PCF receives information about packet flow from an application server and provides functions of determining policies such as mobility management and session management. More specifically, the PCF supports functions of supporting a unified policy framework for controlling a network operation, providing a policy rule so that CP function(s) (e.g., AMF, SMF, etc.) can enforce the policy rule, and implementing a front end for accessing related subscription information for policy decision in a User Data Repository (UDR).
- The SMF provides a session management function. If the UE has a plurality of sessions, the sessions can be respectively managed by different SMFs.

More specifically, the SMF supports functions of session management (e.g., session establishment, modification, and release, including tunnel maintenance between the UPF and the AN node), UE IP address allocation and management (including optional authentication), selection and control of UP function, configuring traffic steering at UPF to route traffic to proper destination, termination of interfaces toward policy control functions, enforcement of control part of a policy and QoS, lawful intercept (for an interface to SM event and L1 system), termination of SM part of a NAS message, downlink data notification, an initiator of AN specific SM information (sent to AN via the AMF over N2), SSC mode decision of the session, a roaming function, and the like.

Some or all of the functions of the SMF can be supported in a single instance of one SMF.
- The UDM stores subscription data of user, policy data, etc. The UDM includes two parts, i.e., application front end (FE) and User Data Repository (UDR).

The FE includes UDM FE taking charge of location management, subscription management, processing of credential, etc. and PCF taking charge of policy control. The UDR stores data required for functions provided by the UDM-FE and a policy profile required by the PCF. Data stored in the UDR includes user subscription data including subscription identifier, security credential, access and mobility related subscription data, and session related subscription data and policy data. The UDM-FE accesses subscription information stored in the UDR and supports functions of Authentication Credential Processing, User Identification Handling, access authentication, registration/mobility management, subscription management, SMS management, and the like.

The UPF transmits the downlink PDU received from the DN to the UE via the (R)AN and transmits the uplink PDU received from the UE to the DN via the (R)AN.

More specifically, the UPF supports functions of anchor point for intra/inter RAT mobility, external PDU session point of interconnect to Data Network (DN), packet routing and forwarding, packet inspection and user plane part of policy rule enforcement, lawful intercept, reporting of traffic usage, uplink classifier to support routing traffic flow to Data Network (DN), branching point to support multi-homed PDU session, QoS handling (e.g., packet filtering, gating, uplink/downlink rate enforcement) for user plane, uplink traffic verification (SDF mapping between Service Data Flow (SDF) and QoS flow), transport level packet marking in the uplink and downlink, downlink packet buffering and downlink data notification triggering, and the like. Some or all of the functions of the UPF can be supported in a single instance of one UPF.
- AF interacts with 3GPP core network to provide services (e.g., support functions of an application influence on traffic routing, network capability exposure access, interaction with policy framework for policy control, and the like).
- The NEF provides a means to securely expose services and capabilities provided by 3GPP network functions, for example, 3rd party, internal exposure/re-exposure, application function, and edge computing. The NEF receives information from other network function(s) (based on exposed capabilities of other network function(s)). The NEF can store the received information as structured data using a standardized interface to a data storage network function. The stored information can be re-exposed by the NEF to other network functions and other application functions and can be used for other purposes such as analytics.
- The NRF supports a service discovery function. The NRF receives NF Discovery Request from NF instance and provides information of the discovered NF instance to the NF instance. The NRF also maintains available NF instances and their supported services.
- (R)AN collectively refers to a new radio access network supporting both evolved E-UTRA, that is an evolved version of 4G radio access technology, and a New Radio (NR) access technology (e.g., gNB).

A gNB supports functions of radio resource management function (i.e., radio bearer control, radio admission control, connection mobility control, dynamic allocation of resources to the UE in uplink/downlink (scheduling)), Internet Protocol (IP) header compression, encryption of user data stream and integrity protection, selection of AMF upon attachment of the UE if routing to the AMF is not determined from information provided to the UE, routing of user plane data to UPF(s), routing of control plane information to ANF, connection setup and release, scheduling and transmission of a paging message (generated from the AMF), scheduling and transmission of system broadcast information (generated from the AMF or operating and maintenance (O&M)), measurement and measurement reporting configuration for mobility and scheduling, transport level packet marking in uplink, session management, support of network slicing, QoS flow management and mapping to data radio bearer, support of a UE in an inactive mode, NAS message distribution function, NAS node selection function, radio access network sharing, dual connectivity, tight interworking between NR and E-UTRA, and the like.
- The UE means a user equipment. The user equipment may be referred to as a term such as a terminal, a mobile equipment (ME), and a mobile station (MS). The user equipment may be a portable device such as a notebook computer, a cellular phone, a personal digital assistant (PDA), a smart phone, and a multimedia device, or a non-portable device such as a personal computer (PC) and a vehicle-mounted device.

Although Unstructured Data Storage network Function (UDSF), Structured Data Storage network Function (SDSF), Network Exposure Function (NEF), and NF Repository Function (NRF) are not shown in FIG. 1 for clarity of explanation, all the NFs shown in FIG. 1 can perform interaction with the UDSF, the NEF and the NRF, if necessary.
- The SDSF is structured data by any NEF and is a selective function to support a storage and retrieval function of information.
- The UDSF is unstructured data by any NF and is a selective function to support a storage and retrieval function of information.

The following illustrates the service-based interfaces included in the 5G system architecture as represented in FIG. 1.
- Namf: Service-based interface exhibited by the AMF
- Nsmf: Service-based interface exhibited by the SMF
- Nnef: Service-based interface exhibited by the NEF
- Npcf: Service-based interface exhibited by the PCF
- Nudm: Service-based interface exhibited by the UDM
- Naf: Service-based interface exhibited by the AF
- Nnrf: Service-based interface exhibited by the NRF
- Nausf: Service-based interface exhibited by the AUSF

The NF service is one type of capability exposed by an NF (i.e., NF service producer) to other NF (i.e., NF service consumer) via the service-based interface. The NF can expose one or more NF service(s). The following standard is applied to define the NF service.
- The NF services are derived from information flow for explaining an end-to-end function.
- Complete end-to-end message flow is explained by a sequence of NF service invocation.
- Two operations that the NF(s) provide its services via the service-based interface are as follows:
   i) "Request-response": A control plane NF_B (i.e., NF service producer) is requested from another control plane NF_A (i.e., NF service consumer) to provide a certain NF service (including performing an operation and/or providing information). The NF_B responses NF service result based on information provided by the NF_A in the Request.
      In order to fulfil the request, the NF_B may in turn consume NF services from other NF(s). In Request-response mechanism, communication is performed one to one between two NFs (i.e., consumer and producer).
   ii) "Subscribe-Notify"

A control plane NF_A (i.e., NF service consumer) subscribes to a NF service provided by another control plane NF_B (i.e., NF service producer). Multiple control plane NFs may subscribe to the same control plane NF service. The NF_B notifies a result of this NF service to the interested NFs that are subscribed to this NF service. A subscription request from the consumer may include a notification request for periodic update or notification triggered through specific events (e.g., change of requested information, reaching a certain critical value, etc.). This mechanism also includes the case where the NF(s) (e.g., NF_B) implicitly subscribes to a specific notice without an explicit subscription request (e.g., the case where the NF(s) subscribes through a successful registration procedure).

FIG. 2 illustrates a wireless communication system architecture to which the present invention may be applied.

In the 3GPP system, a conceptual link connecting NFs in a 5G system is defined as a reference point. Next, the reference point included in the 5G system architecture represented as in FIG. 2 is illustrated.
- N1 (or NG1): Reference point between UE and AMF
- N2 (or NG2): Reference point between (R)AN and AMF
- N3 (or NG3): Reference point between (R)AN and UPF
- N4 (or NG4): Reference point between SMF and UPF
- N5 (or NG5): Reference point between PCF and AF
- N6 (or NG6): Reference point between UPF and data network
- N7 (or NG7): Reference point between SMF and PCF
- N24 (or NG24): Reference point between PCF in visited network and PCF in home network
- N8 (or NG8): Reference point between UDM and AMF
- N9 (or NG9): Reference point between two core UPFs
- N10 (or NG10): Reference point between UDM and SMF
- N11 (or NG11): Reference point between AMF and SMF
- N12 (or NG12): Reference point between AMF and AUSF
- N13(or NG13): Reference point between UDM and authentication server function (AUSF)
- N14 (or NG14): Reference point between two AMFs
- N15 (or NG15): Reference point between PCF and AMF in case of non-roaming scenario and reference point between PCF and AMF in visited network in case of roaming scenario
- N16 (or NG16): Reference point (reference point between SMF in visited network and SMF in home network in case of roaming scenario) between two SMFs
- N17 (or NG17): Reference point between AMF and EIR
- N18 (or NG18): Reference point between any NF and UDSF
- N19 (or NG19): Reference point between NEF and SDSF

Meanwhile, in FIG. 2, for convenience of description, a reference model for a case where the UE accesses one DN using one PDU session is illustrated, but the present disclosure is not limited thereto.

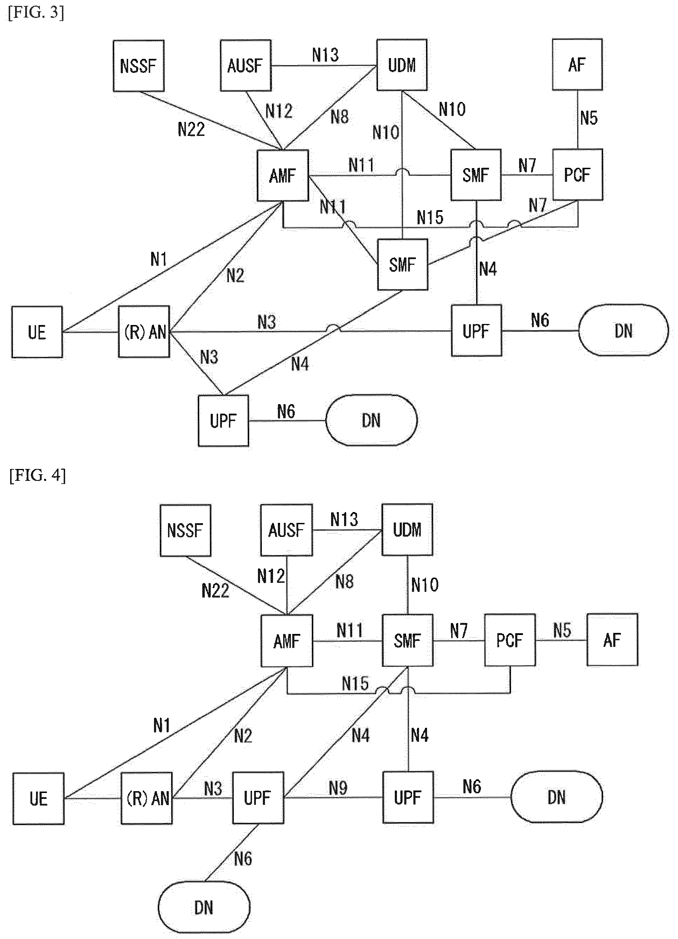

FIG. 3 illustrates a wireless communication system architecture to which the present invention may be applied.

In FIG. 3, a non-roaming 5G system architecture for a UE which concurrently accesses two (i.e., local and central) data networks (DNs) by using multiple PDU sessions is illustrated using the reference point representation.

In FIG. 3, an architecture for multiple PDU sessions is illustrated with respect to a case where two SMFs are selected for different PDU sessions. However, each SMF may have a capability to control both local UPF and central UPF in the PDU session.

FIG. 4 illustrates a wireless communication system architecture to which the present invention may be applied.

In FIG. 4, a non-roaming 5G system architecture for a case where a concurrent access to two (i.e., local and central) data networks (DNs) is provided in a single PDU session is illustrated using the reference point representation.

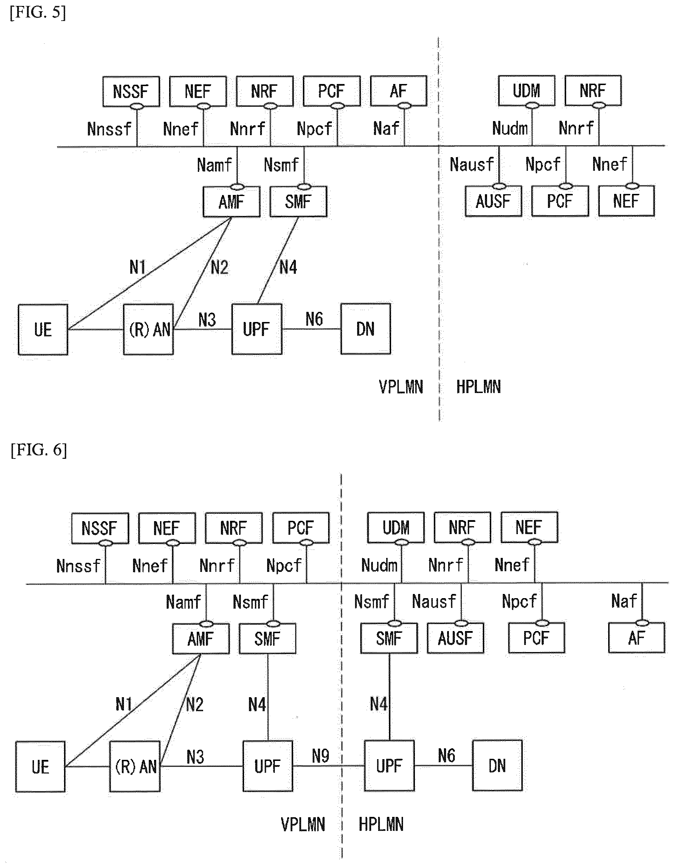

FIG. 5 illustrates a wireless communication system architecture to which the present invention may be applied.

In FIG. 5, a roaming 5G system architecture in the case of an LBO scenario having a service-based interface in a control plane is illustrated.

FIG. 6 illustrates a wireless communication system architecture to which the present invention may be applied.

In FIG. 6, a roaming 5G system architecture in the case of a home routed scenario having the service-based interface in the control plane is illustrated.

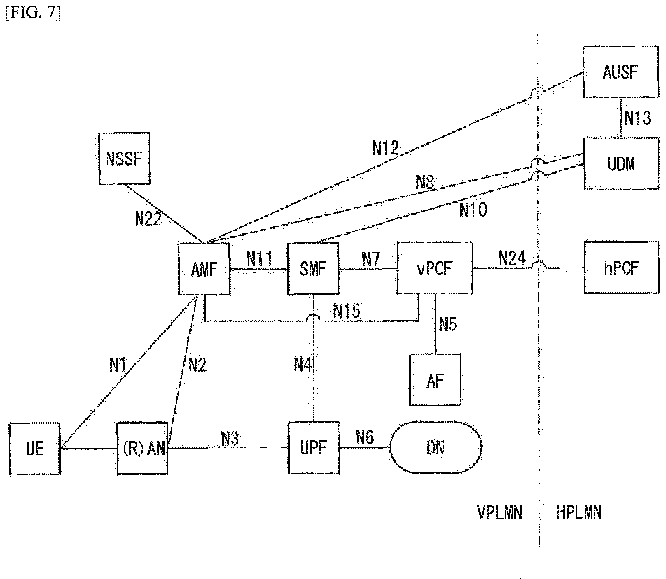

FIG. 7 illustrates a wireless communication system architecture to which the present invention may be applied.

In FIG. 7, a roaming 5G system architecture in the case of the LBO scenario is illustrated using the reference point representation.

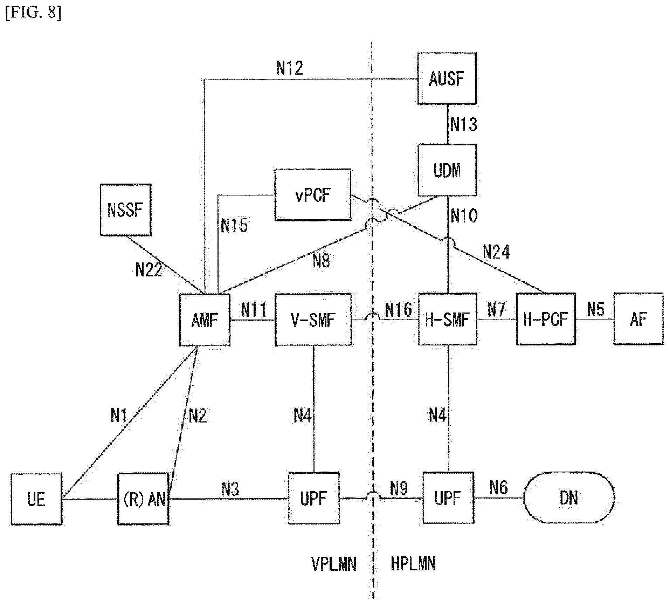

FIG. 8 illustrates a wireless communication system architecture to which the present invention may be applied.

In FIG. 8, a roaming 5G system architecture in the case of the home routed scenario is illustrated using the reference point representation.

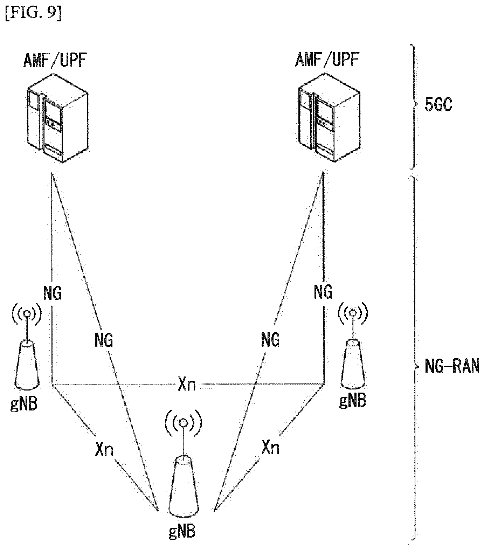

FIG. 9 illustrates an NG-RAN architecture to which the present invention may be applied.

Referring to FIG. 9, a next generation radio access network (NG-RAN) is constituted by gNB (NR NodeB)(s) and/or eNB (eNodeB)(s) providing user plane and control plane protocols toward the UE.

gNB(s) and gNB and eNB(s) connected to 5GC are connected to each other by using an Xn interface. The gNB(s) and the eNB(s) are also connected to the 5GC by using an NG interface and more specifically, the gNB(s) and the eNB(s) are connected to the AMF by using an NG-C interface (i.e., N2 reference point) which is a control plane interface between the NG-RAN and the 5GC and connected to the UPF by using an NG-U interface (i.e., N3 reference point) which is a user plane interface between the NG-RAN and the 5GC.

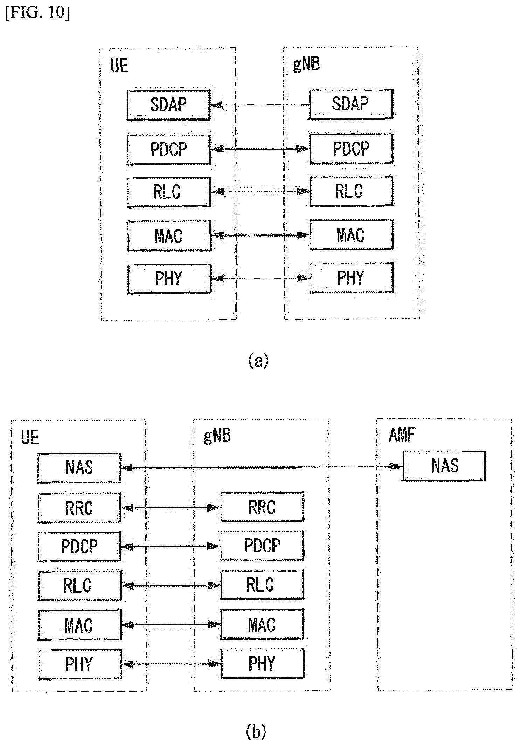

FIG. 10 is a diagram illustrating a radio protocol stack in a wireless communication system to which the present invention may be applied.

FIG. 10A illustrates a radio interface user plane protocol stack between the UE and the gNB and FIG. 10B illustrates a radio interface control plane protocol between the UE and the gNB.

The control plane means a passage through which control messages which the UE and the network use for managing a call are sent. The user plane means a passage through which data generated in an application layer, e.g., voice data or Internet packet data is sent.

Referring to FIG. 10A, the user plane protocol stack may be divided into a first layer (Layer 1) (i.e., a physical layer (PHY)) and a second layer (Layer 2).

Referring to FIG. 10B, the control plane protocol stack may be divided into the first layer (i.e., the PHY layer), the second layer, a third layer (i.e., a radio resource control (RRC) layer), and a Non-Access Stratum (NAS) layer.

The Layer 2 is divided into a Medium Access Control (MAC) sublayer, a Radio Link Control (RLC) sublayer, a Packet Data Convergence Protocol (PDC) sublayer, and a Service Data Adaptation Protocol (SDAP) sublayer (in case of the user plane).

A radio bearer is classified into two groups: data radio bearer (DRB) for user plane data and signaling radio bearer (SRB) for control plane data.

Each layer of the control plane and the user plane of the radio protocol is described below.
1) The Layer 1, i.e., the PHY layer, provides information transfer service to an upper layer by using a physical channel. The PHY layer is connected to the MAC sublayer located at an upper level through a transport channel, and data are transmitted between the MAC sublayer and the PHY layer through the transport channel. The transport channel is classified according to how and which feature data is transmitted via a radio interface. And, data is transmitted between different PHY layers, between a PHY layer of a transmitter and a PHY layer of a receiver, through a physical channel.
2) The MAC sublayer performs mapping between a logical channel and a transport channel; multiplexing/demultiplexing of MAC Service Data Unit (SDU) belonging to one or different logical channel(s) to/from a transport block (TB) delivered to/from the PHY layer through a transport channel; scheduling information reporting; error correction through hybrid automatic repeat request (HARQ); priority handling between UEs using dynamic scheduling; priority handling between logical channels of one UE using logical channel priority; and padding.
   Different kinds of data deliver a service provided by the MAC sublayer. Each logical channel type defines what type of information is delivered.
   The logical channel is classified into two groups: a Control Channel and a Traffic Channel.
   i) The Control Channel is used to deliver only control plane information and is as follows.
      - Broadcast Control Channel (BCCH): a downlink channel for broadcasting system control information.
      - Paging Control Channel (PCCH): a downlink channel that delivers paging information and system information change notification.
      - Common Control Channel (CCCH): a channel for transmitting control information between a UE and a network. This channel is used for UEs having no RRC connection with the network.
      - Dedicated Control Channel (DCCH): a point-to-point bi-directional channel for transmitting dedicated control information between the UE and the network. This channel is used by the UE having an RRC connection.
   ii) The Traffic Channel is used to use only user plane information.
      - Dedicated Traffic Channel (DTCH): a point-to-point channel, dedicated to a single UE, for delivering user information. The DTCH may exist in both uplink and downlink.

   In the downlink, connection between the logical channel and the transport channel is as follows.
   The BCCH may be mapped to BCH. The BCCH may be mapped to DL-SCH. The PCCH may be mapped to PCH. The CCCH may be mapped to the DL-SCH. The DCCH may be mapped to the DL-SCH. The DTCH may be mapped to the DL-SCH.
   In the uplink, connection between the logical channel and the transport channel is as follows. The CCCH may be mapped to UL-SCH. The DCCH may be mapped to the UL-SCH. The DTCH may be mapped to the UL-SCH.
3) The RLC sublayer supports three transmission modes: a Transparent Mode (TM), an Unacknowledged Mode (UM), and an Acknowledged Mode (AM).
   The RLC configuration may be applied for each logical channel. In case of SRB, the TM or the AM is used. On the other hand, in case of DRB, the UM the AM is used.
   The RLC sublayer performs the delivery of the upper layer PDU; sequence numbering independent of PDCP; error correction through automatic repeat request (ARQ); segmentation and re-segmentation; reassembly of SDU; RLC SDU discard; and RLC re-establishment.
4) A PDCP sublayer for the user plane performs Sequence Numbering; header compression and decompression (Robust Header Compression (RoHC) only); delivery of user data; reordering and duplicate detection (if the delivery to a layer above the PDCP is required); PDCP PDU routing (in case of a split bearer); re-transmission of PDCP SDU; ciphering and deciphering; PDCP SDU discard; PDCP re-establishment and data recovery for RLC AM; and duplication of PDCP PDU.
   The PDCP sublayer for the control plane additionally performs Sequence Numbering; ciphering, deciphering and integrity protection; delivery of control plane data; duplicate detection; and duplication of PDCP PDU.
   When duplication is configured for a radio bearer by RRC, an additional RLC entity and an additional logical channel are added to the radio bearer to control the duplicated PDCP PDU(s). The duplication at PDCP includes transmitting the same PDCP PDUs twice. Once it is transmitted to the original RLC entity, and a second time it is transmitted to the additional RLC entity. In this instance, the original PDCP PDU and the corresponding duplicate are not transmitted to the same transport block. Two different logical channels may belong to the same MAC entity (in case of CA) or different MAC entities (in case of DC). In the former case, logical channel mapping restriction is used to ensure that the original PDCP PDU and the corresponding duplicate are not transmitted to the same transport block.
5) The SDAP sublayer performs i) mapping between QoS flow and data radio bearer, and ii) QoS flow identification (ID) marking in downlink and uplink packet.
   A single protocol entity of SDAP is configured for each individual PDU session, but exceptionally, in case of dual Connectivity (DC), two SDAP entities can be configured.
6) A RRC sublayer performs broadcast of system information related to Access Stratum (AS) and Non-Access Stratum (NAS); paging initiated by 5GC or NG-RAN; establishment, maintenance and release of RRC connection between UE and NG-RAN (additionally including modification and release of carrier aggregation and also additionally including modification and release of Dual Connectivity between E-UTRAN and NR or in NR); security function including key management; establishment, configuration, maintenance and release of SRB(s) and DRB(s); delivery of handover and context; UE cell selection and re-release and control of cell selection/reselection: mobility function including inter-RAT mobility; QoS management function, UE measurement reporting and control of reporting; detection of radio link failure and recovery from radio link failure; and NAS message delivery from NAS to UE and NAS message delivery from UE to NAS.

### Session and service continuity (SSC)

In 3GPP SA2, discussion about a method for supporting session and service continuity according to the mobility of a UE is in progress.

In a next-generation system (e.g., 5G system), a solution for supporting three SSC modes is discussed.

In the solution, a PDU session present between a UE and a user plane function (hereinafter referred to as a "terminating user-plane function (TUPF)", but may be substituted with the above-described UPF) is assumed. The TUPF terminates a 3GPP user plane, and interacts with a data network.

### 1) SSC mode definition

A next-generation system supports the following SSC modes.
- SSC mode 1: the same TUPF is maintained regardless of an access technology (e.g., RAT and cell) being used by a UE in order to access a network.
- SSC mode 2: the same TUPF is maintained only through a partial set (i.e., one or more, but not all) of access network attachment points (e.g., cell and RAT) referred to as the serving area of a TUPF. When a UE gets out of the serving area of a TUPF, the UE is served by a different TUPF suitable for a new attachment point to the network of the UE.
- SSC mode 3: in this mode, a network allows the establishment of UE continuity toward the same data network (DN) via a new TUPF before a connection between the UE and a previous TUPF is terminated. When a trigger condition is applied, the network selects a target TUPF suitable for a new attachment point toward the network of the UE. While the two TUPFs are activated, the UE actively rebinds an application from a previous address/prefix to a new address/prefix or waits until a flow bound with a previous address/prefix is terminated.

### 2) Mode selection and network support

In relation to mode selection and network support, the following principle is applied:
- When requesting a PDU session, a UE may indicate a requested SSC mode as part of PDU session setup signaling with respect to a network. A method of determining a requested SSC mode by a UE is described later.
- A serving network receives, from a subscription database, a list of SSC modes supported for each data network for each subscriber and a default SSC mode as part of subscription information.
- The serving network selects an SSC mode by accepting the requested SSC mode or modifying the requested SSC mode based on the subscription information and/or a local configuration.
- When the UE requests a new PDU session, if an SSC mode is not provided, the network applies the local configuration for selecting a default SSC mode (for connection to a data network) listed in the subscription information or selecting the SSC mode.
- After selecting the SSC mode, (a) the network accepts the PDU session request from the UE and indicates the selected SSC mode accepted for the UE or (b) the network rejects the PDU session request and transmits the selected SSC mode and a cause value to the UE in order to indicate that the selected SSC mode is already used by another PDU session within the UE.
- The SSC mode is applied for each PDU session. The UE requests a different SSC mode in a different PDU session. That is, different PDU sessions activated at the same time for the same UE may have different SSC modes.
- The SSC mode is not changed during the lifetime of the PDU session.
- TUPF selection: when selecting a TUPF for the PDU session, the network takes into considerate on the current attachment point of the UE and the requested SSC mode.

### 3) SSC mode 1

In relation to the SSC mode 1, the following principle is applied:
- An allocated TUPF is maintained during the lifetime of a PDU session. That is, the TUPF is not changed by a network.

### 4) SSC mode 2

In relation to the SSC mode 2, the following principle is applied:
- Redirection trigger to a different TUPF: a network determines whether a TUPF allocated to the PDU session of a UE needs to be redirected based on UE mobility, a local policy (i.e., information on the serving area of the allocated TUPF).
- Redirection procedure: a network redirects traffic of a UE to a different TUPF by first releasing a user plane path associated with a current TUPF and then setting up a user plane path corresponding to a new TUPF. The following two solutions are used. In one solution, when a TUPF is reallocated, a PDU session is preserved. In the other solution, a network disconnects the PDU session of a UE corresponding to a current TUPF and requests the UE to immediately activate a PDU session (a result of the selection of a new TUPF) again. During the process, the UE maintains an attached state. The network selects a TUPF based on the current attachment point of the UE toward the network.

### 5) SSC mode 3

In relation to the SSC mode 3, the following principle is applied:
- Redirection trigger toward a different TUPF: a network determines whether a TUPF allocated to the PDU session of a UE needs to be redirected based on a local policy (i.e., information on the serving area of the allocated TUPF).
- Redirection procedure: a network indicates whether traffic on one of the activated PDU sessions of a UE needs to be redirected with respect to the UE. Furthermore, the network starts a timer and indicates a timer value with respect to the UE. A user plane path is established toward a new TUPF. The following two solutions are used. In one solution, a PDU session is reused for an additional user plane path. In the other solution, an additional PDU session is re-established. The network selects a TUPF based on the current attachment point of the UE toward the network. If a UE has transmitted a request for an additional PDU session to the same DN without previous indication, indicating that an activated PDU session needs to be redirected, from a network, the network rejects the request of the UE.
- If a new user plane path associated with the new TUPF has been established, the UE may perform one of the following options.
   Option 1: the UE actively redirects an application flow, bound with a previous TUPF, to a new TUPF (e.g., using a higher layer session continuity mechanism). When the UE completes the redirection of the application flow to the new TUPF, the previous TUPF is released.
   Option 2: the UE steers a new application flow toward a new TUPF. A previous flow via a previous TUPF continues until the flow is terminated. When all flows using the previous TUPF are terminated, the previous TUPF is released. When Option 2 is used, a multi-homed PDU session may be used to transmit an application flow bound with the previous TUPF. A tunnel between the previous TUPF and the new TUPF is used to forward such a flow.
- If a previous TUPF has not been released when a timer expires or a network detects that a previous TUPF has been deactivated, the network releases the previous TUPF.

### Session management per PDU session

This solution is based on the following principles:
- The session management function (SMF) and mobility management function (MMF) are split into different network functions. In the particular case of UE registered with multiple network slice instances, the UE may be served by multiple SMFs. That is, multiple PDU sessions are established.

Multiple PDU sessions (to the same or to different network slices) are established for a given UE. A PDU session may be in Idle state or Active state.
- A UP connection (including data radio connection and NG3 tunnel establishing) can be activated for a single PDU session. UP connections for other PDU sessions (to the same or to other network slices) can be activated/deactivated independently.
- The procedures for PDU session activation and deactivation are proposed.

Here, PDU session activation is the transition to "Active" session state in the SMF and the UP connection is established. PDU session deactivation is the transition to "Idle" session state in SMF and the UP connection is released/deactivated.
- Similar to the existing SM in GPRS and EPS, this solution does not preclude to perform SM (i.e. Active/Idle transition management) for all existing PDU sessions together. Whether to perform activation of all PDU sessions or activation of individual PDU session can be based on subscription and UE capability.

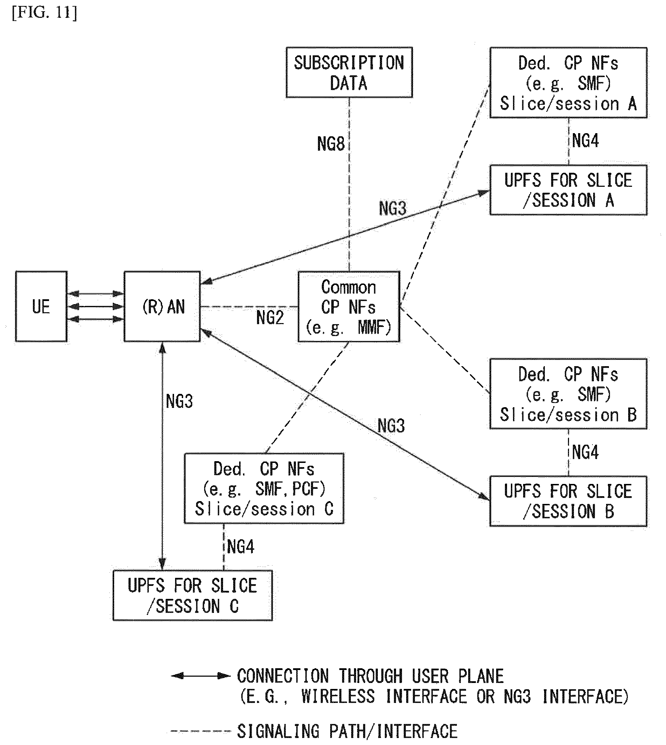

FIG. 11 illustrates a reference architecture of a wireless communication system to which the present invention may be applied.

FIG. 11 illustrates a reference architecture with 3 PDU sessions to different network slices having independent SMFs.

The common control plane network functions (CCNF) may include mobility management function or AAA functions. The dedicated control plane network functions (Ded. CP NF) may include the session management function (SMF) and optionally the policy control function (PCF).

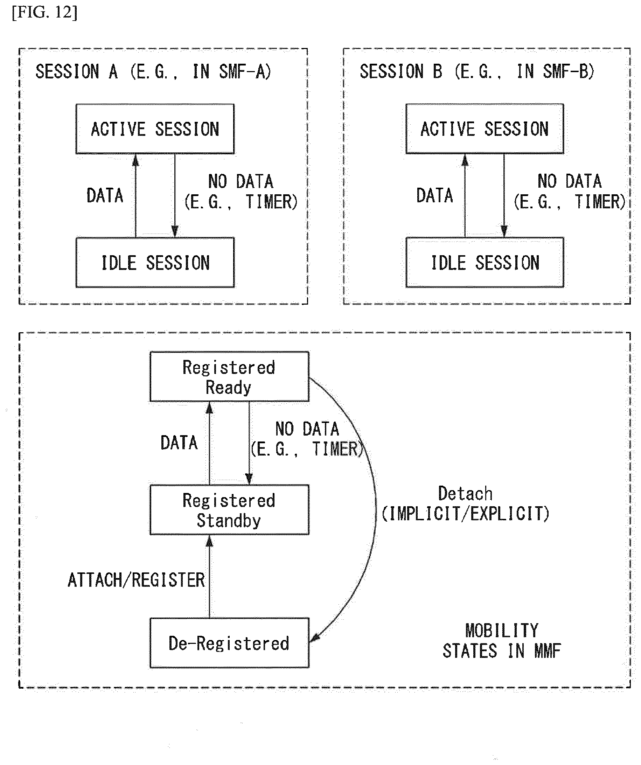

FIG. 12 illustrates a session/mobility state machine in a wireless communication system to which the present invention may be applied.

FIG. 12 illustrates multiple session state machines (one per established session) and a single mobility state machine.

FIG. 12 shows independent session state machines per existing session (i.e. per network slice, or PDU session). The session (SM) state machine can be maintained in the SMF as part of the UE's SM context in the SMF. The SM state machine is also maintained in the MMF.

The CCNF (e.g. MMF) knows the session state (Idle or Active) in SMFs for all the established PDU sessions. With this, in addition to the mobility (MM) context, the MMF maintains also state information for all established PDU sessions.

For example, if a PDU session is deactivated (i.e. the UP connection is released but context is kept in UE, SMF/UPF) the MMF knows that the corresponding SMF should not be updated when the UE moves and changes RAN node. In contrary, if a PDU session is activated, the MMF knows that the corresponding SMF should be updated with the new (R)AN node details (e.g. IP address, tunnel identifier, transport port ID, or other parameters) each time when a (R)AN node changes due to UE mobility.

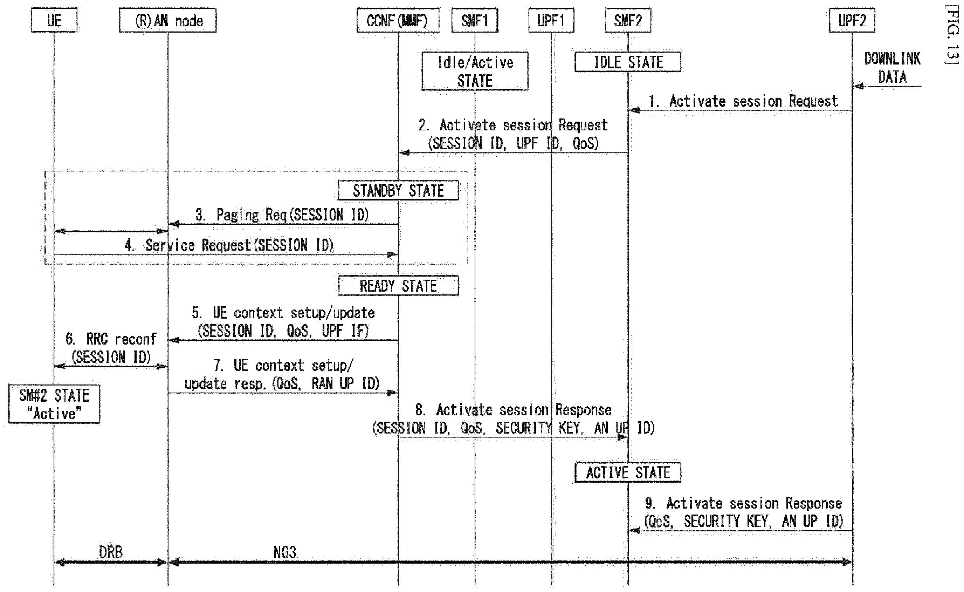

FIG. 13 is a diagram illustrating a session activation procedure in a wireless communication system to which the present invention may be applied.

FIG. 13 illustrates a session activation procedure triggered by DL data transmission (that is, in the case of a mobile terminate (MT)) which is independent from other PDU sessions.
1. The UPF2 initiates Activate session request procedure for the establishment of UP connection.
2. The SMF2 initiates Activate session request procedure towards the CCNF (e.g. MMF). SMF2 includes session ID, QoS parameters, paging priority and UPF ID (needed for NG3 tunnel establishment, e.g. IP address, tunnelling endpoint ID and/or transport layer port ID). If the CCSF has another Activate session request procedure in progress with other SMF (e.g. SMF1) and the Activate session request message from the SMF2 has equal or less paging priority than the one in progress., the CCSF does not initiates new paging procedure to the UE.
3-4. If the MMF is in Standby state, the MMF initiates the paging procedure to the UE. The Paging message includes the session ID that corresponding to the DL packets arrived to the UPF2. If the MMF is in Ready state (i.e. there is a session activated with UPF1), the CCNF sends a service notification message to the UE over the NG1 interface instead of performing a paging procedure.
4. The UE sends the Service Request message to the CCNF. The Service Request message includes the session ID if the session ID was present in step 3.
5-7. The CCNF (e.g. MMF) performs UE context setup procedure toward the RAN node. The session state in the UE for this PDU session changes to "Active" and the UE is able to send /receive data.
8. The MMF sends a response including the RAN node UP information for NG3 tunnel establishment to the SMF2. The CCNF receives Activate session request messages from multiple SMFs, and then multiple Activate session response messages are responded to the corresponding SMFs.
9. The SMF2 updates UPF3 with the information needed for NG3 tunnel establishment.

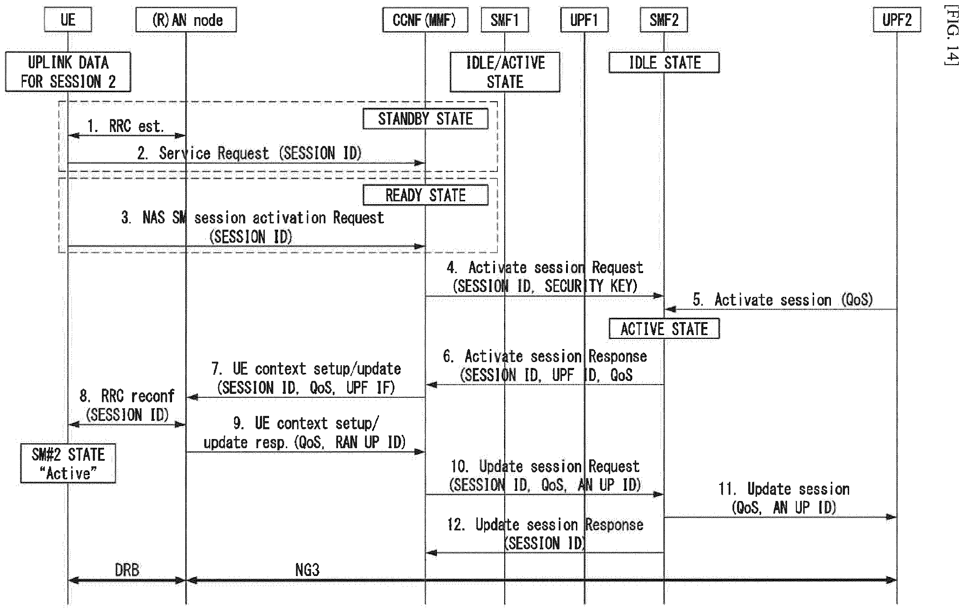

FIG. 14 is a diagram illustrating a session activation procedure in a wireless communication system to which the present invention may be applied.

FIG. 14 illustrates a session activation procedure triggered by UL data transmission (i.e., in the case of mobile originated (MT)) which is independent from activation of other PUC sessions.
1. Due to UL data for PDU session 2, the UE initiates RRC connection establishment with a RAN node to send an initial NAS message. If the UE has activated session (i.e., in Ready state), the UE skips this step and performs step 3.
2. If the UE does not have any active sessions, the UE sends the Service Request message to the CCNF. The Service Request message includes the session ID that the UE wants to activate.
3. If UE has an active session (i.e., in Ready state), the UE sends a NAS SM session activation message which includes the session ID that the UE wants to activate.
4-6. The CCNF (e.g. MMF) performs an Activate session procedure with the SMF2. The SMF2 updates the UPF2, if needed, and replies to the MMF with the corresponding stored QoS parameters and UPF ID.
7-9. The CCNF (e.g. MMF) performs a UE context setup procedure with the RAN node. The session (SM) state in the UE for this PDU session changes to "Active" and the UE is able to send /receive data using the PDU session.
10-12. The MMF performs an Update session procedure toward the associated SMF2 to inform SMF2 and UPF2 about the RAN node UP information for NG3 tunnel establishment.

The procedure for session deactivation includes the release of the UP connection (data radio connection and NG3 connection/tunnel). The UE's context in the SMF and the NAS SM context in the UE are kept, but the state is "Idle". The session deactivation procedure can be initiated by the RAN node.

### Handover performing method

In the EPC, the MME manages both the mobility and the session of the UE, but the functions of the MME are dispersed in the next generation (Next Generation), so that the AMF is in charge of managing the mobility management of the UE and the SMF is in charge of managing the session management of the UE. Therefore, a lot of signaling between the AMF and the SMF cannot but occur for handover (HO) of the UE, which increases the signaling between the networks.

Therefore, in order to reduce the signaling, there is a need for a method that does not hand over unnecessary session information considering the characteristics of the session.

The present invention proposes a method for not hand over a session context for some PDU sessions by considering the characteristics of the PDU session when the handover is performed in a state where the UE has a plurality of PDU sessions. That is, the present invention proposes a method for handing over only some PDU sessions among the PDU sessions held by the UE.

First, the handover procedure in a scenario in which only the gNB is changed and the AMF, the SMF, and the UPF are not changed is described.

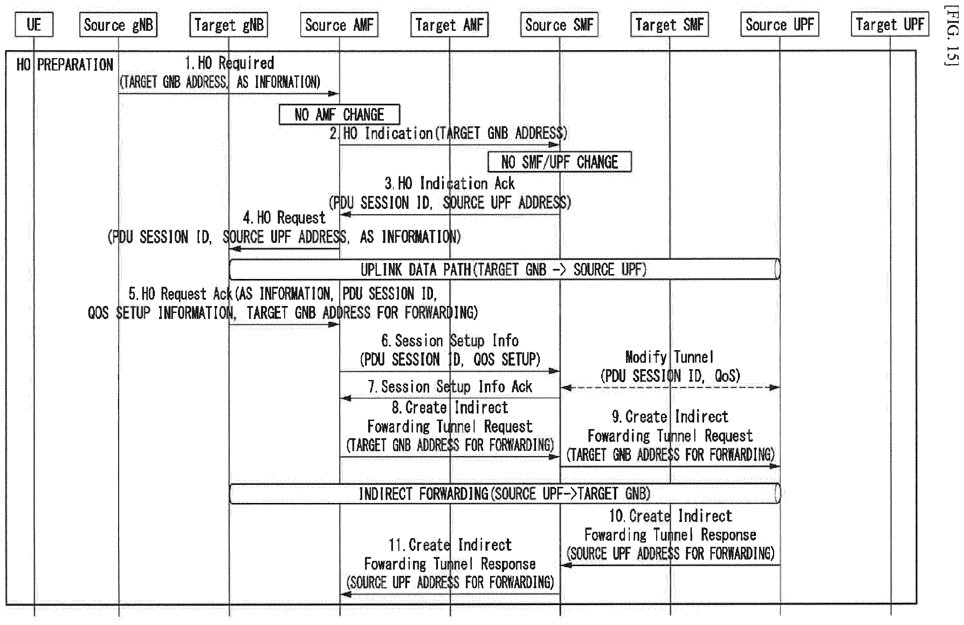

FIG. 15 illustrates a handover procedure according to an embodiment of the present invention.

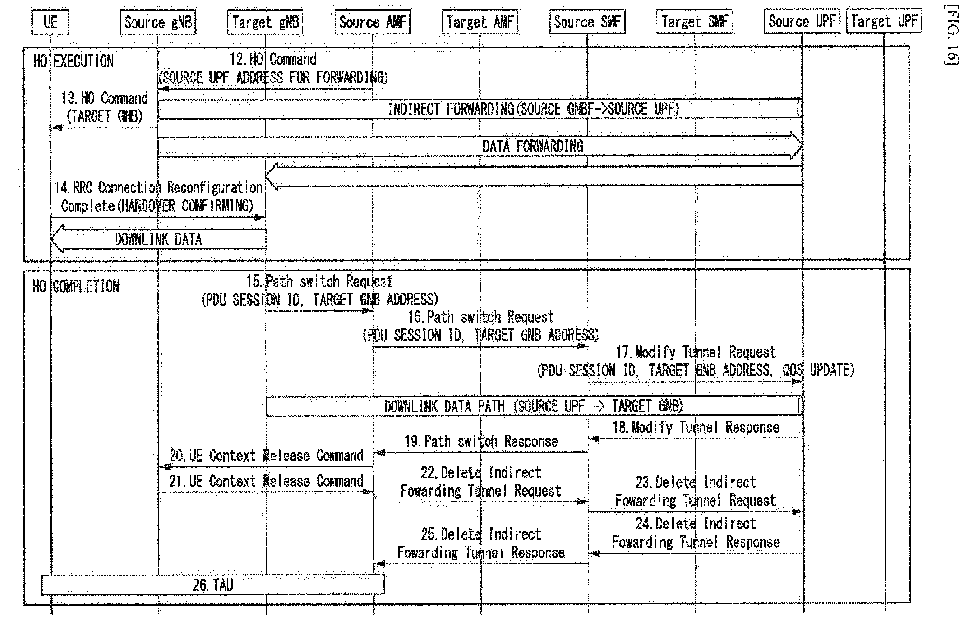

In FIG. 15, a handover preparation phase in a handover procedure in which the AMF/SMF/UPF is not changed is illustrated.
1. The source gNB sends a handover required message to the source AMF when it is determined that the handover is required based on the measurement report received from the UE.
   At this time, the handover required message includes an address and/or an identifier (ID) of a target gNB to which the UE is to move and UE AS context (i.e., AS information) of the corresponding UE in access stratum (AS).
2. After receiving the handover required message, the source AMF determines whether to change the AMF. This process may be determined by location information of the target gNB and an operator policy regarding selection of the AMF preset by an operator.
   In the embodiment according to FIG. 15, a case where the AMF need not be changed is assumed.
   Thereafter, the source AMF sends to the source SMF information (i.e., target gNB address) on the target eNB through a handover indication message to allow the SMF to update new SMF/UPF. This process needs to be transferred to all SMFs when there are multiple SMFs managing the session currently held by the UE and the information may be included in UE context information managed by the AMF.
3. The source SMF determines whether the SMF/UPF needs to be changed.
   In the embodiment according to FIG. 15, a case where the SMF/UPF need not be changed is assumed.
   The source SMF informs that the SMF need not be changed through a handover indication ack message. In addition, the message includes address information or identification information of the source UPF for each PDU session.
4. The source AMF sends to the gNB information on the session received from the source SMF, which is included in a handover request message.
   In this case, the UE AS context received from the source gNB is also included and sent to enable the AS context to be generated in advance in the gNB.
5. The target gNB updates the address and/or ID information of the UPF for each PDU session. Then, based on the UE AS context, while preparing to serve the UE, the target gNB may accept only some of the QoS and reject some of the QoS according to a situation of the target gNB.
   Thereafter, the target gNB sends to the AMF both information on which QoS is supported or which QoS is not supported through the handover ack message, and information on what resources are allocated in the AS. Then, the target gNB also sends to the AMF the target gNB address and/or ID information for delivery to be used for making an indirect tunnel for each PDU session.
6-7. The source AMF sends to the source SMF information on the QoS sent by the target gNB through a Session Setup Info message. The SMF receiving the information sends to the UPF QoS information updated through a Modify Tunnel message. Such a process may be performed together with steps 8 to 11. Alternatively, such a process may be performed together with steps 16 to 19 illustrated in FIG. 16 (handover execution and completion) below. Such as process needs to be delivered to all SMFs when there are multiple SMFs.
   The source SMF sends to the source AMF a Session Setup Info Ack message in response to the Session Setup Info message.
8. The source AMF creates an indirect tunnel (or an indirect forwarding tunnel) to forward the data already sent to the source gNB to the target gNB. To this end, the source AMF encapsulates and sends the target gNB address and / or identifier information received from the target gNB for forwarding while sending a Create Indirect Forwarding Tunnel Request message to the source SMF. Such a process needs to be performed in all of SMFs when there are multiple SMFs managing the session currently held by the UE.
9. The source SMF generates an indirect tunnel by sending the information received from the source AMF to the source UPF through the Create Indirect Forwarding Tunnel Request message. Such a process also needs to be performed multiple times over each UPF for each PDU session.
10. The Source UPF encapsulates the UPF address and/or ID information for forwarding to be used for the indirect tunnel in a Create Indirect Forwarding Tunnel Response message and sends the UPF address and/or ID information to the source SMF. Alternatively, the UPF may not send an UPF address and/or ID for forwarding, but may send the corresponding information when receiving a request from the source SMF.
11. The source SMF encapsulates the information received from the UPF in the Create Indirect Forwarding Tunnel Response message and sends to the source AMF the UPF address and/or ID for forwarding. Alternatively, when not receiving the UPF address and/or ID for forwarding from the UPF, the SMF may directly inquire address and ID information to be used for forwarding to the UPF and receive the address and ID information.
   FIG. 16 illustrates a handover procedure according to an embodiment of the present invention.
   In FIG. 16 handover execution and completion phases in the handover procedure in which the AMF/SMF/UPF is not changed are illustrated.
12. The source AMF encapsulates source UPF address and/or ID information for forwarding in a handover command message and hands over the source UPF address and/or ID information to the source gNB in order to create the indirect tunnel. After such a process ends, the source gNB starts to send packets of the UE held thereby to the target gNB by using a created forwarding tunnel (i.e., indirect tunnel).
13. When sending the handover command message to the UE, the source gNB encapsulates information regarding to which gNB/cell the current gNB/cell is changed and attached again (i.e., source cell detach and target cell synchronization) and sends the information.
14. The UE starts to receive from target gNB downlink data forwarded from the source gNB after setting up an RRC connection to a new gNB/cell (i.e., after sending an RRC Connection Reconfiguration Complete message).
15. After successfully setting up the RRC connection with the UE, the target gNB sends a path switch request message to the AMF. The message includes an address and/or ID to be used for each PDU session.
16. The AMF sends the path switch request message to the SMF. Such a process needs to be performed in all of the SMFs when there are multiple SMFs managing the session currently held by the UE.
17-18. The SMF sends a modify tunnel request message to the UPF in order to change a user plane path so that traffic is forwarded to the target gNB. Subsequent traffic is forwarded to not the source gNB but the target gNB. When the UPF is different for each PDU session, the same process needs to be performed for all of respective UPFs.
19. The SMF changes the user plane path and then, sends a path switch response message to the AMF. The AMF receives the path switch response message and then, starts a timer to prepare to release the context of the source gNB.
20-21. When the timer configured in step 19 expires, the AMF sends a UE context release request message to the source gNB. The source gNB receiving the UE context release request message deletes the UE context.
22-25. In order to delete the session context and the indirect tunnel prior to the handover, the AMF sends a Delete Indirect Forwarding Tunnel Request message to the SMF to delete the session and the indirect tunnel and completes the handover procedure. Such a process needs to be forwarded to all of the SMFs when there are multiple SMFs managing the session currently held by the UE.
26. When Tracking Area Update (TAU) is required, the UE is assigned a new Tracking Area (TA) by performing a TAU procedure.

Next, the handover procedure will be described in a scenario where not only the gNB but also the SMF and the UPF are all changed.

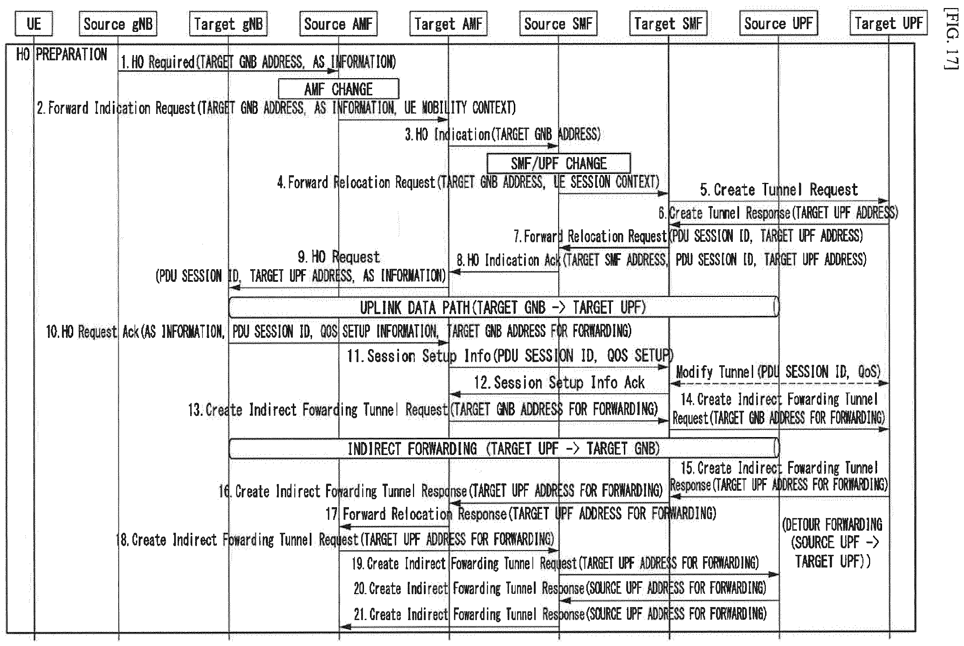

FIG. 17 illustrates a handover procedure according to an embodiment of the present invention.

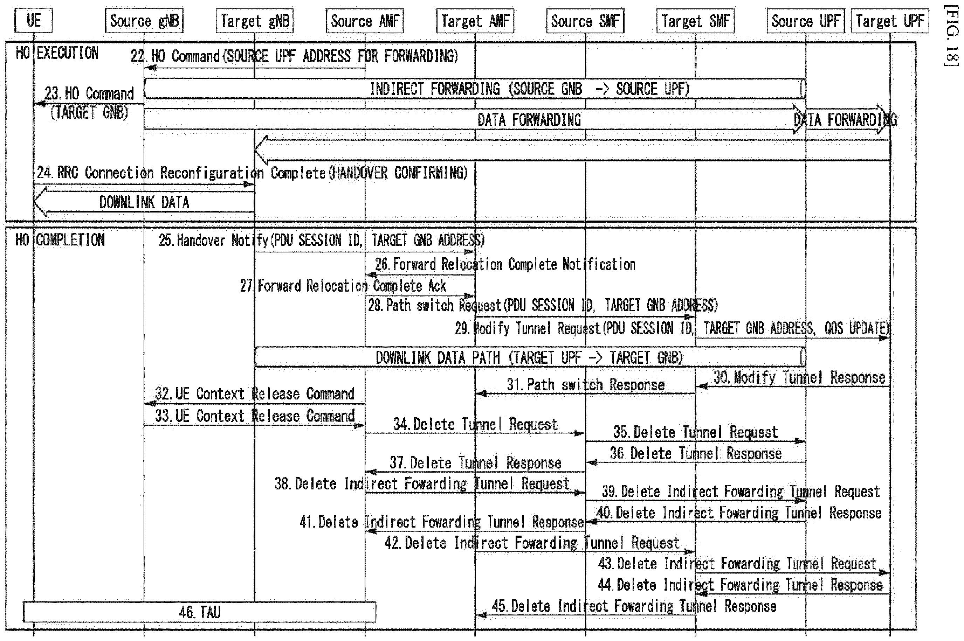

In FIG. 17, a handover preparation phase in the handover procedure in which the AMF/SMF/UPF is not changed is illustrated.
1. The source gNB sends a handover required message to the source AMF when it is determined that the handover is required based on the measurement report received from the UE.
   At this time, the handover required message includes an address and/or an identifier (ID) of a target gNB to which the UE is to move and UE AS context (i.e., AS information) of the corresponding UE in access stratum (AS).
2. After receiving the handover required message, the source AMF determines whether to change the AMF. This process may be determined by location information of the target gNB and an operator policy regarding selection of the AMF preset by an operator.
   In the embodiment according to FIG. 17, a case where the AMF need to be changed is assumed.
   The source AMF selects the target AMF and then, forwards a forward relocation request message to the target AMF.
   The forward relocation request message may include both the target gNB address and/or ID, AS information, and UE context information received from the source gNB.
3. The target AMF sends to the source SMF information (i.e., target gNB address) on the target gNB through the handover indication message to determine whether the SMF is to update new SMF/UPF. This process needs to be forwarded to all of the SMFs when there are multiple SMFs managing the session currently held by the UE and the information may be included in UE context information managed by the AMF.
4. The source SMF determines whether the SMF/UPF needs to be changed.
   In the embodiment according to FIG. 17, a case where the SMF need to be changed is assumed.
   In this case, the source SMF selects a new target SMF and sends the forward relocation request message.
   The forward relocation request message may include target gNB information and UE session contexts information.
5. The target SMF assigns a new UPF as necessary based on the session contexts information received from the source SMF and sends a create tunnel request message to each UPF in order to generate a new tunnel.
6. The target UPF creates a tunnel to be used for the PDU session according to the request of the target SMF and encapsulates the address used in the tunnel in the create tunnel response message and sends the address to the target SMF.
   Alternatively, when the target SMF directly manages all resources of the target UPF, the SMF may directly configure address information to be used in the tunnel and encapsulate the configured address information in the create tunnel request message and send the configured address information to the target UPF. In addition, the target UPF may create the tunnel by using the address of the target SMF as it is.
7. The target SMF encapsulates the target UPF address and/or ID information used for each PDU session in the forward relocation response message and sends the target UPF address and/or ID information to the source SMF.
8. The source SMF encapsulates the address and/or ID information for the target SMF and the UPF address and/or ID information for each PDU session received from the target SMF in the handover indication ack message and sends the information to the target AMF.
9. The target AMF encapsulates information on the session in the handover request message and sends the information to the gNB.
   In this case, the target AMF also encapsulates the UE AS context received from the source AMF in the handover request message and sends the UE AS context to create the AS context of the UE in advance.
10. The target gNB updates the address and/or ID information of the UPF for each PDU session. Then, based on the UE AS context, while preparing to serve the UE, the target gNB may accept only some of the QoS and reject some of the QoS according to the situation of the target gNB. Thereafter, the target gNB sends to the AMF both information on which QoS is supported or which QoS is not supported through the handover ack message, and information on what resources are allocated in the AS. Then, the target gNB also sends to the AMF the target gNB address and/or ID information for forwarding to be used for creating the indirect tunnel for each PDU session.
11-12. The target AMF encapsulates the information on the QoS received from the target gNB in the session setup info message and sends the information to the target SMF. The SMF receiving the sent information sends updated QoS information (i.e., PDU session ID and QoS) to the UPF. The target SMF sends to the target AMF the Session Setup Info Ack message in response to the Session Setup Info message.
   Alternatively, such a process may be performed together with steps 13 to 16 or steps 28 to 31 to be described in FIG. 18 (handover execution and completion). Such a process needs to be performed in all of the SMFs when there are multiple SMFs managing the session currently held by the UE.
13. The target AMF creates the indirect tunnel to forward the data already forwarded to the source gNB to the target gNB.
   To this end, the target AMF encapsulates target gNB address and/or ID information for forwarding, which is received from the target gNB in a create indirect tunnel request and sends the target gNB address and/or ID information to the target SMF.
   Such a process needs to be performed in all of the SMFs when there are multiple SMFs managing the session currently held by the UE.
14. The target SMF encapsulates the information received from the target AMF in a create indirect forwarding tunnel request message and sends the information to the target UPF to create the indirect tunnel. Such a process also needs to be performed multiple times over each UPF for each PDU session.
15. The target UPF encapsulates the target UPF address and/or ID information for forwarding to be used for the indirect tunnel in the Create Indirect Forwarding Tunnel Response message and sends the target UPF address and/or ID information to the target SMF.
   Alternatively, the UPF may not immediately send a target UPF address and/or ID for forwarding, but may send the corresponding information when the target SMF makes a request (operates like an Sx interface in CUPS).
16. The target SMF encapsulates the target address and/or ID information for forwarding in the create indirect forwarding tunnel response message based on the information received from the UPF and sends the target address and/or ID information to the target AMF.
   Alternatively, when not receiving the UPF address and/or ID for forwarding from the UPF, the SMF may directly inquire the address and/or ID information to be used for forwarding to the UPF and receive the address and/or ID information (operates like the Sx interface in the CUPS).
17. The target SMF encapsulates the UPF address and/or ID for forwarding, which is received from the target SMF in the forward relocation response message and sends the UPF address and/or ID to the source SMF.
18. The source AMF creates the indirect tunnel to forward the data already forwarded to the source gNB to the target gNB.
   To this end, the source AMF encapsulates the UPF address and/or ID information for forwarding, which is received from the target AFM in the create indirect forwarding tunnel request message and sends the UPF address and/or ID information to the source AMF. Such a process needs to be performed in all of the SMFs when there are multiple SMFs managing the session currently held by the UE.
19. The source SMF encapsulates the information received from the source AMF in the create indirect forwarding tunnel request message and sends the information to the source UPF to create the indirect tunnel. Such a process also needs to be performed multiple times over each UPF for each PDU session.
20. The source UPF encapsulates the target UPF address and/or ID information for forwarding to be used for the indirect tunnel in the Create Indirect Forwarding Tunnel Response message and sends the source UPF address and/or ID information to the target SMF.
   Alternatively, the UPF may not immediately send the target UPF address and/or ID for forwarding, but may send the UPF address and/or ID when the source SMF makes a request (operates like the Sx interface in the CUPS).
21. The source SMF encapsulates the source UPF address and/or ID information for forwarding in the create indirect forwarding tunnel response message based on the information received from the UPF and sends the source UPF address and/or ID to the source AMF.
   Alternatively, when not receiving the source UPF address and/or ID for forwarding from the UPF, the SMF may directly inquire the source UPF address and/or ID information to be used for forwarding to the UPF and receive the source UPF address and/or ID information (operates like the Sx interface in the CUPS).
   FIG. 18 illustrates a handover procedure according to an embodiment of the present invention.
   In FIG. 18, handover execution and completion phases in the handover procedure in which the AMF/SMF/UPF is changed are illustrated.
22. The source AMF encapsulates the source UPF address and/or ID information for forwarding in the handover command message and hands over the source UPF address and/or ID information to the source gNB in order to create the indirect tunnel.
   After such a process ends, the source gNB starts to forward packets of the UE held thereby to the target gNB by using a created forwarding tunnel (i.e., indirect tunnel).
23. When sending the handover command message to the UE, the source gNB encapsulates information regarding to which gNB/cell the current gNB/cell is changed and attached again (i.e., source cell detach and target cell synchronization) and sends the information.
24. The UE starts to receive from target gNB downlink data forwarded from the source gNB after setting up an RRC connection to a new gNB/cell (i.e., after sending an RRC Connection Reconfiguration Complete message).
25. After successfully setting up the RRC connection with the UE, the target gNB sends a handover notify message to the target AMF.
   The handover notify message includes address and/or ID information to be used for each PDU session.
26. The target AMF sends a forward relocation complete notification message to the source AMF.
27. The source AMF receiving the forward relocation complete notification message determines that the handover is successful and starts a timer for clear the context of the UE. Then, the source AMF sends a forward relocation complete ack message to the target AMF.
28. The target AMF sends a path switch request message to the SMF in order to change an actual downlink data path. The path switch request message includes the address and/or ID information for each PDU session received from the target gNB. Such a process needs to be performed in all of the SMFs when there are multiple SMFs managing the session currently held by the UE.
29. In order to change a downlink path of the PDU session for each UPF, the target SMF encapsulates the PDU session ID, the target gNB address and/or ID information, the QoS information, and the IP address and/or the ID of the anchor UPF in the modify tunnel request message and sends to the target UPF the PDU session ID, the target gNB address and/or ID information, the QoS information, and the IP address and/or the ID of the anchor UPF. When the UPF is different for each PDU session, the same process needs to be performed for all of respective UPFs.
30. The UPF receiving the modify tunnel request message sends to an IP anchor UPF the modify tunnel request message for changing the downlink data path and receives a response thereto to change the downlink data path. Then, the UPF sends the modify tunnel response message to the target SMF to notify that the tunnel is successfully changed.
31. The target SMF sends the path switch response message to the target AMF.
32-33. When the timer configured in step 27 expires, the source AMF sends the UE context release request message to the source gNB. The source GNB receiving the UE context release request message deletes the UE context.
34-37. The source AMF sends the delete tunnel request message to the source SMF in order to delete the previous session. The source SMF sends the delete tunnel request message to the source UPF in order to delete the tunnel for the previous session.
   The source UPF sends the delete tunnel response message in response to the delete tunnel request message and the source SMF sends the delete tunnel response message to the source AMF in response to the delete tunnel request message.
38-41. The source AMF sends the delete indirect forwarding tunnel request message to the source SMF in order to delete the indirect tunnel and the source SMF receiving the delete indirect forwarding tunnel request message sends the delete indirect forwarding tunnel request message to the source UPF.
   The source UPF deletes the indirect tunnel and sends to the source SMF the delete indirect forwarding tunnel response message in response to the delete indirect forwarding tunnel request message and the source SMF receiving the delete indirect forwarding tunnel response message sends to the source AMF the delete indirect forwarding tunnel response message in response to the delete indirect forwarding tunnel request message.
42-45. The target AMF sends the delete indirect forwarding tunnel request message to the target SMF in order to delete the indirect tunnel and the target SMF receiving the delete indirect forwarding tunnel request message sends the delete indirect forwarding tunnel request message to the target UPF.
   The target UPF deletes the indirect tunnel and sends to the target SMF the delete indirect forwarding tunnel response message in response to the delete indirect forwarding tunnel request message and the target SMF receiving the delete indirect forwarding tunnel response message sends to the target AMF the delete indirect forwarding tunnel response message in response to the delete indirect forwarding tunnel request message.
   Such a process is terminated, and as a result, the handover procedure is completed.
46. When the TAU is required, the UE is assigned a new tracking area by performing the TAU procedure.

### - SMF selecting method

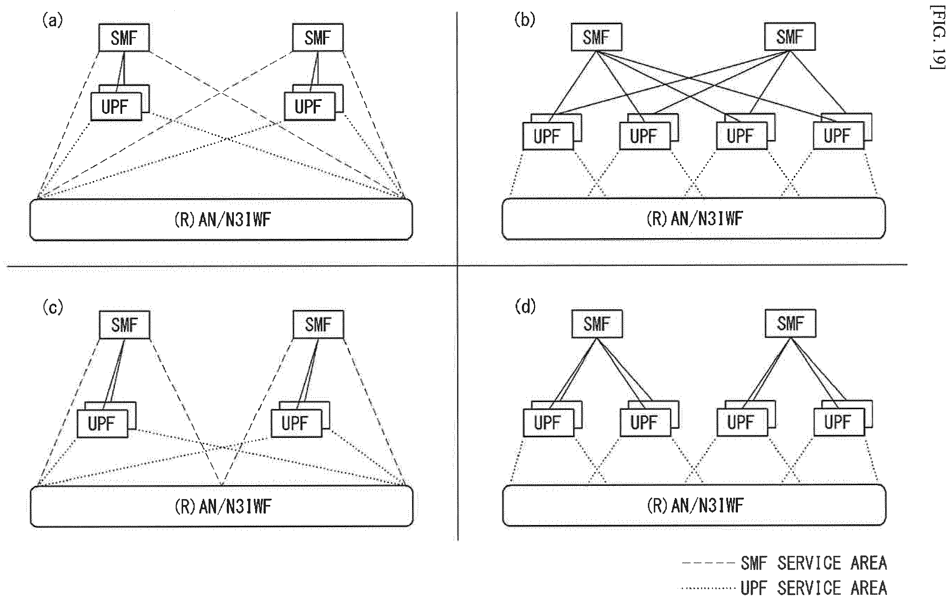

FIG. 19 is a diagram illustrating a network entity layout scenario in a wireless communication system to which the present invention may be applied.

According to the scenario illustrated in FIGS. 19A and 19B, each SMF may serve the entire PLMN. That is, the SMF may interact with UPF(s) covering the entire PLMN. There are two following examples in this scenario.

According to FIG. 19A, the SMF may be connected to the UPF(s) serving the entire PLMN.

According to FIG. 19B, the SMF may be connected to multiple UPFs. In this case, each UPF may serve only some subsets of the PLMN and multiple UPFs may serve the entire PLMN together. By selecting the UPF based on a UE location, the SMF may serve the entire PLMN.

That is, when the UPF does not serve the entire PLMN, the UPF need not be changed and a UPF service area may be defined as an area where the UE may be served by the (R)AN. In this case, the UPF service area may include one or more tracking areas.

According to the scenario illustrated in FIGS. 19C and 19D, each SMF may serve only some subsets of the PLMN. There are two following examples in this scenario.

According to FIG. 19C, the SMF may be connected to the UPFs that serve the entire PLMN, but for specific reasons, the SMF may be limited in serving the entire PLMN.

According to FIG. 19D, the SMF may be connected to the UPF(s). In this case, each UPF may serve only some subsets of the PLMN and multiple UPFs may serve the entire PLMN together.

In the scenario illustrated in FIG. 19D, since each SMF is connected to the UPF(s) covering the subset of the PLMN, a procedure for adding a new (or intermediate) SMF and/or UPF is required in a case where the UE moves out of SMF coverage.

That is, when the SMF does not serve the entire PLMN, the SMF need not be changed and an SMF service area may be defined as an area where the UE may be served. In this case, the SMF service area may include a union of UPF service area(s) of the UPF(s) which may be controlled by the SMF.

In the embodiment according to FIGS. 17 and 18 above, a procedure is proposed, in which when the SMF is changed while performing the handover, the source SMF selects the target SMF and the source SMF directly forwards the message to the target SMF.

However, like the scenario illustrated in FIG. 19D above, when the source SMF and the target SMF have no direct interface (e.g., when the source SMF and the target SMF are in different slices, etc.), the source SMF needs to forward information through the AMF, and as a result, the procedure in which the source SMF selects the target SMF and the source SMF directly forwards the message to the target SMF.

Accordingly, instead of the procedure in which the source SMF selects the target SMF and directly forwards the message, some following other methods may be used.

Methods proposed below may be implemented in combination with the embodiment according to FIGS. 17 and 18 above.

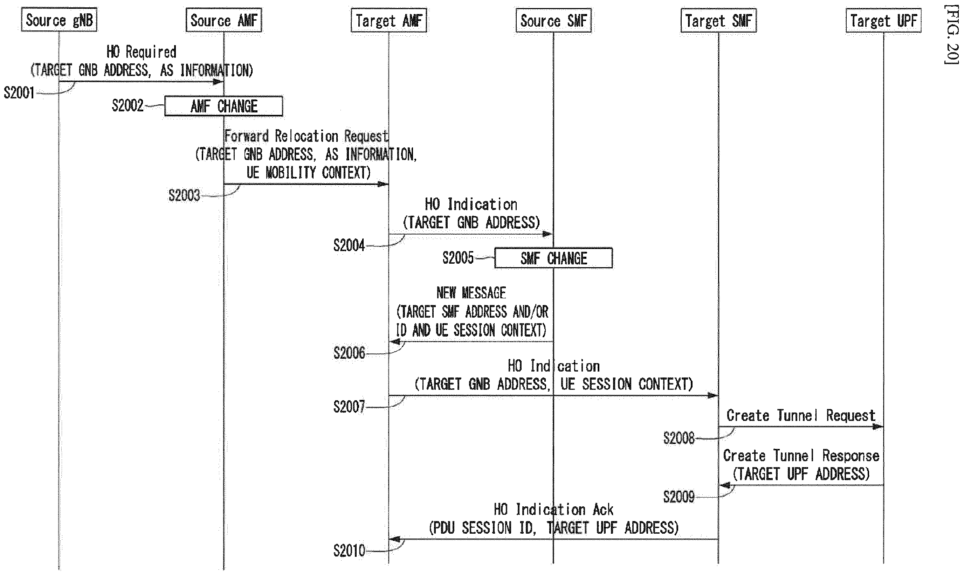

FIG. 20 is a diagram illustrating a method for selecting an SMF during a handover procedure according to an embodiment of the present invention.

Referring to FIG. 20, the source gNB sends a handover required message to the source AMF when it is determined that the handover is required based on the measurement report received from the UE (S2001).

At this time, the handover required message includes an address and/or an identifier (ID) of a target gNB to which the UE is to move and UE AS context (i.e., AS information) of the corresponding UE in access stratum (AS).

After receiving the handover required message, the source AMF determines whether to change the AMF (S2002). This process may be determined by location information of the target gNB and an operator policy regarding selection of the AMF preset by an operator.

In the embodiment according to FIG. 20, a case where the AMF need to be changed is assumed.

The source AMF selects the target AMF and then, forwards a forward relocation request message to the target AMF (S2003).

The forward relocation request message may include both the target gNB address and/or ID, AS information, and UE context information received from the source gNB.

The target AMF sends to the source SMF information (i.e., target gNB address) on the target gNB through the handover indication message (S2004).

This process needs to be forwarded to all of the SMFs when there are multiple SMFs managing the session currently held by the UE and the information may be included in UE context information managed by the AMF.

When the source SMF determines that SMF reselection is required (e.g., a case where the UE deviates from an area served by the source SMF, a case for reducing a load burden of a specific SMF among SMFs capable of serving the UE at present, etc.), the source SMF directly selects the target SMF (S2005).

The source SMF sends to the target AMF address and/or ID information of the selected target SMF and UE session contexts through a newly defined message (S2006).

The target AMF receiving the address and/or ID information of the selected target SMF and the UE session contexts sends the handover indication message to the target SMF selected by the source SMF (S2007).

In this case, the handover indication message may include the target gNB address and/or UE session contexts.

The target SMF assigns a new UPF as necessary based on the session contexts information received from the target AMF and sends to each UPF a create tunnel request message for creating a new tunnel (S2008).

The target UPF creates a tunnel to be used for the PDU session according to the request of the target SMF and encapsulates the address used in the tunnel in the create tunnel response message and sends the address to the target SMF (S2009).

The target SMF may encapsulate the target UPF address and/or ID information used for each PDU session in the handover (HO) Indication Ack message and send the target UPF address and/or ID information to the target AMF (S2010).

Thereafter, the same process may be performed from step 9 of FIG. 17 above.

The method according to FIG. 20 may be used in a case where a direct interaction between the source SMF and the target SMF is difficult or is not effective like a case where the source SMF and the target SMF belong to different slices, and as a result, context exchange is impossible between the slices.

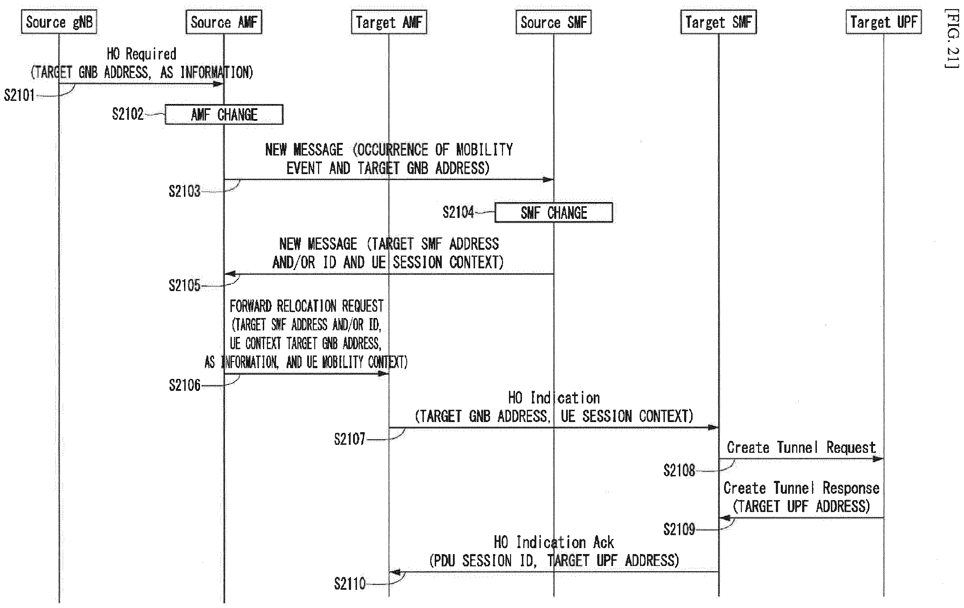

FIG. 21 is a diagram illustrating a method for selecting an SMF during a handover procedure according to an embodiment of the present invention.

Referring to FIG. 21, the source gNB sends a handover required message to the source AMF when it is determined that the handover is required based on the measurement report received from the UE (S2101).

At this time, the handover required message includes an address and/or an identifier (ID) of a target gNB to which the UE is to move and UE AS context (i.e., AS information) of the corresponding UE in access stratum (AS).

After receiving the handover required message, the source AMF determines whether to change the AMF (S2102). This process may be determined by location information of the target gNB and an operator policy regarding selection of the AMF preset by an operator.

In the embodiment according to FIG. 21, a case where the AMF need to be changed is assumed.

The source AMF sends to the source SMF a mobility event occurrence notification and a target gNB address of the UE through a newly defined message (S2103).

That is, like step 2 of FIG. 17 above, before the source AMF sends the forward relocation request message to the target AMF, the source AMF may notify to the source AMF that a mobility event occurs.

When the source SMF receiving the notification determines that SMF reselection is required (e.g., a case where the UE deviates from an area served by the source SMF in the PLMN, a case for reducing a load burden of a specific SMF among SMFs capable of serving the UE at present, etc.), the source SMF may directly select the target SMF (S2104).

Then, the source SMF sends to the source AMF the address and/or ID information of the selected target SMF and the UE session contexts through a newly defined message (S2105).

The source AMF receiving the address and/or ID information of the selected target SMF and the UE session contexts encapsulates the address and/or ID of the selected target SMF and the UE session contexts in the forward relocation request message and sends the address and/or ID of the selected target SMF and the UE session contexts to the target AMF (S2106).

The target AMF receiving the address and/or ID of the selected target SMF and the UE session contexts sends the handover indication message to the target SMF selected by the source SMF (S2107).

In this case, the handover indication message may include the target gNB address and/or UE session contexts.

The target SMF assigns a new UPF as necessary based on the session contexts information received from the target AMF and sends to each UPF a create tunnel request message for creating a new tunnel (S2108).

The target UPF creates a tunnel to be used for the PDU session according to the request of the target SMF and encapsulates the address used in the tunnel in the create tunnel response message and sends the address to the target SMF (S2109).

The target SMF may encapsulate the target UPF address and/or ID information used for each PDU session in the handover (HO) Indication Ack message and send the target UPF address and/or ID information to the target AMF (S2110).

Thereafter, the same process may be performed from step 9 of FIG. 17 above.

This method may be used in a case where the direct interaction between the source AMF and the source SMF is difficult or is not effective like a case where there is no interface between the target AMF and the source SMF.

Meanwhile, in FIG. 21, a process in which the source SMF sends the target SMF address and/or ID and the UE session context to the source AMF and the source AMF receiving the target SMF address and/or ID and the UE session context to the target AMF is illustrated, but the present invention is not limited thereto. As an example, the source SMF may directly send the target SMF address and/or ID and the UE session context to the target AMF. In this case, the source AMF may encapsulate only the target gNB address, the AS information, and/or a UE mobility context in the Forward Relocation Request message sent to the target AMF and send the target gNB address, the AS information, and/or the UE mobility context.

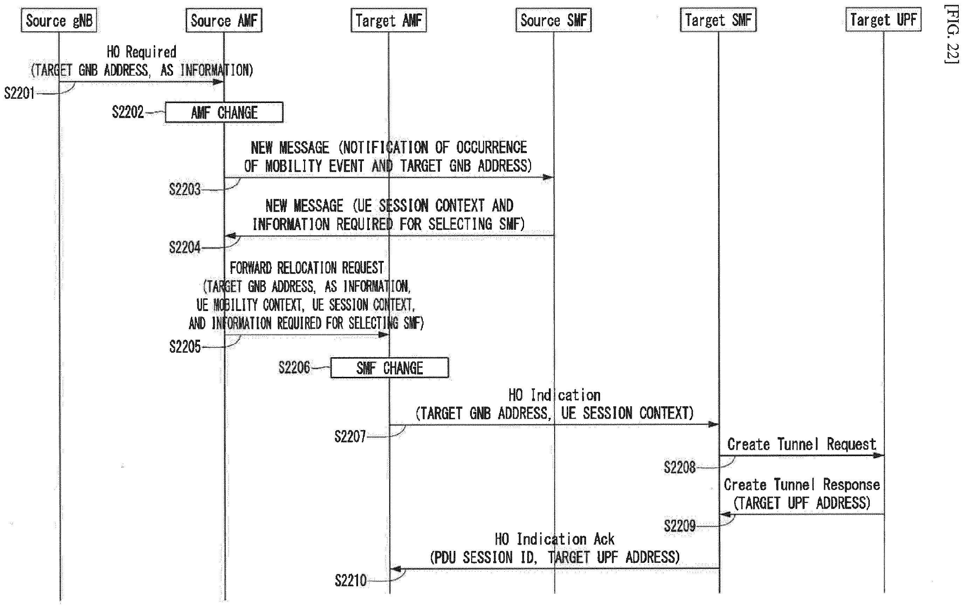

FIG. 22 is a diagram illustrating a method for selecting an SMF during a handover procedure according to an embodiment of the present invention.

Referring to FIG. 22, the source gNB sends a handover required message to the source AMF when it is determined that the handover is required based on the measurement report received from the UE (S2201).

At this time, the handover required message includes an address and/or an identifier (ID) of a target gNB to which the UE is to move and UE AS context (i.e., AS information) of the corresponding UE in access stratum (AS).

After receiving the handover required message, the source AMF determines whether to change the AMF (S2202). This process may be determined by location information of the target gNB and an operator policy regarding selection of the AMF preset by an operator.

In the embodiment according to FIG. 22, a case where the AMF need to be changed is assumed.

The source AMF sends to the source SMF a mobility event occurrence notification and/or a target gNB address of the UE through a newly defined message (S2203).

That is, like step 2 of FIG. 17 above, before the source AMF sends the forward relocation request message to the target AMF, the source AMF may notify to the source AMF that a mobility event of the UE occurs.

The source SMF may determines that SMF reselection is required based on the mobility event occurrence notification and/or the target gNB address of the UE (e.g., a case where the UE deviates from an area served by the source SMF, a case for reducing a load burden of a specific SMF among SMFs capable of serving the UE at present, etc.). In this case, UE session contexts and/or information (for example, at least one information of a data network name (DNN), a single network slice selection assistance information (S-NSSAI) (e.g., slice information), and subscription information) required for SMF selection may be sent to the source AMF (S2204).

The source AMF may encapsulate the UE session contexts and the information required for the SMF selection in the forward relocation request message and send the UE session context and the information required for the SMF selection to the target AMF (S2205).

Further, the forward relocation request message may include both the target gNB address and/or ID, AS information, and UE context information received from the source gNB.

The target AMF selects the target SMF (S2206).

That is, when the source SMF receiving the message from the source AMF determines that the SMF needs to be changed in step S2203 above, information required for new SMF selection is returned in step S2204, and as a result, when the target AMF receives the information through the source AMF, the target AMF may recognize that the new SMF selection is required. Accordingly, the target AMF may select the target SMF based on the location of the UE.

The target AMF sends the handover indication message to the selected target SMF (S2207).

In this case, the handover indication message may include the target gNB address and/or UE session contexts.

The target SMF assigns a new UPF as necessary based on the session contexts information received from the target AMF and sends to each UPF a create tunnel request message for creating a new tunnel (S2208).

The target UPF creates a tunnel to be used for the PDU session according to the request of the target SMF and encapsulates the address used in the tunnel in the create tunnel response message and sends the address to the target SMF (S2209).

The target SMF may encapsulate the target UPF address and/or ID information used for each PDU session in the handover (HO) Indication Ack message and send the target UPF address and/or ID information to the target AMF (S2210).

Thereafter, the same process may be performed from step 9 of FIG. 17 above.

This method may be used in a case where selecting the SMF in the AMF is more effective in terms of implementation of the network or efficiency of network resources like a case where an SMF selecting function is implemented only in the AMF.

Meanwhile, in FIG. 22, a process in which the source SMF sends the UE session context and/or the information required for the SMF selection to the source AMF and the source AMF receiving the UE session context and/or the information required for the SMF selection to the target AMF is illustrated, but the present invention is not limited thereto. As an example, the source SMF may directly send the UE session context and/or the information required for the SMF selection to the target AMF. In this case, the source AMF may encapsulate only the target gNB address, the AS information, and/or a UE mobility context in the Forward Relocation Request message sent to the target AMF and send the target gNB address, the AS information, and/or the UE mobility context.

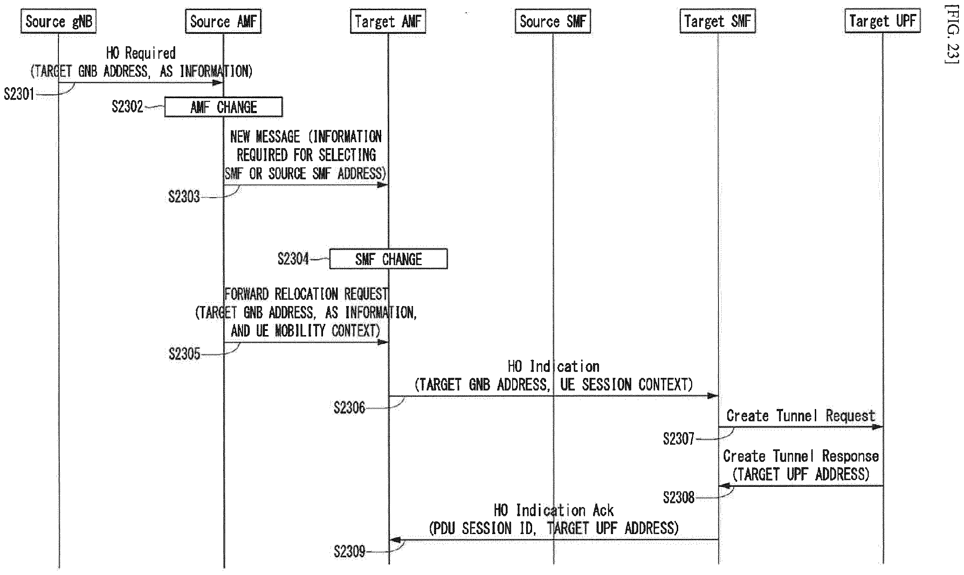

FIG. 23 is a diagram illustrating a method for selecting an SMF during a handover procedure according to an embodiment of the present invention.

Referring to FIG. 23, the source gNB sends a handover required message to the source AMF when it is determined that the handover is required based on the measurement report received from the UE (S2301).

At this time, the handover required message includes an address and/or an identifier (ID) of a target gNB to which the UE is to move and UE AS context (i.e., AS information) of the corresponding UE in access stratum (AS).

After receiving the handover required message, the source AMF determines whether to change the AMF (S2302). This process may be determined by location information of the target gNB and an operator policy regarding selection of the AMF preset by an operator.

In the embodiment according to FIG. 23, a case where the AMF need to be changed is assumed.

The source AMF may select the target AMF and then, send to the target AMF the information (for example, at least one information of a data network name (DNN), a single network slice selection assistance information (S-NSSAI) (e.g., slice information), and subscription information) required for the SMF selection through a newly defined message (S2303).

That is, since the target AMF does not have the information required for selecting the target SMF, the source AMF may send the information before sending the forward relocation request to the target AMF.

When the target AMF determines that SMF reselection is required (e.g., a case where the UE deviates from an area served by the source SMF, a case for reducing a load burden of a specific SMF among SMFs capable of serving the UE at present, etc.), the target AMF directly selects the target SMF (S2304).

Alternatively, in step S2303 above, the source AMF may send to the target AMF address information of the source SMF as the information required for the SMF selection (e.g., a case where the SMF which belongs to the same slice is selected, etc.). In this case, the target AMF may select the SMF based on the address information of the source SMF received from the source AMF.

The source AMF forwards the forward relocation request message to the target AMF (S2305).

The forward relocation request message may include both the target gNB address and/or ID, AS information, and UE context information received from the source gNB.

The target AMF sends the handover indication message to the selected target SMF (S2306).

In this case, the handover indication message may include the target gNB address and/or UE session contexts.

The target SMF assigns a new UPF as necessary based on the session contexts information received from the target AMF and sends to each UPF a create tunnel request message for creating a new tunnel (S2307).

The target UPF creates a tunnel to be used for the PDU session according to the request of the target SMF and encapsulates the address used in the tunnel in the create tunnel response message and sends the address to the target SMF (S2308).

The target SMF may encapsulate the target UPF address and/or ID information used for each PDU session in the handover (HO) Indication Ack message and send the target UPF address and/or ID information to the target AMF (S2309).

Thereafter, the same process may be performed from step 9 of FIG. 17 above.

### - Light handover

Meanwhile, in the handover procedure proposed in FIGS. 15 to 18 above, it is assumed that the handover for all PDU sessions is performed.

However, in NextGen, a case where all PDU sessions are not handed over is also considered. For example, in a case where the PDU session is deactivated (see session management for each PDU session), when the handover is performed even with respect to the PDU session, even though the handover is not used for sending data, unnecessary many signalings are generated.

Accordingly, the deactivated PDU session is not processed during the handover, thereby reducing the unnecessary signaling.

Further, in the case of a PDU session in which SSC mode 2 is configured, when the UE deviates from a specific area, an IP anchor of the PDU session needs to be changed. In this case, in order to change the IP anchor again after performing the handover procedure proposed in FIGS. 15 to 18 above, a process of releasing the PDU session and then, setting up the released PDU session needs to be performed. Consequently, in this case, since even the PDU session which needs to be released is handed over after the handover is performed, the network needs to perform an unnecessary operation.

Accordingly, in order to solve such a problem, a procedure for effectively performing the handover is proposed as follows.

First, a light handover procedure in a scenario in which only the gNB is changed and the AMF, the SMF, and the UPF are not changed is described.

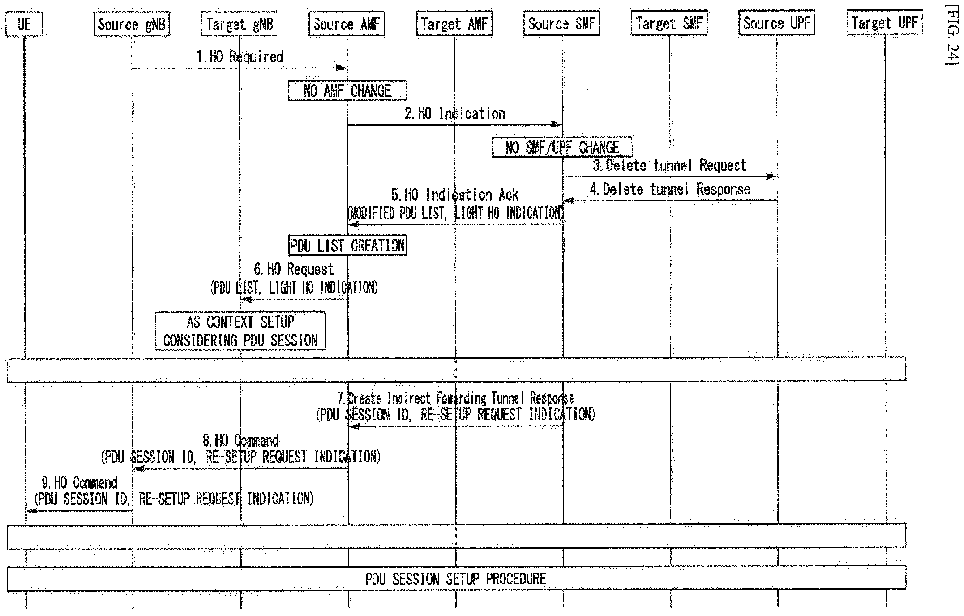

FIG. 24 illustrates a handover procedure according to an embodiment of the present invention.

In the case of the handover procedure illustrated in FIG. 24, only some (in particular, a part having a difference) among the handover procedures illustrated in FIGS. 15 and 16 are illustrated and an overall procedure may follow FIGS. 15 and 16 above.
2. The AMF may perform the handover even though there is no PDU session for the corresponding UE (for example, a case where attach only UE is in connected mode, etc.).
   In this case, when there is no PDU session for the corresponding UE, a process for updating the session in steps 2 to 5 is not performed.
3-4. When the source SMF receives the handover indication message from the source AMF, the source SMF may determine PDU sessions which need not be handed over. In addition, a procedure of releasing a PDU tunnel of PDU sessions which need not be handed over may be performed.
   For example, PDU sessions which SSC mode 2 may support and which are in a deactivation state may not perform tunnel releasing. Even though a PDU tunnel releasing procedure is performed, the SMF needs to make the session again, a context for making the session again may be maintained and only the PDU tunnel may be deleted.
5. The source SMF sends the handover indication ack message to the source AMF in response to the handover indication message.

In this case, the handover indication ack message may not include information on an entire PDU list (i.e., entire PDU session list) originally held by the source SMF, but may include a modified PDU list (i.e., modified PDU session list).

Here, the modified PDU list may include only information on PDUs (i.e., PDU sessions to be handed over) which the source SMF hands over.

When all PDU sessions held by the source SMF are sessions which need not be handed over, the source SMF may send the PDU list in an empty state.

Therefore, in order for the source AMF to continuously perform the handover for the SMF even though there is no PDU session to be handed over, a light handover indication to continuously perform the handover may be included in the handover indication ack message and sent.

This indication may be included only when the PDU list is in the empty state or continuously included when the PDU list is changed.
6. The source AMF creates a PDU list to be forwarded to the target gNB based on PDU lists received from respective SMFs. In addition, the source AMF sends to the target gNB the handover request message including the PDU list (i.e., PDU session to be handed over) and the light handover indication.
   Instead of generating all AS contexts, the target gNB that receives the handover request message creates only the AS context that matches in the received PDU list and may not create the AS context used in the PDU session released by the SMF.
   Even when the modified PDU list sent by the source SMF in the previous step 5 is in the empty state, the target gNB does not perform abnormal handling or error handling, but creates only a basic context (e.g., a temporary identifier (ID) (e.g., SAE-Temporary Mobile Subscriber Identity (S-TMSI), a security context, etc.) of the UE) except for the context regarding the session.
   Further, the target RAN (i.e., target gNB) may then recognize that PDU session re-establishment is required and secure radio resources in advance.
7-8. If necessary (e.g., if the PDU re-establishment is required like the PDU session which is in SSC mode 2), the source SMF sends to the source AMF an indication (i.e., re-establishment/re-setup request indication) forwarded to the UE through the create indirect forwarding tunnel response message to re-establish the PDU session released during the handover. In this case, when there are multiple PDU sessions, the indication (i.e., re-establishment/re-setup request indication) needs to be forwarded for each PDU session.

That is, the create indirect forwarding tunnel response message may include a PDU session ID and the re-establishment (or re-setup) request indication for each PDU session released during the handover.

The re-establishment (or re-setup) request indication may be sent to the UE through NAS signaling or sent to the UE through RRC signaling by the AMF.

The source AMF that receives the create indirect forwarding tunnel response message sends the HO command message to the source gNB.

In this case, the HO command message may include the PDU session ID and the re-establishment (or re-setup) request indication for each PDU session released during the handover.

Further, the source AMF encapsulates the light handover indication in the HO command message to prevent the handover procedure from being stopped the source RAN (i.e., source gNB). The reason is that since the source RAN does not know that the PDN session is released by the core network or the target RAN, the handover may be stopped by sending a handover cancel message. Accordingly, in order to prevent the stop of the handover, the light handover indication that means that the PDN session is released by the core network is encapsulated in the HO command message to assist the source RAN to perform an accurate determination.
9. The source gNB sends the HO command message to the UE.
   In this case, the HO command message may include the PDU session ID and the re-establishment (or re-setup) request indication for each PDU session released during the handover.
   When the re-establishment (or re-setup) request indication for the PDU session is forwarded to the UE through the AS signaling, the AS layer of the UE needs to forward an indication that the PDU session needs to be re-established to the NAS layer for each PDU session.
10. The UE that receives the re-establishment (or re-setup) request indication from the source gNB performs a PDU session re-establishment procedure after the handover phase ends.

During this process, the UE encapsulates the PDU session ID and the re-establishment (or re-setup) request message indicated by the SMF in the create PDU session request message and sends the PDU session ID and the re-establishment (or re-setup) request message to allow the SMF to recognize that the corresponding procedure is for re-establishment.

Next, the light handover procedure will be described in a scenario where not only the gNB but also the SMF and the UPF are all changed.

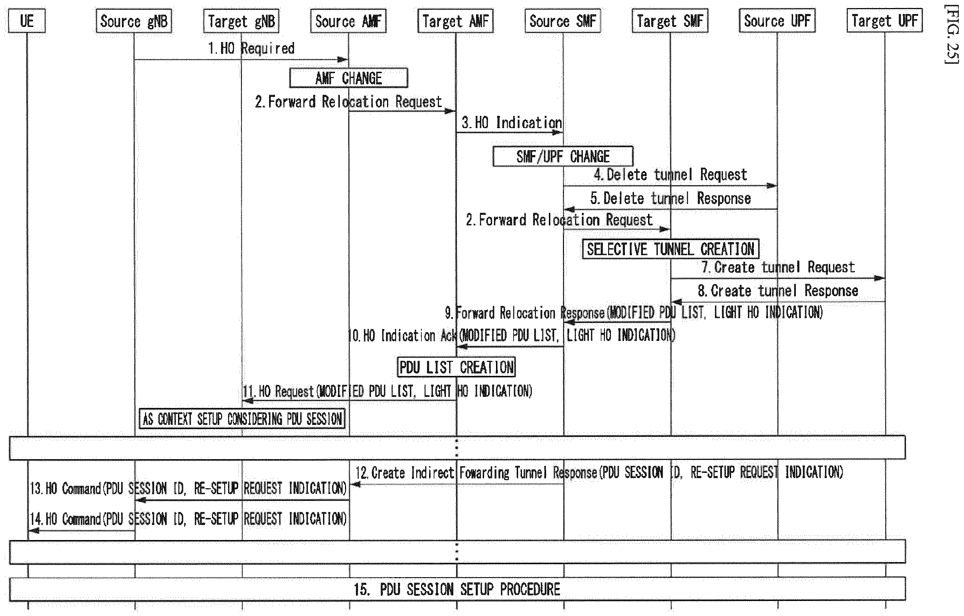

FIG. 25 illustrates a handover procedure according to an embodiment of the present invention.

In the case of the handover procedure illustrated in FIG. 25, only some (in particular, a part having a difference) among the handover procedures illustrated in FIGS. 17 and 18 are illustrated and an overall procedure may follow FIGS. 17 and 18 above.
2. The AMF may perform the handover even though there is no PDU session for the corresponding UE (for example, a case where attach only UE is in connected mode, etc.).
   In this case, when there is no PDU session for the corresponding UE, a process for updating the session in steps 3 to 8 is not performed.
4-5. When the source SMF receives the handover indication message from the source AMF, the source SMF may determine PDU sessions which need not be handed over. In addition, a procedure of releasing a PDU tunnel of PDU sessions which need not be handed over may be performed.
   For example, PDU sessions which SSC mode 2 may support and which are in a deactivation state may not perform tunnel releasing. Even though a PDU tunnel releasing procedure is performed, the SMF needs to make the session again, a context for making the session again may be maintained and only the PDU tunnel may be deleted.
6. The source SMF encapsulates the UE session contexts in the forward relocation request message and sends the UE session contexts to the target SMF and in this case, the source SMF also needs to send the session contexts of the PDU releasing the PDU tunnel again. This is to allow the target SMF to send the re-establishment indication to the UE.
7-8. The target SMF creates a tunnel only for required PDU sessions based on the UE session contexts (e.g., the PDU session in SSC mode 2 should not create the tunnel). In all of the deactivated PDU sessions, the tunnel is normally created, but an indication that the PDU sessions are deactivated is encapsulated in the create tunnel request message and sent to allow only the PDU session context to be created and an actual tunnel resource not to be assigned.
9-10. The target SMF sends to the source SMF the forward relocation response message in response to the forward relocation request message.

Further, the source SMF sends the handover indication ack message to the target AMF in response to the handover indication message.

In this case, the forward relocation response message and the handover indication ack message may not include information on an entire PDU list (i.e., entire PDU session list) originally held by the source SMF, but may include a modified PDU list (i.e., modified PDU session list).

Here, the modified PDU list may include only information on PDUs (i.e., PDU sessions to be handed over) which the source SMF hands over.

When all PDU sessions held by the source SMF are sessions which need not be handed over, the PDU list may be in the empty state.

Therefore, in order for the target AMF to continuously perform the handover for the SMF even though there is no PDU session to be handed over, the light handover indication to continuously perform the handover may be included in the handover indication ack message and sent.

This indication may be included only when the PDU list is in the empty state or continuously included when the PDU list is changed.

11. The target AMF creates a PDU list to be forwarded to the target gNB based on PDU lists received from respective SMFs. In addition, the target AMF sends to the target gNB the handover request message including the PDU list (i.e., PDU session to be handed over) and the light handover indication.

Instead of generating all AS contexts, the target gNB that receives the handover request message creates only the AS context that matches in the received PDU list and may not create the AS context used in the PDU session released by the SMF.

Even when the modified PDU list sent by the target SMF in the previous step 9 is in the empty state, the target gNB does not perform abnormal handling or error handling, but creates only a basic context (e.g., a temporary identifier (ID) (e.g., SAE-Temporary Mobile Subscriber Identity (S-TMSI), a security context, etc.) of the UE) except for the context regarding the session.

Further, the target RAN (i.e., target gNB) may then recognize that PDU session re-establishment is required and secure radio resources in advance.

12-13. If necessary (e.g., if the PDU re-establishment is required like the PDU session which is in SSC mode 2), the source SMF sends to the source AMF an indication (i.e., re-establishment/re-setup request indication) forwarded to the UE through the create indirect forwarding tunnel response message to re-establish the PDU session released during the handover. In this case, when there are multiple PDU sessions, the indication (i.e., re-establishment/re-setup request indication) needs to be forwarded for each PDU session.

That is, the create indirect forwarding tunnel response message may include a PDU session ID and the re-establishment (or re-setup) request indication for each released PDU session during the handover.

The re-establishment (or re-setup) request indication may be sent to the UE through NAS signaling or sent to the UE through RRC signaling by the AMF.

The source AMF that receives the create indirect forwarding tunnel response message sends the HO command message to the source gNB.

In this case, the HO command message may include the PDU session ID and the re-establishment (or re-setup) request indication for each PDU session released during the handover.

Further, the source AMF encapsulates the light handover indication in the HO command message to prevent the handover procedure from being stopped the source RAN (i.e., source gNB). The reason is that since the source RAN does not know that the PDN session is released by the core network or the target RAN, the handover may be stopped by sending a handover cancel message. Accordingly, in order to prevent the stop of the handover, the light handover indication that means that the PDN session is released by the core network is encapsulated in the HO command message to assist the source RAN to perform an accurate determination.
14. The source gNB sends the HO command message to the UE.
   In this case, the HO command message may include the PDU session ID and the re-establishment (or re-setup) request indication for each PDU session released during the handover.
   When the re-establishment (or re-setup) request indication for the PDU session is forwarded to the UE through the AS signaling, the AS layer of the UE needs to forward an indication that the PDU session needs to be re-established to the NAS layer for each PDU session.
15. The UE that receives the re-establishment (or re-setup) request indication from the source gNB performs a PDU session re-establishment procedure after the handover phase ends.

During this process, the UE encapsulates the PDU session ID and the re-establishment (or re-setup) request message indicated by the SMF in the create PDU session request message and sends the PDU session ID and the re-establishment (or re-setup) request message to allow the SMF to recognize that the corresponding procedure is for re-establishment.

In the embodiments according to FIGS. 15 to 25 above, a name of the message which the AMF sends to the SMF is referred to an implication of a meaning for causing a specific operation in the SMF and does not mean only a direct request/indication.

For example, the create session request message among the messages sent from the AMF to the SMF means a message including information required for determining whether the session needs to be created in the SMF and performing the corresponding procedure if necessary. That is, the create session request message is not limited to a meaning that the AMF directly determines the need for the session and instructs the SMF to create the session. In other words, the AMF does not store or manage detailed information regarding the session.

Further, the name of the message sent from the SMF to the AMF is not also limited to a case where the AMF sends a response required for managing direct information for the session and may be a response to an implicative message received from the AMF and a response having a meaning for proceeding to a next procedure. That is, the create session response means a message for performing a next procedure of the handover by forwarding an implicative meaning that the tunnel of the core network is prepared.

Hereinafter, in the description of the present invention, "S-" stands for a source entity as an abbreviation of a source and "T-" stands for a target entity as an abbreviation of a target before a network entity name.

### 1. Deactivation of non-accepted PDU sessions during handover procedure

According to current N2 handover procedure, during the handover preparation phase, the SMF deactivate a local area data network (LADN) PDU session as described in step 5c, d.

### 5c, d. [Conditional] SMF to S-UPF: N4 Session Modification Request/Response

If the PDU session corresponds to a LADN and the UE is outside an available area of the LADN, the SMF updates an N4 session of the UPF(s) corresponding to the PDU session to deactivate the corresponding UP connection. The SMF may notify the UPF that sends the Data Notification message to discard downlink data for the PDU sessions and/or to not provide further Data Notification messages.

However, this step is not correct as the following reasons. First, the SMF does not know the area of LADN, so the SMF cannot decide whether the UE is outside the area of LADN. Second, the S-RAN may send Handover Cancel at any time before handover is executed. Accordingly, if the LADN PDU Session is deactivated during the preparation phase, the LADN PDU Session may be deactivated even though the UE is located inside of the LADN area if S-RAN cancel the handover procedure before the handover is executed.

Similarly, in step 10 of the handover preparation procedure, the SMF deactivates the handover cancelled PDU Session. However, deactivation should not happen during the handover preparation.

### 10. [Conditional] T-AMF to SMF: PDU Handover Cancel (PDU Session identifier (ID)).

When a PDU Handover Response message arriving too late, or the PDU Session with SMF involvement is not accepted by T-RAN, this message allows that the corresponding SMF deactivates a possibly allocated N3 UP address and Tunnel ID of the selected UPF. A PDU Session handled by that SMF is considered deactivated and handover attempt is terminated for the corresponding PDU Session.

Accordingly, one embodiment of the present invention proposes that any non-accepted PDU sessions during the handover preparation are deactivate during the handover execution procedure.

For the LADN PDU session, proposed is that AMF indicates to the SMF that the UE is expected outside of the LADN area during the handover preparation. Then, the SMF shall not accept handover of such LADN PDU sessions. As a result, the SMF does not provide an N2 context related with the corresponding LADN PDU session.

Proposal 1: Non-accepted PDU sessions are deactivated during the handover execution procedure. In order not to allocate radio resources for the LADN PDU session during the handover preparation, the SMF does not accept handover of the LADN PDU session if the AMF indicates that UE is expected outside of the LADN area after the handover.

### 2. Creation of PDU sessions failed to be setup list and reason for failure

In step 1 of the current N2 handover execution phase, it is defined that the S-RAN uses the PDU Sessions failed to be setup list and the reason for failure to decide whether to proceed the N2 Handover procedure.

The S-RAN uses the reason for failure to decide whether to proceed the N2 Handover procedure. Accordingly, it is important to provide exact reason for failure. The failed PDU list and the reason for failure may be created by the T-RAN as follows:

9. T-RAN to T-AMF: Handover Request Acknowledge (Target to Source transparent container, signaling management (SM) N2 response list, and T-RAN SM N3 forwarding info list).

The target to Source transparent container includes a UE container with an access stratum (AS) part and a NAS part. The UE container is sent transparently to the UE via T-AMF, S-AMF and S-RAN.

The information provided to the S-RAN also contains a list of PDU Session IDs indicating PDU Sessions failed to be setup and a reason for failure (e.g., SMF decision, SMF response too late, or T-RAN decision).

However, the T-RAN does not know exact reason for failure. For example, the T-RAN cannot differentiate whether PDU session is released by the SMF or no SMF response received within maximum wait time. Also, the T-RAN does not know why the SMF does not accept handover of PDU sessions. If the SMF provides the list, the SMF can provide more information about the reason for failure such as normal deactivation, none of QoS flows are accepted, out of LADN service area, etc. Accordingly, one embodiment of the present invention provides an operation that the PDU Sessions failed to be setup list is generated by the SMF and sent to the AMF.

The AMF is the only entity that knows whether involved SMF(s) responded successfully. Accordingly, the reason of "SMF response too late" may be generated only by the AMF. Therefore, proposed is an operation that the AMF provides such lists separated from the PDU Session failed to be setup list because neither the RAN nor the SMF can create such list.

Proposal 2: The PDU Sessions failed to be setup list is generated by the SMF and the AMF provides a list of handover cancelled PDU sessions if there are SMF(s) that does not send response within maximum wait time.

Hereinafter, inter NG-RAN node N2-based handover preparation and execution procedures without Xn interface will be described in detail based on the contents described above.

The source RAN decides to initiate an N2-based handover to a target RAN. For example, due to new radio conditions or load balancing, if there is no Xn connectivity to the target RAN, the handover may be triggered by error indication from the target RAN after an unsuccessful Xn-based handover (i.e. no IP connectivity between T-RAN and S-UPF), or based on dynamic information learnt by the S-RAN.

The availability of a direct forwarding path is determined in the source RAN and indicated to the SMF(s). If IP connectivity is available between the source and target RANs and security association(s) is in place between them, the direct forwarding path is available.

If the direct forwarding path is not available, indirect forwarding may be used. The SMF uses the indication from the source RAN to determine whether to apply indirect forwarding.

If the AMF receives a rejection to a N2 interface procedure (e.g., NAS message transfer; Location reporting control; QoS flow establishment/modification/release; etc.) from the NG-RAN with an indication that an Inter NG-RAN node handover procedure is in progress, the AMF shall reattempt the same N2 interface procedure when the handover is completed or the handover is deemed to have failed if the AMF is still the serving AMF. If the Inter NG-RAN node handover changes the serving AMF, the source AMF shall terminate any other ongoing N2 interface procedures except the handover procedure.

In order to minimize the number of procedures rejected by NG-RAN, the AMF should pause non-handover related N2 interface procedures (e.g. downlink NAS message transmission, Location report control, etc.) while a handover is ongoing (i.e. from the time that a Handover Required has been received until either the Handover procedure has succeeded (Handover Notify) or failed (Handover Failure)). The N2 interface procedures need to continue until the handover procedure is completed if the AMF is still the serving AMF.

If the AMF detects that the AMF needs be relocated during the handover procedure, the AMF shall reject an N2 request initiated by the SMF received since the handover procedure started and shall include an indication that the request has been temporarily rejected due to handover procedure in progress.

Upon reception for an N2 request(s) initiated by the SMF with an indication that the request has been temporarily rejected due to handover procedure in progress, the SMF starts a set guard timer. The SMF shall reattempt, up to a pre-configured number of times, when the guard timer is completed or it is detected that the handover is completed or has failed using message reception.

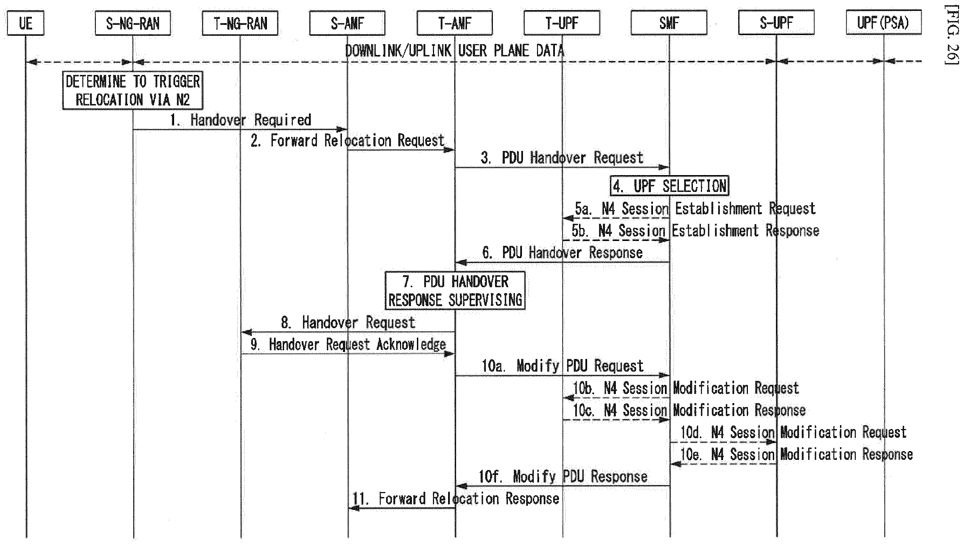

FIG. 26 illustrates a handover procedure according to an embodiment of the present invention.

FIG. 26 illustrates an inter NG-RAN node N2 based handover preparation phase.
1. The S-RAN sends a Handover Required message to the S-AMF.
   The Handover Required message may include a target ID, a Source to Target transparent container, an SM N2 info list, and PDU Session IDs.
   The Source to Target transparent container includes RAN information created by S-RAN to be used by T-RAN, and is transparent to 5GC.
   All PDU Sessions handled by the S-RAN (i.e., all existing PDU Sessions with active UP connections) need to be included in the Handover Required message. At this time, the Handover Required message indicates which of those PDU session(s) are requested by the S-RAN to handover.
   The SM N2 info also includes Direct Forwarding Path Availability, and which QoS flows are subject to data forwarding.
   The Direct Forwarding Path Availability indicates whether direct forwarding is available from the S-RAN to the T-RAN. This indication from the S-RAN may be based on the presence of IP connectivity and security association(s) between the S-RAN and the T-RAN.
2. The S-AMF may send a Forward Relocation Request message to the T-AMF. This step may be conditionally performed.
   The Forward Relocation Request message may include a Subscription Permanent Identifier (SUPI), a Target ID, a Source to Target transparent container, an SM N2 info list, PDU Session IDs, and a Leaving LADN area indication.
   If the AMF has been subscribed to report the LADN service area by the SMF(s) and the UE is expected to be outside of the LADN service area after the handover procedure based on the Target ID sent by the S-RAN, the AMF includes a Leaving LADN area indication including PDU Session ID(s) of the LADN PDU Session.
   When the S-AMF cannot serve the UE anymore, the S-AMF selects the T-AMF. The S-AMF initiates a handover resource allocation procedure by sending a Forward Relocation Request message to the T-AMF.
   When the S-AMF can still serve the UE, this step and step 12 are not needed.
3. The T-AMF may send a PDU Handover Request message to the SMF. This step may be conditionally performed.
   The PDU Handover Request message may include a PDU Session ID, a Target ID, and a Leaving LADN area indication.
   For each PDU Session indicated by the S-RAN as an N2 Handover candidate, the AMF sends the PDU Handover Request message per PDU Session to the associated SMF.
   The PDU Session ID indicates a PDU Session candidate for N2 Handover.
   If the S-AMF included the Leaving LADN area indication, the T-AMF provides the notification to the corresponding SMF(s) associated with the received PDU Session ID(s) in the Leaving LADN area indication. The SMF(s) does not accept handover of such LADN PDU session(s).
4. This step may be conditionally performed. Based on the new location info, the SMF checks whether N2 Handover for the indicated PDU Session can be accepted. The SMF checks also the UPF Selection Criteria. If the UE has moved out of the service area of the UPF connected to RAN, the SMF selects a new intermediate UPF.
5a. The SMF sends an N4 Session Establishment Request message to the (intermediate) T-UPF. This step may be conditionally performed.
   If the SMF selects a new intermediate UPF and T-UPF for the PDU Session and CN Tunnel Info is allocated by the T-UPF, an N4 Session Establishment Request message is sent to the T-UPF, providing Packet detection, enforcement and reporting rules to be installed on the T-UPF. The PDU Session anchor tunnel info for this PDU Session is also provided to the T-UPF.
5b. The (intermediate) T-UPF sends an N4 Session Establishment Response message to the SMF.
   The T-UPF sends an N4 Session Establishment Response message to the SMF with CN DL tunnel info and UL Tunnel info (i.e., N3 tunnel info). The SMF starts a timer, to be used in step 22a.
6. The SMF sends a PDU Handover Response message to the T-AMF. The PDU Handover Response message may include a PDU Session ID and SM N2 info.
   If N2 handover for the PDU Session is accepted, the SMF includes SM N2 info sent transparently for the AMF to the T-RAN including in the SM N2 info, the PDU Session ID, an N3 UP address and a Tunnel ID of UPF, and QoS parameters.
   If N2 handover for the PDU Session is not accepted as described in step 3, the SMF does not include SM N2 info regarding the PDU Session to avoid establishment of radio resources at the target RAN.
   The SMF sends to the AMF an Nsmf_PDUSession_UpdateSMContext response without including the CN tunnel info for the PDU Session(s) which is to be released. In addition, the PDU Session(s) are released separately from the procedure.
7. The AMF supervises the PDU Handover Response messages from the involved SMFs. The lowest value of the maximum delay indications for the PDU Sessions that are candidates for handover gives the maximum time when the AMF may wait for PDU Handover Response messages before continuing with the N2 Handover procedure. When the maximum wait time expires or when all PDU Handover Response messages are received, the AMF continues with the N2 Handover procedure (i.e., sending the Handover Request message in step 8). If there is no response from the involved SMFs within the maximum wait time, the UP connection(s) of the PDU Session(s) handled by the corresponding SMF is considered to be deactivated and a handover attempt for the corresponding PDU Session(s) is terminated. The AMF creates a Handover cancelled PDU Session list to provide the created Handover cancelled PDU Session list to the S-RAN.
8. The T-AMF sends a Handover Request message to the T-RAN.
   The Handover Request message may include a Source to Target transparent container, mobility management (MM) N2 info, and an SM N2 info list.
   The T-AMF determines T-RAN based on the Target ID. The T-AMF may allocate a 5G-Globally Unique Temporary Identifier (5G-GUTI) for the AMF and the UE in target Tracking Area Identity (TAI).
   The Source to Target transparent container is forwarded as received from the S-RAN. The MM N2 info includes, for example, security information and a Handover Restriction List.
   The SM N2 info list includes SM N2 info received from SMFs in the PDU Handover Response messages received within allowed maximum delay supervised by the T-AMF mentioned in step 7. The SM N2 info also indicates which QoS flows are subject to data forwarding.
9. The T-RAN sends a Handover Request Acknowledge message to the T-AMF.
   The Handover Request Acknowledge message may include a Target to Source transparent container, an SM N2 response list, and a T-RAN SM N3 forwarding info list.
   The target to Source transparent container includes a UE container with an access stratum (AS) part and a NAS part. The UE container is sent transparently to the UE via T-AMF, S-AMF and S-RAN.
   The SM N2 response list includes, per each received SM N2 info, a PDU Session ID and an SM N2 response indicating whether the T-RAN accepted the N2 Handover request for the PDU Session and a cause if the PDU Session is not accepted in the T-RAN. For each by T-RAN accepted PDU Session for N2 Handover, the SM N2 response includes an N3 UP address and a Tunnel ID of T-RAN.
   The T-RAN SM N3 forwarding info list includes, per each PDU Session accepted by the T-RAN, includes at least one of a QoS flow subject for data forwarding, and N3 UP address and Tunnel ID of T-RAN for receiving forwarded data.
10a. The AMF sends a Modify PDU Request message to the SMP.
   The Modify PDU Request message may include a PDU Session ID, an SM N2 response, and a T-RAN SM N3 forwarding info list.
   For each SM N2 response received from the T-RAN (included in the SM N2 response list), the AMF sends the received SM N2 response to the SMF indicated by the respective PDU Session IDs.
   If no new T-UPF is selected, the SMF stores the N3 tunnel info of T-RAN from the SM N2 response if N2 handover is accepted by T-RAN.
10b. The SMF sends an N4 Session Modification Request message to the T-UPF. This step may be conditionally performed.
   The N4 Session Modification Request message may include a T-RAN SM N3 forwarding info list.
   If indirect forwarding is applied and the UPF is relocated, the SMF selects a T-UPF and sends the N4 Session Modification Request message to the T-UPF. If the UPF is not relocated, indirect forwarding may be set up in steps 11d and 11e below.
   The indirect forwarding may be performed via a UPF which is different from the T-UPF.
10c. The T-UPF sends an N4 Session Modification Response message to the SMF.
   The N4 Session Modification Response message may include a T-UPF SM N3 forwarding info list.
   The T-UPF allocates tunnel information and sends the N4 Session Modification Response message to the SMF.
   The T-UPF SM N3 forwarding info list includes T-UPF N3 address and T-UPF N3 Tunnel identifiers for forwarding data.
10d. The SMF sends an N4 Session Modification Request message to the S-UPF.
   The N4 Session Modification Request message may include a T-RAN SM N3 forwarding info list.
   If indirect forwarding is applied, the SMF sends an N4 Session Establishment Request message to the S-UPF.
   If the UPF is relocated, this message includes the T-UPF SM N3 forwarding info list. If the UPF is not relocated, this message includes the T--RAN SM N3 forwarding info list.
   The indirect forwarding may be performed via a UPF which is different from the S-UPF.
10e. The S-UPF sends an N4 Session Modification Response message to the SMF. This step may be conditionally performed.
   The N4 Session Modification Response message may include an S-UPF SM N3 forwarding info list.
   The S-UPF allocates tunnel information and sends an N4 Session establishment Response message to the SMF.
   The S-UPF SM N3 forwarding info list may include S-UPF N3 address and S-UPF N3 Tunnel identifiers for forwarding data.
10f. The SMF sends a Modify PDU Response message to the T-AMF.
   The Modify PDU Response message may include a PDU Sessions failed to be setup list and an S-UPF SM N3 forwarding info list.
   The SMF sends a Modify PDU Response message per PDU Session to the T-AMF.
   The PDU Sessions failed to be setup list includes a list of PDU Session IDs and reason for failure (e.g., out of LADN service area, none of QoS flows are accepted, normal deactivation, etc.).
   The SMF starts an indirect data forwarding timer, to be used to release the resource of indirect data forwarding tunnel.
11. The T-AMF sends a Forward Relocation Response message to the S-AMF. This step may be conditionally performed.

The Forward Relocation Response message may include a Target to Source transparent container, a PDU Sessions failed to be setup list, a Handover cancelled PDU Sessions list, and an S-UPF SM N3 forwarding info list.

The AMF supervises the Modify PDU Response messages from the involved SMFs. When the maximum wait time expires or all Modify PDU Response messages are received, the T-AMF sends a Forward Relocation Response message to the S-AMF.

The PDU Sessions failed to be setup list is received from the involved SMFs. The AMF also includes a Handover cancelled PDU Sessions list with reason for failure (e.g., SMF response too late) which is generated in step 7.

The Target to Source transport container is received from the T-RAN. The S-UPF SM N3 forwarding info list is received from the S-UPF.

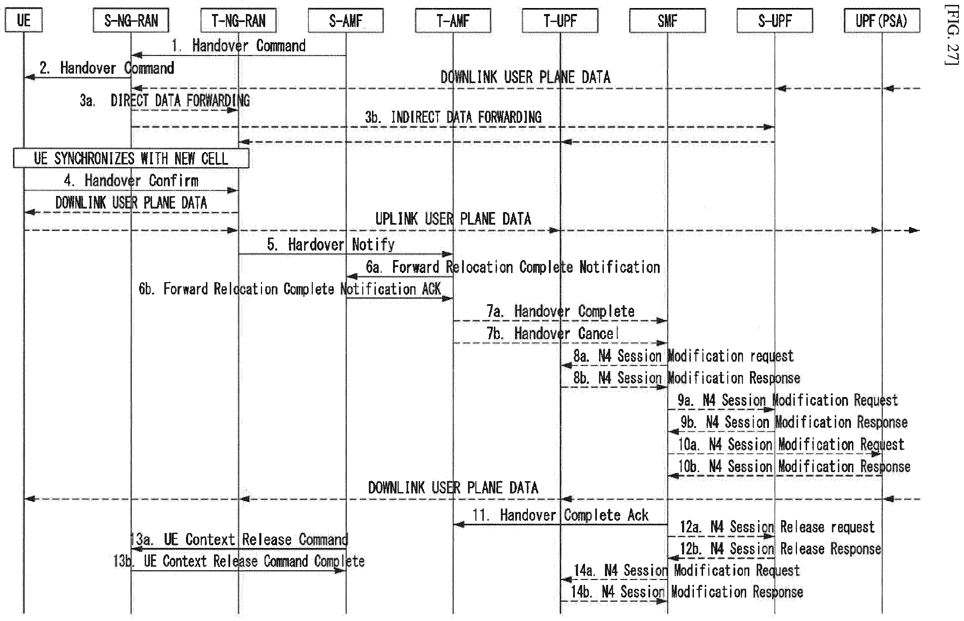

FIG. 27 illustrates a handover procedure according to an embodiment of the present invention.

FIG. 27 illustrates an inter NG-RAN node N2 based handover execution phase.
1. The S-AMF sends a Handover Command message to the S-RAN.
   The Handover Command message may include a Target to Source transparent container, a PDU Sessions failed to be setup list, a Handover cancelled PDU Sessions list, and an SM forwarding info list.
   The Target to Source transparent container is forwarded as received from the S-AMF.
   The SM forwarding info list includes a T-RAN SM N3 forwarding info list for direct forwarding or an S-UPF SM N3 forwarding info list for indirect forwarding.
   The PDU Sessions failed to be setup list and the Handover cancelled PDU Sessions list provided to the S-RAN contains a list of PDU Session IDs indicating PDU Sessions failed to be setup and reason for failure. The S-RAN uses the information to decide whether to proceed with the N2 Handover procedure.
2. The S-RAN sends a Handover Command message to the UE.
   The Handover Command message may include a UE container.
   The UE container is a UE part of the Target to Source transparent container which is sent transparently from T-RAN via AMF to S-RAN and is provided to the UE by the S-RAN.
3. Uplink packets are sent from the T-RAN to T-UPF and UPF (i.e., PDU session anchor (PSA)). Downlink packets are sent from the UPF (PSA) to the S-RAN via the S-UPF. The S-RAN starts forwarding of downlink data from the S-RAN towards the T-RAN for QoS flows subject to data forwarding. This may be either direct forwarding (step 3a) or indirect forwarding (step 3b).
4. The UE sends a Handover Confirm message to the T-RAN.
   After the UE has successfully synchronized to the target cell, the UE sends a Handover Confirm message to the T-RAN. Handover is by this message considered as successful by the UE.
5. The T-RAN sends a Handover Notify message to the T-AMF.
   Handover is by this message considered as successful by the T-RAN.
6a. The T-AMF sends a Forward Relocation Complete Notification message to the S-AMF. This step may be conditionally performed.
   A timer in the S-AMF is started to supervise when resources in S-RAN are to be released.
6b. The S-AMF sends a Forward Relocation Complete Notification message to the T-AMF.
   The S-AMF acknowledges by sending A Forward Relocation Complete Notification ACK message to the T-AMF.
7a. The T-AMF sends a Handover Complete message to the SMF. This step may be conditionally performed.
   The Handover Complete message may include a PDU Session ID.
   The Handover Complete message is sent per each PDU Session to the corresponding SMF to indicate the success of the N2 Handover.
   When the T-UPF is selected, the SMF starts a timer to release the resource of S-UPF.
7b. The T-AMF sends a PDU Handover Cancel message to the SMF. This step may be conditionally performed.
   The PDU Handover Cancel message may include a PDU Session ID.
   For a PDU Sessions not accepted by the SMF(s), this message is indicated to the corresponding SMF allowing to deactivate user plane connection. The SMF may notify the UPF that sends the Data Notification to discard downlink data for the PDU Sessions and/or to not provide further Data Notification messages.
8a. The SMF sends an N4 Session Modification Request message to the (intermediate) T-UPF. This step may be conditionally performed.
   If a new T-UPF is selected, the SMF sends an N4 Session Modification Request indicating DL tunnel info of T-RAN to the T-UPF.
8b. The T-UPF sends a N4 Session Modification Response message to the SMF. This step may be conditionally performed.
   The T-UPF acknowledges by sending the N4 Session Modification Response message to the SMF.
9a. The SMF sends an N4 Session Modification Request message to the (intermediate) S-UPF. This step may be conditionally performed.
   If UPF is not relocated, the SMF sends the N4 Session Modification Request indicating DL tunnel info of T-RAN to the S-UPF.
9b. The S-UPF sends an N4 Session Modification Response message to the SMF. This step may be conditionally performed.
   The S-UPF acknowledges by sending the N4 Session Modification Response message to the SMF.
10a. The SMF sends a N4 Session Modification Request message to the UPF (PSA). This step may be conditionally performed.
   The SMF sends the N4 Session Modification Request message to PDU Session anchor UPF, UPF (PSA), providing N3 tunnel info of T-RAN or the DL tunnel info of T-UPF if the T-UPF is selected.
   If the T-UPF is not selected, steps 10a and step 10b are skipped.
10b. The UPF(PSA) sends an N4 Session Modification Response message to the SMF. This step may be conditionally performed.
   The UPF(PSA) sends the N4 Session Modification Response message to the SMF. At this point, the UPF (PSA) starts sending downlink packets to the T-RAN, via T-UPF (if T-UPF is selected).
   When there are multiple UPFs(PSA), step 10a and step 10b are performed for each UPF(PSA).
11. The SMF sends a Handover Complete Ack message to the T-AMF.
   The Handover Complete Ack message may include a PDU Session ID.
   The SMF confirms reception of the Handover Complete message.
12a. The SMF sends an N4 Session Release Request message to the (intermediate) S-UPF.
   If there is a source intermediate UPF, the SMF initiates resource release, after timer in step 7 or indirect data forwarding timer expires, by sending an N4 Session Release Request message (including Release Cause) to a source UPF. This message is also used to release the indirect data forwarding resource in the S-UPF.
12b. The S-UPF sends an N4 Session Release Response message to the SMF.
   The S-UPF acknowledges with an N4 Session Release Response message to confirm the release of resources.
   In case of indirect data forwarding, the resource of indirect data forwarding is also released.
13a. The AMF sends a UE Context Release Command message to the S-RAN.
   After the timer in step 6a expires, the AMF sends the UE Context Release Command message.
13b. The S-RAN sends a UE Context Release Complete message to the AMF.
   The source RAN releases its resources related to the UE and responds with a UE Context Release Complete message.
14a. The SMF sends a N4 Session Modification Request message to the T-UPF. This step may be conditionally performed.
   If indirect forwarding is applied and UPF is relocated, after a timer of indirect data forwarding expires, the SMF sends a N4 Session Modification Request message to the T-UPF to release the indirect data forwarding resource.
14b. The T-UPF sends a N4 Session Modification Response message to the SMF.

The T-UPF acknowledges with the N4 Session Modification Response to confirm the release of indirect data forwarding resources.

On the other hand, if the UE has a general PDU session, when the UE is in an allowed area (i.e., an area in which the UE is allowed to initiate communication) and then, move to a non-allowed area (i.e., an area in which a registration procedure is allowed, but other communication is not allowed for the UE), since the PDU session is not handed over in the RAN, all PDU sessions are in a deactivation state in the non-allowed area.

However, if the UE has a prioritized PDU session (e.g., an emergency PDU session, a Multimedia Priority Service (MPS) PDU session, etc.), all PDU sessions are handed over to the non-allowed area for the prioritized PDU session without a particular limit in the RAN. In this case, a problem occurs in that the UE may send and receive general data to and from the network even in the non-allowed area.

In order to solve such a problem, a method for handing over only the prioritized PDU session by managing a restriction area for each PDU session in the RAN may be used using the aforementioned method.

As another method, the registration procedure may be used. When the UE moves from the allowed area to the non-allowed area, the UE needs to particularly perform registration update.

According to the existing technology (see 3GPP TS 23.501 v1.4.0 registration procedure), the registration update procedure is defined to perform the following process. A 3GPP TS 23.501 v1.4.0 document may be incorporated into this document by reference.

17. The AMF sends Namf_EventExposure_Notify or Nsmf_PDUSession_UpdateSMContext to the SMF. This step may be conditionally performed.

The AMF invokes the Namf_EventExposure_Notify or Nsmf_PDUSession_UpdateSMContext in one or more of the following scenarios:
- If the AMF is changed, the new AMF notifies the UE reachability status to each SMF of the new AMF serving the UE. When the AMF has changed, it is assumed that the old AMF provides the available SMF information. If it is indicated that any PDU Session status is released at the UE, the AMF invokes the Nsmi_PDUSession_ReleaseSMContext service operation towards the SMF in order to release any network resources related to the PDU Session.
- If the "PDU Session(s) to be re-activated" is included in a Registration Request message in step 1 of a registration procedure, the AMF sends Nsmf_PDUSession_UpdateSMContext Request to SMF(s) associated with the PDU Session(s) to activate User Plane connections of the PDU Session(s). The User Plane connection activation is completed by performing from step 4 of the registration procedure without sending a MM NAS Service Accept message from the AMF to RAN described in step 8 of the registration procedure.
- If the UE was in a Mobile Initiated Connection Only (MICO) mode (i.e., UE initiated connection only mode), the AMF had notified an SMF of the UE being unreachable, and the SMF needs not to send DL data notifications to the AMF, the AMF notifies the SMF of that the UE is reachable.
- If the AMF had notified an SMF of the UE being reachable only for a regulatory prioritized service and the UE enters into an Allowed area, the AMF notifies the SMF of that the UE is reachable.
- If the UE is in a Non-allowed area and the PDU Session(s) to be re-activated is included in the Registration Request message, the AMF notifies that all the associated SMF(s) of the UE is reachable only for regulatory prioritized service.
- If the SMF has subscribed to UE location change notification via a Namf_EventExposure_Subscribe service operation and if the AMF detects that the UE has moved out of an area of interest subscribed by an SMF serving the UE, the AMF invokes a Namf EventExposure Notify service operation to inform the SMF of the new location information of the UE.

The SMF may decide to trigger, for example, new intermediate UPF insertion or UPF relocation.

If the Registration type indicated by the UE is periodic registration update, step 20 of the registration procedure may be omitted.

If the serving AMF is changed, the new AMF waits until step 17 is completed with all the SMFs associated with the UE. Otherwise, steps 18 to 22 can continue in parallel to step 17.

In step 17 of the registration procedure described above as an operation in which the AMF sends an SM context update to the SMF, an operation in which even though the UE moves from the allowed area to the non-allowed area, the UE announces the movement of the UE from the allowed area to the non-allowed area to the SMF is not defined at present. At present, only when the UE notifies a PDU session ID which the UE wants to activate to the registration request message, the AMF notifies the SMF that the UE may receive only a prioritized service. Accordingly, when the UE enters the non-allowed area from the allowed area, step 17 of the registration procedure needs to be changed as follows in order for the AMF to notify that the UE enters the non-allowed area from the allowed area.

When the UE is within the non-allowed area and when a PDU session(s) to be re-activated is included in the Registration Request message or the UE is in a connection management (CM) connected mode, the AMF notifies the SMFs of all associated UEs that the AMF is reachable only for the regulatory prioritized service.

Even when the UE is in the CM-CONNECTED mode as described above, the AMF may notify the SMF that the UE may receive only the prioritized service because the UE enters the non-allowed area. Accordingly, when the SMF receives such a message, the SMF performs deactivation (i.e., user plane resource releasing) of the PDU sessions rather than the prioritized service.

Such a method may prevent the UE from receiving a general service in the non-allowed area.

Meanwhile, an N2 handover procedure is divided into two steps. First step is a handover preparation phase and second step is a handover execution phase. The S-RAN triggers the N2 handover procedure by sending a Handover Required message to the S-AMF. The S-AMF performs the handover preparation procedure. This preparation procedure should not affect the UE service because this procedure is simply preparing handover to change the User Plane path. Accordingly, the S-RAN may send a Handover Cancel message to cancel the ongoing handover preparation procedure before handover execution is started.

For example, if the UE's signal strength becomes weak, the S-RAN may decide to prepare handover based on the measurement report which is sent by the UE. The S-RAN may select the strongest cell and trigger the handover preparation by sending the Handover Required message. However, after sending the Handover Required message, the signal strength may become strong (e.g., due to UE mobility). In this case, the S-RAN will cancel the handover preparation. In this scenario, the UE should keep using the UE's service without any interruption.

However, according to the current N2 handover preparation procedure, the SMF may deactivate (i.e., release User Plane resources) some of PDU Sessions. For example, in steps 6c and 6d and step 11, the SMF may deactivate the PDU Sessions.

### 6c, 6d. [Conditional] SMF to S-UPF: N4 Session Modification Request/Response

If the PDU Session corresponds to a LADN and the UE is outside the available area of the LADN, the SMF updates the N4 session of the UPF(s) corresponding to the PDU Session to deactivate the corresponding user plane connection. The SMF may notify the UPF that sends the Data Notification message to discard downlink data for the PDU sessions and/or to not provide further Data Notification messages.

### 11. [Conditional] T-AMF to SMF: Nsmf_PDUSession_UpdateSMContext Request (PDU Session ID, Cause).

When an Nsmf_PDUSession_UpdateSMContext Response message arrives too late (see step 8), or the PDU Session with SMF involvement is not accepted by the T-RAN, this message is sent to the corresponding SMF allowing the SMF to deallocate N3 UP address and Tunnel ID allocated to the selected UPF. A PDU Session handled by the corresponding SMF is considered to be deactivated and handover attempt is terminated for the corresponding PDU Session.

If these steps are performed during the handover preparation procedure, the UE cannot receive data from those deactivated PDU Sessions even though handover is not performed. Accordingly, these steps may not be performed in the handover preparation procedure. Instead of that, the deactivation of the PDU Session may be performed during the handover execution procedure.

Proposal: Proposed is that the PUC session deactivation in the handover preparation procedure is changed to the handover execution procedure.

Hereinafter, inter NG-RAN node N2-based handover preparation and execution procedures without Xn interface will be described in detail based on the contents described above.

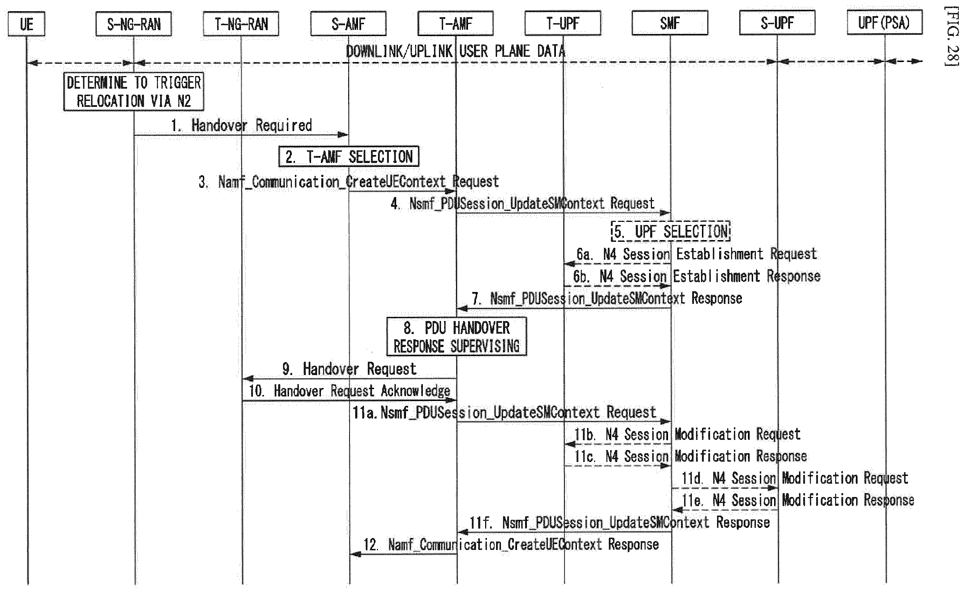

FIG. 28 illustrates a handover procedure according to an embodiment of the present invention.

FIG. 28 illustrates an inter NG-RAN node N2 based handover preparation phase.
1. The S-RAN sends a Handover Required message to the S-AMF.
   The Handover Required message may include a target ID, a Source to Target transparent container, an SM N2 info list, and PDU Session IDs.
   The Target ID includes a selected PLMN identifier (ID).
   The Source to Target transparent container includes RAN information created by S-RAN to be used by T-RAN, and is transparent to 5GC.
   All PDU Sessions handled by the S-RAN (i.e., all existing PDU Sessions with active UP connections) need to be included in the Handover Required message. At this time, the Handover Required message indicates which of those PDU session(s) are requested by the S-RAN to handover.
   The SM N2 info also includes Direct Forwarding Path Availability, and which QoS flows are subject to data forwarding.
   The Direct Forwarding Path Availability indicates whether direct forwarding is available from the S-RAN to the T-RAN. This indication from the S-RAN may be based on the presence of IP connectivity and security association(s) between the S-RAN and the T-RAN.
2. When the S-AMF cannot serve the UE anymore, the S-AMF selects the T-AMF.
3. The S-AMF may send a Namf_Communication_CreateUEContext request message to the T-AMF. This step may be conditionally performed.
   The Namf Communication CreateUEContext Request message may include N2 Information (Target ID, Source to Target transparent container, SM N2 information list, Service area restriction), UE context information containing SUPI and the list of PDU Session IDs together with the corresponding SMF information.
   The S-AMF initiates a Handover resource allocation procedure by invoking the Namf_Communication_CreateUEContext service operation towards the T-AMF.
   When the S-AMF can still serve the UE, this step and step 12 are not performed.
   If the service area restrictions are available in the S-AMF, the service area restrictions may be forwarded to the T-AMF.
4. The T-AMF may send an Nsmf_PDUSession_UpdateSMContext message to the SMF. This step may be conditionally performed.
   The Nsmf_PDUSession_UpdateSMContext message may include a PDU Session ID, a Target ID, and a T-AMF ID.
   For each PDU Session indicated by the S-RAN as an N2 Handover candidate, the AMF invokes the Nsmf_PDUSession_UpdateSMContext request per PDU Session to the associated SMF.
   The PDU Session ID indicates a PDU Session candidate for N2 Handover.
   The target ID may be used as the UE location information.
   If the (T-)AMF detects that the UE moves into a non-allowed area based on the service area restrictions, the (T-)AMF notifies each SMF corresponding to the list of PDU Sessions received from the Handover Required message of that the UE is only reachable for regulatory prioritized services.
5. This step may be conditionally performed. Based on the Target ID, the SMF checks whether N2 Handover for the indicated PDU Session can be accepted. The SMF checks also the UPF Selection Criteria. If the UE has moved out of the service area of the UPF connected to RAN, the SMF selects a new intermediate UPF.
6a. The SMF sends a N4 Session Establishment Request message to the (intermediate) T-UPF. This step may be conditionally performed.
   If the SMF selects a new intermediate UPF (i.e., T-UPF) for the PDU Session and CN Tunnel Info is allocated by the T-UPF, an N4 Session Establishment Request message is sent to the T-UPF, providing Packet detection, enforcement and reporting rules to be installed on the T-UPF. The PDU Session anchor tunnel info for this PDU Session is also provided to the T-UPF.
6b. The (intermediate) T-UPF sends an N4 Session Establishment Response message to the SMF.
   The T-UPF sends an N4 Session Establishment Response message to the SMF with CN DL tunnel info and UL Tunnel info (i.e., N3 tunnel info). The SMF starts a timer to release the resource of S-UPF to be used in step 12a of the Handover Execution Phase.
7. The SMF may send a Nsmf_PDUSession_UpdateSMContext response message to the T-AMF.
   The Nsmf_PDUSession_UpdateSMContext response message may include a PDU Session ID and SM N2 Info.
   If N2 handover for the PDU Session is accepted, the SMF includes in the Nsmf PDUSession UpdateSMContext response the SM N2 Info containing the N3 UP address and the UL CN Tunnel ID of the UPF and the QoS parameters indicating that the SM N2 Info is for the Target NG-RAN.
   If N2 handover for the PDU Session is not accepted as described in step 4 above, the SMF does not include SM N2 info regarding the PDU Session to avoid establishment of radio resources at the target RAN.
   If the SMF is notified that the UE is only reachable for regulatory prioritized services, the SMF does not include any SM N2 info regarding the PDU Session for non regulatory prioritized services to avoid establishment of radio resources at the target RAN.
   The SMF sends to the AMF an Nsmf_PDUSession_UpdateSMContext response message without including the CN tunnel info for the PDU Session(s) which is to be released. In addition, the PDU Session(s) are released separately from the procedure.
8. The AMF supervises the Nsmf_PDUSession_UpdateSMContext Response message from the involved SMF(s). The lowest value of the maximum delay indications for the PDU Sessions that are candidates for handover gives the maximum time when the AMF may wait for the Nsmf_PDUSession_UpdateSMContext response message before continuing with the N2 Handover procedure. When the maximum wait time expires or when all the Nsmf_PDUSession_UpdateSMContext response messages are received, the AMF continues with the N2 Handover procedure (i.e., sending the Handover Request message in step 8). If there is no response from the involved SMFs within the maximum wait time, the UP connection(s) of the PDU Session(s) handled by the corresponding SMF is considered to be deactivated and a handover attempt for the corresponding PDU Session(s) is terminated. The AMF creates a Handover cancelled PDU Session list to provide the created Handover cancelled PDU Session list to the S-RAN.
9. The T-AMF sends a Handover Request message to the T-RAN.
   The Handover Request message may include a Source to Target transparent container, MM N2 information, an SM N2 information list, and a Handover Restriction list.
   The T-AMF determines T-RAN based on the Target ID. The T-AMF allocates a 5G-GUTI for the UE in the AMF and target TAI.
   The Source to Target transparent container is forwarded as received from the S-RAN. The MM N2 information may include, for example, security information and a Handover Restriction List.
   The SM N2 information list includes SM N2 information received from SMFs in the Nsmf_PDUSession_UpdateSMContext message received within allowed maximum delay supervised by the T-AMF mentioned in step 8. The SM N2 information also indicates which QoS flows are subject to data forwarding.
   The Handover Restriction List is sent when being available in the Target AMF.
10. The T-RAN sends a Handover Request Acknowledge message to the T-AMF.
   The Handover Request Acknowledge message may include a Target to Source transparent container, an SM N2 response list, a PDU Sessions failed to be setup list, and a T-RAN SM N3 forwarding info list.
   The target to Source transparent container includes a UE container with an access stratum (AS) part and a NAS part. The UE container is sent transparently to the UE via T-AMF, S-AMF and S-RAN.
   The information provided to the S-RAN may also include a list of PDU Session IDs indicating PDU Sessions failed to be setup and a reason for failure (e.g., SMF decision, SMF response too late, or T-RAN decision).
   The SM N2 response list includes, per each received SM N2 info, a PDU Session ID and an SM N2 response indicating whether the PDU Session ID and the T-RAN accepted the N2 Handover request for the PDU Session. For each by T-RAN accepted PDU Session for N2 Handover, the SM N2 response includes an N3 UP address and a Tunnel ID of the T-RAN.
   The T-RAN SM N3 forwarding info list includes, per each PDU Session accepted by the T-RAN, at least one of a QoS flow subject for data forwarding, and N3 UP address and Tunnel ID of the T-RAN for receiving forwarded data.
11a. The AMF may send an Nsmf_PDUSession_UpdateSMContext request message to the SMF.
   The Nsmf_PDUSession_UpdateSMContext request message may include a PDU Session ID, an SM N2 response, and a T-RAN SM N3 forwarding info list.
   For each SM N2 response received from the T-RAN (included in the SM N2 response list), the AMF sends the received SM N2 response to the SMF indicated by the respective PDU Session IDs.
   If no new T-UPF is selected, the SMF stores the N3 tunnel info of T-RAN from the SM N2 response if N2 handover is accepted by T-RAN.
11b. The SMF sends a N4 Session Modification Request message to the T-UPF. This step may be conditionally performed.
   The N4 Session Modification Request message may include a T-RAN SM N3 forwarding info list, and indication to allocate a DL forwarding tunnel for indirect forwarding.
   If the SMF selected a T-UPF in step 6a above, the SMF updates the T-UPF by providing the T-RAN SM N3 forwarding information list by sending the N4 Session Modification Request to the T-UPF.
   If indirect forwarding is applied based on indication from NG-RAN and the UPF is relocated and if the SMF decides to setup the indirect forwarding tunnel on the same T-UPF, the SMF also requests in the N4 Session Modification Request message to the T-UPF, to allocate a DL forwarding tunnel for indirect forwarding.
   When the SMF selects a T-UPF for indirect forwarding, the indirect forwarding may be performed via a UPF which is different from the T-UPF.
11c. The T-UPF sends a N4 Session Modification Response message to the SMF. This step may be conditionally performed.
   The N4 Session Modification Response message may include a T-UPF SM N3 forwarding info list.
   The T-UPF allocates tunnel information and sends the N4 Session Modification Response message to the SMF.
   The T-UPF SM N3 forwarding info list includes T-UPF N3 address and T-UPF N3 Tunnel identifiers for forwarding data.
11d. The SMF sends an N4 Session Modification Request message to the S-UPF. This step may be conditionally performed.
   The N4 Session Modification Request message may include a T-RAN SM N3 forwarding info list or T-UPF SM N3 forwarding Information list, and indication to allocate a DL forwarding tunnel for indirect forwarding.
   If the UPF is relocated, this message includes the T-UPF SM N3 forwarding info list. If the UPF is not relocated, this message includes the T-RAN SM N3 forwarding info list.
   If indirect forwarding is applied based on indication from NG-RAN, the SMF indicates in the N4 Session Modification Request message to the S-UPF to allocate a DL forwarding tunnel for indirect forwarding.
   The indirect forwarding may be performed via a UPF which is different from the S-UPF.
11e. The S-UPF sends an N4 Session Modification Response message to the SMF. This step may be conditionally performed.
   The N4 Session Modification Response message may include an S-UPF SM N3 forwarding info list.
   The S-UPF allocates tunnel information and sends an N4 Session establishment Response message to the SMF.
   The S-UPF SM N3 forwarding info list may include S-UPF N3 address and S-UPF N3 Tunnel identifiers for data forwarding for both the downlink and the uplink.
11f. The SMF may send an Nsmf_PDUSession_UpdateSMContext response message to the T-AMF.

The Nsmf_PDUSession_UpdateSMContext response message may include N2 SM Information.

The SMF sends an Nsmf_PDUSession_UpdateSMContext Response message per PDU Session to the T-AMF.

The SMF creates N2 SM information containing the DL forwarding tunnel information to be sent to the S-RAN by the AMF. The SMF includes this information in the Nsmf_PDUSession_UpdateSMContext response message.

The DL forwarding tunnel information may be one of the following information:
- If indirect forwarding is applied, the SMF includes the T-RAN N3 forwarding information received in step 12a.
- If the indirect forwarding tunnel is setup in step 12b or 12d, the SMF includes the T-UPF or S-UPF DL forwarding information containing the N3 UP address and the DL Tunnel ID of the UPF.

The SMF starts an indirect data forwarding timer, to be used to release the resource of indirect data forwarding tunnel.

12. The T-AMF sends a Namf Communication CreateUEContext response message to the S-AMF. This step may be conditionally performed.

The Namf_Communication_CreateUEContext response message may include N2 information necessary for the S-AMF to send Handover Command to the S-RAN including a Target to Source transparent container, and N2 SM information (the PDU Sessions failed to be setup list and the N3 DL forwarding Information).

The AMF supervises the Nsmf PDUSession UpdateSMContext Response message from the involved SMF(s). When the maximum wait time expires or when all the Nsmf_PDUSession_UpdateSMContext Response messages are received, the T-AMF sends the Namf_Communication_CreateUEContext Response message to the S-AMF.

The Target to Source transport container is received from the T-RAN. The N2 SM Information is received from the SMF in step 12f.

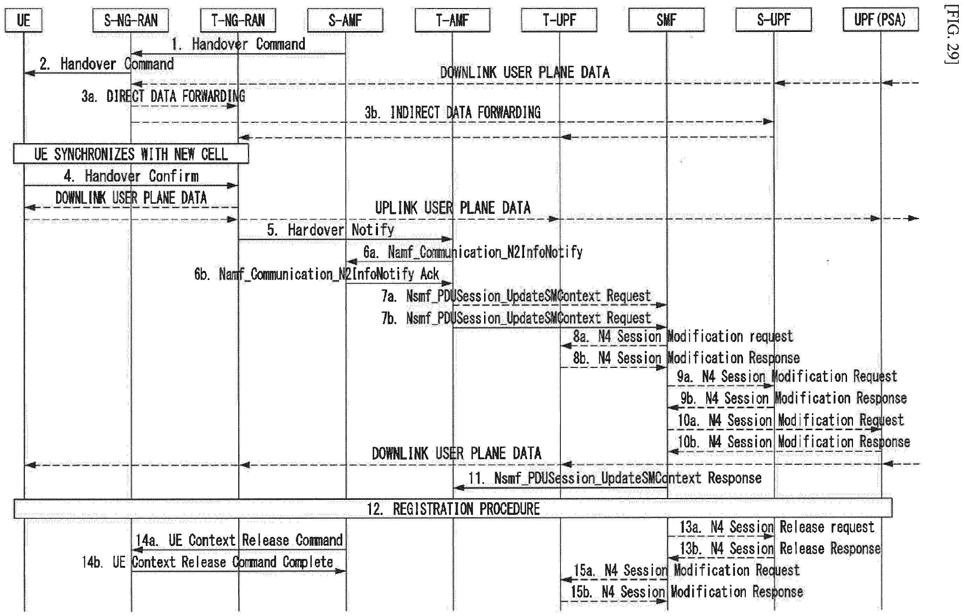

FIG. 29 illustrates a handover procedure according to an embodiment of the present invention.

FIG. 29 illustrates an inter NG-RAN node N2 based handover execution phase.
1. The S-AMF sends a Handover Command message to the S-RAN.
   The Handover Command message may include a Target to Source transparent container, a PDU Sessions failed to be setup list, and an SM forwarding info list.
   The Target to Source transparent container is forwarded as received from the S-AMF.
   The SM forwarding info list includes a T-RAN SM N3 forwarding info list for direct forwarding or an S-UPF SM N3 forwarding info list for indirect forwarding.
   The S-RAN uses the PDU Sessions failed to be setup list and the indicated reason for failure to decide whether to proceed with the N2 Handover procedure.
2. The S-RAN sends a Handover Command message to the UE.
   The Handover Command message may include a UE container.
   The UE container is a UE part of the Target to Source transparent container which is sent transparently from T-RAN via AMF to S-RAN and is provided to the UE by the S-RAN.
3. Uplink packets are sent from the T-RAN to a T-UPF and a UPF (PSA). Downlink packets are sent from the UPF (PSA) to the S-RAN via the S-UPF. The S-RAN starts forwarding of downlink data from the S-RAN towards the T-RAN for QoS flows subject to data forwarding. This may be either direct forwarding (step 3a) or indirect forwarding (step 3b).
4. The UE sends a Handover Confirm message to the T-RAN.
   After the UE has successfully synchronized to the target cell, the UE sends a Handover Confirm message to the T-RAN. Handover is by this message considered as successful by the UE.
5. The T-RAN sends a Handover Notify message to the T-AMF.
   Handover is by this message considered as successful by the T-RAN.
6a. The T-AMF sends a Namf_Communication_N2InfoNotify message to the S-AMF. This step may be conditionally performed.
   The T-AMF notifies to the S-AMF about the N2 handover notification received from the T-RAN by invoking the Namf_Communication_N2InfoNotify.
   A timer in the S-AMF is started to supervise when resources in S-RAN are to be released.
6b. The S-AMF sends an Namf_Communication_N2InfoNotify ACK message to the T-AMF.
   The S-AMF acknowledges by sending the Namf_Communication_N2InfoNotify ACK message to the T-AMF.
7a. The T-AMF may send an Nsmf_PDUSession_UpdateSMContext request message to the SMF. This step may be conditionally performed.
   The Nsmf_PDUSession_UpdateSMContext request message may include a PDU Session ID and a cause.
   When an Nsmf_PDUSession_UpdateSMContext Response message arrives too late during the handover preparation phase or when the PDU Session with SMF involvement is not accepted by the T-RAN, this message is sent to the corresponding SMF for allowing the SMF to deallocate N3 UP address and Tunnel ID allocated to the selected UPF. The PDU Session handled by the SMF is considered to be deactivated and handover attempt is terminated for the corresponding PDU Session.
7b. The T-AMF may send an Nsmf_PDUSession_UpdateSMContext request message to the SMF.
   The Nsmf PDUSession UpdateSMContext request message includes a Handover Complete indication for PDU Session ID.
   The Handover Complete is sent per each PDU Session to the corresponding SMF to indicate the success of the N2 Handover.
   The T-AMF also registers itself as the serving AMF with the UDM by using Nudm_UECM_Registration.
8a. The SMF sends an N4 Session Modification Request message to the (intermediate) T-UPF. This step may be conditionally performed.
   If a w T-UPF is inserted or an existing intermediate S-UPF is relocated, the SMF sends an N4 Session Modification Request message indicating DL Access Network (AN) Tunnel Info of the T-RAN to the T-UPF.
8b. The T-UPF sends a N4 Session Modification Response message to the SMF. This step may be conditionally performed.
   The T-UPF acknowledges by sending the N4 Session Modification Response message to the SMF.
9a. The SMF sends an N4 Session Modification Request message to the (intermediate) S-UPF. This step may be conditionally performed.
   If UPF is not relocated, the SMF sends the N4 Session Modification Request message indicating the DL AN tunnel info of the T-RAN to the S-UPF.
9b. The S-UPF sends an N4 Session Modification Response message to the SMF. This step may be conditionally performed.
   The S-UPF acknowledges by sending the N4 Session Modification Response message to the SMF.
10a. The SMF sends a N4 Session Modification Request message to the UPF (i.e., PSA). This step may be conditionally performed.
   For non-roaming or local breakout roaming scenario, the SMF sends an N4 Session Modification Request message to PDU Session Anchor UPF, providing N3 AN Tunnel Info of T-RAN or the DL CN Tunnel Info of T-UPF if a new T-UPF is inserted or an existing intermediate S-UPF is relocated. If the existing intermediate S-UPF terminating to N9 toward the H-UPF (i.e., PDU Session Anchor) is relocated for the home routed roaming scenario, the V-SMF invokes an Nsmf_PDUSession_Update Request service operation toward the H-SMF.
   If a T-UPF is not inserted or an existing intermediate S-UPF is not relocated, steps 10a and step 10b may be skipped.
10b. The UPF(PSA) sends an N4 Session Modification Response message to the SMF. This step may be conditionally performed.
   The UPF(PSA) sends the N4 Session Modification Response message to the SMF. In order to assist a reordering function in the T-RAN, the UPF (PSA) sends one or more "end marker" packets to each QoS Flow that requires reordering on the old path immediately after switching the path, and the S-UPF forwards the "end marker" packets to the S-RAN. At this point, the UPF (PSA) starts to send downlink packets to the T-RAN via the T-UPF if a new T-UPF is inserted or an existing intermediate S-UPF is relocated. In the case of home routed roaming scenario, the H-SMF responds with the Nsmf_PDUSession_Update Response service operation when the H-UPF (PDU Session Anchor) is updated with the UL tunnel information of the T-UPF.
   When there are multiple UPFs(PSA), step 10a and step 10b are performed for each UPF(PSA).
11. The SMF may send an Nsmf_PDUSession_UpdateSMContext response message to the T-AMF.
   The Nsmf_PDUSession_UpdateSMContext response message may include a PDU session ID.
   The SMF confirms reception of the Handover Complete message.
12. The UE may initiate a mobility Registration procedure.
   The T-AMF knows that it is a Handover procedure, and therefore the T-AMF performs only some of the Registration procedure, specifically steps 5, 6, and 10 for the context transfer between the S-AMF and the T-AMF are skipped.
13a. The SMF sends an N4 Session Release Request message to the (intermediate) S-UPF.
   If there is a source intermediate UPF, the SMF initiates resource release, after timer in step 7 or indirect data forwarding timer expires, by sending an N4 Session Release Request message (including Release Cause) to a source UPF. This message is also used to release the indirect data forwarding resource in the S-UPF.
13b. The S-UPF sends an N4 Session Release Response message to the SMF.
   The S-UPF acknowledges with an N4 Session Release Response message to confirm the release of resources.
   In case of indirect data forwarding, the resource of indirect data forwarding is also released.
14a. The AMF sends a UE Context Release Command message to the S-RAN.
   After the timer in step 6a expires, the AMF sends the UE Context Release Command message.
14b. The S-RAN sends a UE Context Release Complete message to the AMF.
   The source RAN releases its resources related to the UE and responds with a UE Context Release Complete message.
15a. The SMF sends a N4 Session Modification Request message to the T-UPF. This step may be conditionally performed.
   If indirect forwarding is applied and UPF is relocated, after a timer of indirect data forwarding expires, the SMF sends a N4 Session Modification Request message to the T-UPF to release the indirect data forwarding resource.
15b. The T-UPF sends a N4 Session Modification Response message to the SMF. This step may be conditionally performed.
   The T-UPF acknowledges with the N4 Session Modification Response to confirm the release of indirect data forwarding resources.
   Meanwhile, in step 10 of the N2 handover procedure, the T-RAN generates a PDU Sessions failed to be setup list with reason for failure and sends the generated PDU Sessions failed to be setup list to S-RAN.
10. T-RAN to T-AMF: Handover Request Acknowledge (Target to Source transparent container, SM N2 response list, PDU Sessions failed to be setup list, and T-RAN SM N3 forwarding info list)

The target to Source transparent container includes a UE container with an access stratum (AS) part and a NAS part. The UE container is sent transparently to the UE via T-AMF, S-AMF and S-RAN.

The information provided to the S-RAN may also include a list of PDU Session IDs indicating PDU Sessions failed to be setup and a reason for failure (e.g., SMF decision, SMF response too late, or T-RAN decision).

There are three causes, SMF decision, SMF response too late, and T-RAN decision. However, the T-RAN does not know exact reason for failure. For example, the T-RAN cannot differentiate whether PDU session is released by the SMF or no SMF response received within the maximum wait time. Accordingly, the T-RAN does not know exact reason for failure. In order to generate such a list and reason for failure, the AMF or SMF needs to provide related information to the T-RAN. Therefore, one embodiment of the present invention provides a method for providing a list of PDU Sessions by the AMF if there is no response from SMF within the maximum wait time. Also, the SMF provides a non-accepted PDU Session list with reason for failure.

Hereinafter, the inter NG-RAN node N2-based handover preparation procedure without Xn interface will be described in detail based on the contents described above.

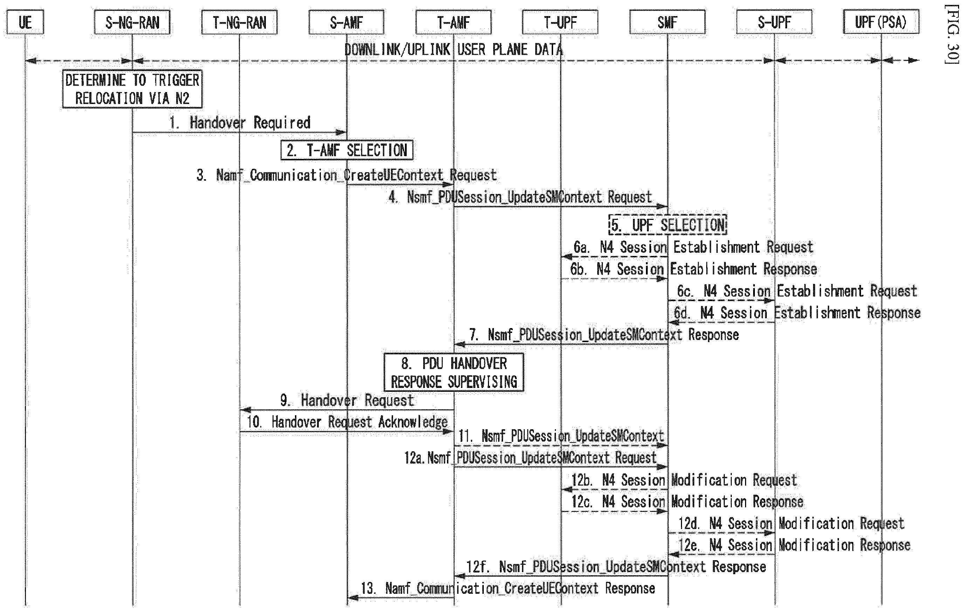

FIG. 30 illustrates a handover procedure according to an embodiment of the present invention.

FIG. 30 illustrates an inter NG-RAN node N2 based handover preparation phase.
1. The S-RAN sends a Handover Required message to the S-AMF.
   The Handover Required message may include a target ID, a Source to Target transparent container, an SM N2 info list, and PDU Session IDs.
   The Target ID includes selected PLMN identifiers (ID).
   The Source to Target transparent container includes RAN information created by S-RAN to be used by T-RAN, and is transparent to 5GC.
   All PDU Sessions handled by the S-RAN (i.e., all existing PDU Sessions with active UP connections) need to be included in the Handover Required message. At this time, the Handover Required message indicates which of those PDU session(s) are requested by the S-RAN to handover.
   The SM N2 info also includes Direct Forwarding Path Availability, and which QoS flows are subject to data forwarding.
   The Direct Forwarding Path Availability indicates whether direct forwarding is available from the S-RAN to the T-RAN. This indication from the S-RAN may be based on the presence of IP connectivity and security association(s) between the S-RAN and the T-RAN.
2. When the S-AMF cannot serve the UE anymore, the S-AMF selects the T-AMF.
3. The S-AMF may send a Namf_Communication_CreateUEContext request message to the T-AMF. This step may be conditionally performed.
   The Namf_Communication_CreateUEContext Request message may include N2 Information (Target ID, Source to Target transparent container, SM N2 information list, Service area restriction), UE context information containing SUPI and the list of PDU Session IDs together with the corresponding SMF information.
   The S-AMF initiates a Handover resource allocation procedure by invoking the Namf Communication CreateUEContext service operation towards the T-AMF.
   When the S-AMF can still serve the UE, this step and step 12 are not performed.
   If the service area restrictions are available in the S-AMF, the service area restrictions may be forwarded to the T-AMF.
4. The T-AMF may send a Nsmf_PDUSession_UpdateSMContext message to the SMF. This step may be conditionally performed.
   The Nsmf PDUSession UpdateSMContext message may include a PDU Session ID, a Target ID, and a T-AMF ID.
   For each PDU Session indicated by the S-RAN as an N2 Handover candidate, the AMF invokes the Nsmf_PDUSession_UpdateSMContext request per PDU Session to the associated SMF.
   The PDU Session ID indicates a PDU Session candidate for N2 Handover.
   The target ID may be used as the UE location information.
   If the (T-)AMF detects that the UE moves into a non-allowed area based on the service area restrictions, the (T-)AMF notifies each SMF corresponding to the list of PDU Sessions received from the Handover Required message of that the UE is only reachable for regulatory prioritized services.
5. This step may be conditionally performed. Based on the Target ID, the SMF checks whether N2 Handover for the indicated PDU Session can be accepted. The SMF checks also the UPF Selection Criteria. If the UE has moved out of the service area of the UPF connected to RAN, the SMF selects a new intermediate UPF. If the PDU Session corresponds to a LADN and the UE is outside an available area of the LADN, the SMF moves to step 6c.
6a. The SMF sends a N4 Session Establishment Request message to the (intermediate) T-UPF. This step may be conditionally performed.
   If the SMF selects a new intermediate UPF (i.e., T-UPF) for the PDU Session and CN Tunnel Info is allocated by the T-UPF, an N4 Session Establishment Request message is sent to the T-UPF, providing Packet detection, enforcement and reporting rules to be installed on the T-UPF. The PDU Session anchor tunnel info for this PDU Session is also provided to the T-UPF.
6b. The (intermediate) T-UPF sends an N4 Session Establishment Response message to the SMF.
   The T-UPF sends an N4 Session Establishment Response message to the SMF with CN DL tunnel info and UL Tunnel info (i.e., N3 tunnel info). The SMF starts a timer to release the resource of S-UPF to be used in step 12a of the Handover Execution Phase.
   If steps 6a and 6b are performed for the PDU Session, steps 6c and 6d are skipped.
6c,d. The SMF sends an N4 Session Modification Request/Response message to the S-UPF.
   If the PDU Session corresponds to a LADN and the UE is outside the available area of the LADN, the SMF updates the N4 session of the UPF(s) corresponding to the PDU Session to deactivate the corresponding UP connection. The SMF may notify the UPF that sends the Data Notification to discard downlink data for the PDU Sessions and/or to not provide an additional Data Notification message.
7. The SMF may send an Nsmf_PDUSession_UpdateSMContext response message to the T-AMF.
   The Nsmf PDUSession_UpdateSMContext response message may include a PDU Session ID, SM N2 Info, and Reason for non-acceptance.
   If N2 handover for the PDU Session is accepted, the SMF includes in the Nsmf_PDUSession_UpdateSMContext response the SM N2 Information containing the N3 UP address and the UL CN Tunnel ID of the UPF and the QoS parameters indicating that the SM N2 Information is for the Target NG-RAN.
   If N2 handover for the PDU Session is not accepted as described in step 4 above, the SMF does not include SM N2 info regarding the PDU Session to avoid establishment of radio resources at the target RAN. In stead, the SMF provides the reason for non-acceptance.
   If the SMF is notified that the UE is only reachable for regulatory prioritized services, the SMF does not include any SM N2 info regarding the PDU Session for non regulatory prioritized services to avoid establishment of radio resources at the target RAN.
   The SMF sends to the AMF an Nsmf_PDUSession_UpdateSMContext response message without including the CN tunnel info for the PDU Session(s) which is to be released. In addition, the PDU Session(s) are released separately from the procedure.
8. The AMF supervises the Nsmf_PDUSession_UpdateSMContext Response message from the involved SMF(s). The lowest value of the maximum delay indications for the PDU Sessions that are candidates for handover gives the maximum time when the AMF may wait for the Nsmf_PDUSession_UpdateSMContext response message before continuing with the N2 Handover procedure. When the maximum wait time expires or when all the Nsmf_PDUSession_UpdateSMContext response messages are received, the AMF continues with the N2 Handover procedure (i.e., sending the Handover Request message in step 9).
9. The T-AMF sends a Handover Request message to the T-RAN.
   The Handover Request message may include a Source to Target transparent container, MM N2 information, an SM N2 information list, a Handover Restriction list, and a Non-accepted PDU Session List.
   The T-AMF determines T-RAN based on the Target ID. The T-AMF allocates a 5G-GUTI for the UE in the AMF and target TAI.
   The Source to Target transparent container is forwarded as received from the S-RAN. The MM N2 information may include, for example, security information and a Handover Restriction List.
   The SM N2 information list includes SM N2 information received from SMFs in the Nsmf_PDUSession_UpdateSMContext message received within allowed maximum delay supervised by the T-AMF mentioned in step 8. The SM N2 information also indicates which QoS flows are subject to data forwarding.
   The Handover Restriction List is sent when being available in the Target AMF.
   The Non-accepted PDU Session List is generated by the AMF based on a response from SMF(s) in step 7 and results of step 8. The AMF generates a Non-accepted PDU Session List by combining a response received from SMF(s) with a reason for non-acceptance and adding PDU Session(s) with reason for non-acceptance if there is no response too late from associated SMF(s).
10. The T-RAN sends a Handover Request Acknowledge message to the T-AMF.
   The Handover Request Acknowledge message may include a Target to Source transparent container, an SM N2 response list, a PDU Sessions failed to be setup list, and a T-RAN SM N3 forwarding info list.
   The target to Source transparent container includes a UE container with an access stratum (AS) part and a NAS part. The UE container is sent transparently to the UE via T-AMF, S-AMF and S-RAN.
   The T-RAN generates PDU Sessions failed to be setup and reason for failure (e.g., SMF decision, SMF response too late, or T-RAN decision) based on the Non-accepted PDU Session List. The information is provided to the S-RAN.
   The SM N2 response list includes, per each received SM N2 info, a PDU Session ID and an SM N2 response indicating whether the PDU Session ID and the T-RAN accepted the N2 Handover request for the PDU Session, for the PDU Session accepted by the SMF for N2 Handover. For each by T-RAN accepted PDU Session for N2 Handover, the SM N2 response includes an N3 UP address and a Tunnel ID of T-RAN.
   The T-RAN SM N3 forwarding info list includes, per each PDU Session accepted by the T-RAN, at least one of a QoS flow subject for data forwarding, and N3 UP address and Tunnel ID of the T-RAN for receiving forwarded data.
11. The T-AMF may send an Nsmf_PDUSession_UpdateSMContext request message to the SMF.
   The Nsmf PDUSession UpdateSMContext request message may include a PDU Session ID and a cause.
   When an Nsmf PDUSession UpdateSMContext Response message arrives too late (see step 8), or the PDU Session with SMF involvement is not accepted by the T-RAN, this message is sent to the corresponding SMF to allow the SMF to deallocate N3 UP address and Tunnel ID allocated to the selected UPF. A PDU Session handled by the corresponding SMF is considered to be deactivated and handover attempt is terminated for the corresponding PDU Session.
12a. The AMF may send an Nsmf_PDUSession_UpdateSMContext request message to the SMF.
   The Nsmf_PDUSession_UpdateSMContext request message may include a PDU Session ID, an SM N2 response, and a T-RAN SM N3 forwarding info list.
   For each SM N2 response received from the T-RAN (included in the SM N2 response list), the AMF sends the received SM N2 response to the SMF indicated by the respective PDU Session IDs.
   If no new T-UPF is selected, the SMF stores the N3 tunnel info of T-RAN from the SM N2 response if N2 handover is accepted by T-RAN.
12b. The SMF sends a N4 Session Modification Request message to the T-UPF. This step may be conditionally performed.
   The N4 Session Modification Request message may include a T-RAN SM N3 forwarding info list, and indication to allocate a DL forwarding tunnel for indirect forwarding.
   If the SMF selected a T-UPF in step 6a above, the SMF updates the T-UPF by providing the T-RAN SM N3 forwarding information list by sending the N4 Session Modification Request message to the T-UPF.
   If indirect forwarding is applied based on indication from NG-RAN and the UPF is relocated and if the SMF decides to setup the indirect forwarding tunnel on the same T-UPF, the SMF also requests in the N4 Session Modification Request message to the T-UPF, to allocate a DL forwarding tunnel for indirect forwarding.
   When the SMF selects a T-UPF for indirect forwarding, the indirect forwarding may be performed via a UPF which is different from the T-UPF.
12c. The T-UPF sends a N4 Session Modification Response message to the SMF. This step may be conditionally performed.
   The N4 Session Modification Response message may include a T-UPF SM N3 forwarding info list.
   The T-UPF allocates tunnel information and sends the N4 Session Modification Response message to the SMF.
   The T-UPF SM N3 forwarding info list includes T-UPF N3 address and T-UPF N3 Tunnel identifiers for forwarding data.
12d. The SMF sends an N4 Session Modification Request message to the S-UPF. This step may be conditionally performed.
   The N4 Session Modification Request message may include a T-RAN SM N3 forwarding info list or T-UPF SM N3 forwarding Information list, and indication to allocate a DL forwarding tunnel for indirect forwarding.
   If the UPF is relocated, this message includes the T-UPF SM N3 forwarding info list. If the UPF is not relocated, this message includes the T-RAN SM N3 forwarding info list.
   If indirect forwarding is applied based on indication from NG-RAN, the SMF indicates in the N4 Session Modification Request message to the S-UPF to allocate a DL forwarding tunnel for indirect forwarding.
   The indirect forwarding may be performed via a UPF which is different from the S-UPF.
12e. The S-UPF sends an N4 Session Modification Response message to the SMF. This step may be conditionally performed.
   The N4 Session Modification Response message may include an S-UPF SM N3 forwarding info list.
   The S-UPF allocates tunnel information and sends an N4 Session establishment Response message to the SMF.
   The S-UPF SM N3 forwarding info list may include S-UPF N3 address and S-UPF N3 Tunnel identifiers for data forwarding for both the downlink and the uplink.
12f. The SMF may send an Nsmf_PDUSession_UpdateSMContext response message to the T-AMF.

The Nsmf_PDUSession_UpdateSMContext response message may include N2 SM Information.

The SMF sends an Nsmf_PDUSession_UpdateSMContext Response message per PDU Session to the T-AMF.

The SMF creates N2 SM information containing the DL forwarding tunnel information to be sent to the S-RAN by the AMF. The SMF includes this information in the Nsmf PDUSession UpdateSMContext response message.

The DL forwarding tunnel information may be one of the following information:
- If indirect forwarding is applied, the SMF includes the T-RAN N3 forwarding information received in step 12a.
- If the indirect forwarding tunnel is setup in step 12b or 12d, the SMF includes the T-UPF or S-UPF DL forwarding information containing the N3 UP address and the DL Tunnel ID of the UPF.

The SMF starts an indirect data forwarding timer, to be used to release the resource of indirect data forwarding tunnel.

13. The T-AMF sends a Namf_Communication_CreateUEContext response message to the S-AMF. This step may be conditionally performed.

The Namf Communication CreateUEContext response message may include N2 information necessary for the S-AMF to send Handover Command to the S-RAN including a Target to Source transparent container, and N2 SM information (the PDU Sessions failed to be setup list and the N3 DL forwarding Information).

The AMF supervises the Nsmf_PDUSession_UpdateSMContext Response message from the involved SMF(s). When the maximum wait time expires or when all the Nsmf_PDUSession_UpdateSMContext Response messages are received, the T-AMF sends the Namf_Communication_CreateUEContext Response message to the S-AMF.

The Target to Source transport container is received from the T-RAN. The N2 SM Information is received from the SMF in step 12f.

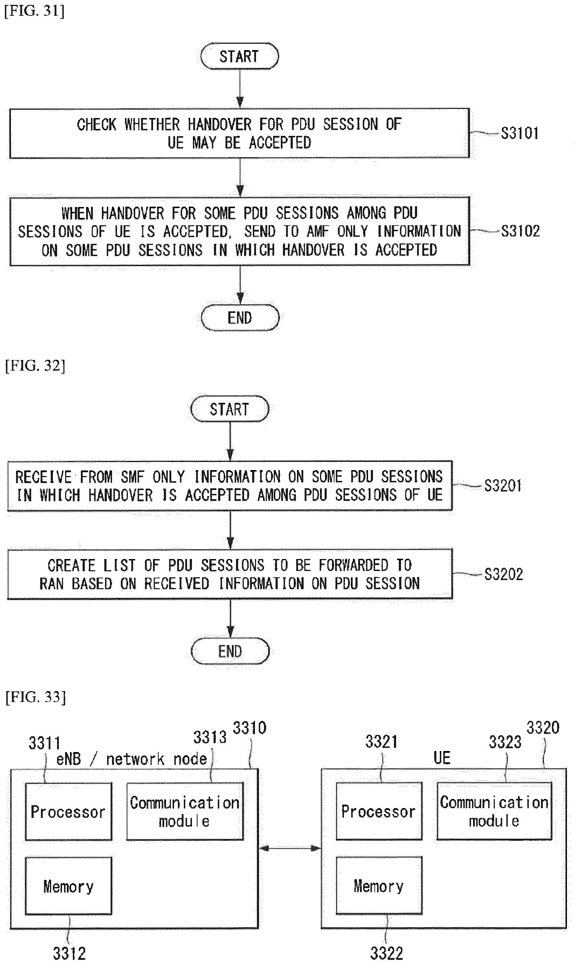

FIG. 31 illustrates a method for performing handover according to an embodiment of the present invention.

Referring to FIG. 31, the SMF (e.g., source SMF) checks whether the handover for the PDU session of the UE may be accepted (S3101).

As described above, the SMF may check whether the handover for the PDU session of the UE may be accepted based on the target ID received from the AMF.

Further, when the PDU session corresponds to the LADN, if the AMF expects that the UE deviates from the available area of the LADN, the AMF may indicate to the SMF that it is expected that the UE deviates from the available area of the LADN. When receiving from the AFM the indication that it is expected that the UE deviates from the available area of the LADN, the SMF may not accept the handover of the PDN session corresponding to the LADN.

As an example, this step may correspond to the step of determining whether the SMF/UPF is changed in FIG. 24, the step of determining whether the SMF/UPF is changed in FIG. 25, step 4 in FIG. 26, step 5 in FIG. 28, or step 5 in FIG. 30.

Further, simultaneously, the SMF may check whether the UPF needs to be changed. When a new UPF is selected, the SMF may send the N4 interface session establishment request message for providing the packet related rules (i.e., packet detection, execution, and reporting rules) to the selected UPF.

When the handover for some PDU sessions among the PDU sessions of the UE is accepted, the SMF (e.g., source SMF) sends only information on some PDU sessions in which the handover is accepted to the AMF (S3102).

In this case, instead of the information on the PDU session in which the handover is not accepted, information for announcing that the PDU session is not accepted may be sent. As an example, the information may correspond to the light handover indicator as illustrated in FIG. 24 above or the reason for non-acceptance as illustrated in FIG. 30 above.

Here, the information on the PDU session may correspond to the SM N3 information of FIG. 30, for example and may include an N3 interface user plane address and an uplink core network tunnel identifier of the UPF, and a quality of service (QoS) parameter indicating that the information on the PDU session is information for the target RAN.

Step S3102 may be performed by using the Nsmf PDUSession UpdateSMContext response message.

As an example, this step may correspond to step 5 in FIG. 24, step 5 in FIG. 25, step 6 in FIG. 26, step 7 in FIG. 28, or step 7 in FIG. 30.

FIG. 32 illustrates a method for performing handover according to an embodiment of the present invention.

Referring to FIG. 32, the AMF (e.g., target AMF) receives from the SMF (e.g., source SMF) only information on some PDU sessions in which the handover is accepted among the PDU sessions of the UE (S3201).

In this case, instead of the information on the PDU session in which the handover is not accepted, information for announcing that the PDU session is not accepted may be sent. As an example, the information may correspond to the light handover indicator as illustrated in FIG. 24 above or the reason for non-acceptance as illustrated in FIG. 30 above.

Here, the information on the PDU session may correspond to the SM N3 information of FIG. 30, for example and may include an N3 interface user plane address and an uplink core network tunnel identifier of the UPF, and a quality of service (QoS) parameter indicating that the information on the PDU session is information for the target RAN.

Step S3201 may be performed by using the Nsmf_PDUSession_UpdateSMContext response message.

As an example, this step may correspond to step 5 in FIG. 24, step 5 in FIG. 25, step 6 in FIG. 26, step 7 in FIG. 28, or step 7 in FIG. 30.

The AMF (e.g., target AMF) creates a list of PDU session to be forwarded to the RAN (e.g., target RAN) based on the received information on the PDU session.

Here, a list of PDU sessions which are not accepted may be created as the list of the PDU sessions. Further, the list of the PDU sessions which are not accepted may include a PDU which is not accepted by the SMF, a PDU session which is not accepted by the AMF because there is no response from the SMF within a maximum waiting time, and a PDU session which is not accepted by the AMF because there is no sine network slice selection assistance information (S-NSSAI) available within the AMF.

As an example, this step may correspond to the PDU list creating step in FIG. 24, the PDU list creating step in FIG. 25, step 7 in FIG. 26, step 8 in FIG. 28, or step 8 in FIG. 30.

Further, the AMF may send the list (e.g., the list of non-accepted PDU sessions) of the PDU sessions to the RAN (e.g., target RAN).

As an example, this step may correspond to step 6 in FIG. 24, step 11 in FIG. 25, step 8 in FIG. 26, step 9 in FIG. 28, or step 9 in FIG. 30 above.

In addition, the RAN receiving the list of non-accepted PDU sessions may create a PDU Sessions failed to be setup list and a reason for failure based on the received list of non-accepted PDU sessions. In this case, an example of the reason cause of the failure may include a decision of the SMF, a too late SMF response, a decision of the RAN, and unavailability of the S-NSSAI.

As an example, this step may correspond to the step of setting up the AS context by considering the PDU session in FIG. 24, the step of setting up the AS context by considering the PDU session in FIG. 25, step 9 in FIG. 26, step 10 in FIG. 28, or step 10 in FIG. 30 above.

### Overview of Devices to Which Present Invention is Applicable

FIG. 33 illustrates a block diagram of a communication apparatus according to an embodiment of the present invention.

Referring to FIG. 33, a wireless communication system includes a network node/gNB 3310 and multiple user equipments (UEs) 3320.

The network node/gNB 3310 includes a processor 3311, a memory 3312, and a communication module 3313. The processor 3311 implements a function, a process, and/or a method which are proposed in FIGS. 1 to 32 above. Layers of a wired/wireless interface protocol may be implemented by the processor 3311. The memory 3312 is connected with the processor 3311 to store various pieces of information for driving the processor 3311. The communication module 3313 is connected with the processor 3311 to send and/or receive a wired/wireless signal. An example of the network node 3310 may correspond to the network entity (e.g., AMF, SMF, (R)AN, UPF, PCF, etc.) illustrated in FIG. 1 above. In particular when the network node 3310 is the base station (gNB), the communication module 3313 may include a radio frequency (RF) unit for sending/receiving the wireless signal.

The UE 3320 includes a processor 3321, a memory 3322, and a communication module (or RF unit) 3323. The processor 3321 implements a function, a process, and/or a method which are proposed in FIGS. 1 to 32 above. The layers of the wireless interface protocol may be implemented by the processor 3321. The memory 3322 is connected with the processor 3321 to store various pieces of information for driving the processor 3321. The communication module 3323 is connected with the processor 3321 to send and/or receive the wireless signal.

The memories 3312 and 3322 may be positioned inside or outside the processors 3311 and 3321 and connected with the processors 3311 and 3321 by various well-known means. Further, the network node 3310 (when the network node 3320 is the base station) and/or the UE 2220 may have a single antenna or multiple antennas.

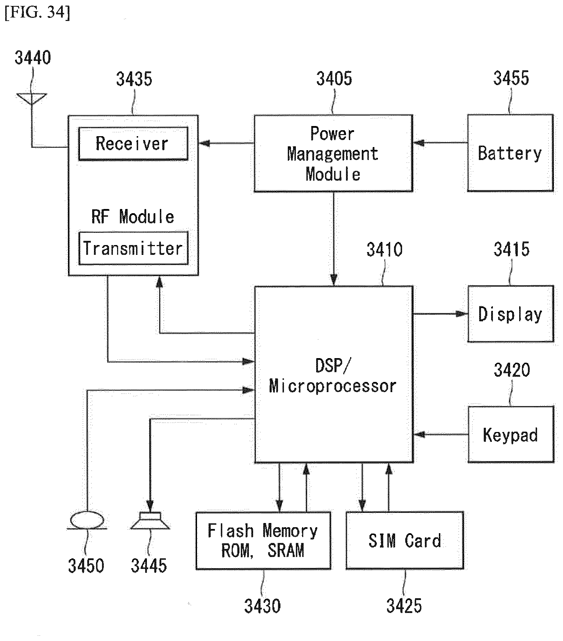

FIG. 34 illustrates a block diagram of a communication apparatus according to an embodiment of the present invention.

In particular, FIG. 34 is a diagram more specifically illustrating the UE of FIG. 33 above.

Referring to FIG. 34, the UE may be configured to include a processor (or a digital signal processor (DSP) 3410, an RF module (or RF unit) 3435, a power management module 3405, an antenna 3440, a battery 3455, a display 3415, a keypad 3420, a memory 3430, a subscriber identification module (SIM) card 3425 (This component is optional), a speaker 3445, and a microphone 3450. The UE may also include a single antenna or multiple antennas.

The processor 3410 implements a function, a process, and/or a method which are proposed in FIGS. 1 to 32 above. Layers of a wireless interface protocol may be implemented by the processor 3410.

The memory 3430 is connected with the processor 3410 to store information related to an operation of the processor 3410. The memory 3430 may be positioned inside or outside the processor 3410 and connected with the processor 3410 by various well-known means.

A user inputs command information such as a telephone number or the like by, for example, pressing (or touching) a button on the keypad 3420 or by voice activation using the microphone 3450. The processor 3410 receives such command information and processes to perform appropriate functions including dialing a telephone number. Operational data may be extracted from the SIM card 3425 or the memory 3430. In addition, the processor 3410 may display command information or drive information on the display 3415 for the user to recognize and for convenience.

The RF module 3435 is connected with the processor 3410 to send and/or receive an RF signal. The processor 3410 transfers the command information to the RF module 3435 to initiate communication, for example, to send wireless signals constituting voice communication data. The RF module 3435 is constituted by a receiver and a sender for receiving and sending the wireless signals. The antenna 3440 functions to send and receive the wireless signals. Upon receiving the wireless signals, the RF module 3435 may transfer the signal for processing by the processor 3410 and convert the signal to a baseband. The processed signal may be converted into to audible or readable information output via the speaker 3445.

In the embodiments described above, the components and the features of the present invention are combined in a predetermined form. Each component or feature should be considered as an option unless otherwise expressly stated. Each component or feature may be implemented not to be associated with other components or features. Further, the embodiment of the present invention may be configured by associating some components and/or features. The order of the operations described in the embodiments of the present invention may be changed. Some components or features of any embodiment may be included in another embodiment or replaced with the component and the feature corresponding to another embodiment. It is apparent that the claims that are not expressly cited in the claims are combined to form an embodiment or be included in a new claim by an amendment after the application.

The embodiments of the present invention may be implemented by hardware, firmware, software, or combinations thereof. In the case of implementation by hardware, according to hardware implementation, the exemplary embodiment described herein may be implemented by using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, the embodiment of the present invention may be implemented in the form of a module, a procedure, a function, and the like to perform the functions or operations described above. A software code may be stored in the memory and executed by the processor. The memory may be positioned inside or outside the processor and may send and receive data to/from the processor by already various means.

It is apparent to those skilled in the art that the present invention may be embodied in other specific forms without departing from essential characteristics of the present invention. Accordingly, the aforementioned detailed description should not be construed as restrictive in all terms and should be exemplarily considered. The scope of the present invention should be determined by rational construing of the appended claims and all modifications within an equivalent scope of the present invention are included in the scope of the present invention.

### [Industrial Applicability]

The present invention is described based on an example applied to the 3GPP LTE/LTE-A system and the 5G system, but it is possible to apply the present invention to various wireless communication systems in addition to the 3GPP LTE/LTE-A system and the 5G system.

## Claims

1. A method for performing handover of a user equipment (UE) by a session management function (SMF) including a communication module and a process in a wireless communication system, the method comprising:
checking whether handover for a protocol data unit (PDU) session of the UE may be accepted; and
transmitting, to an access and mobility management function (AMF), when handover for some PDU sessions among the PDU sessions of the UE is accepted, only information on some PDU sessions in which the handover is accepted.

2. The method of claim 1, wherein instead of information on a PDU session in which the handover is not accepted, information for announcing that the PDU session is not accepted is transmitted.

3. The method of claim 1, wherein instead of the information on the PDU session in which the handover is not accepted, an unaccepted cause of the PDU session which is not accepted is transmitted.

4. The method of claim 1, wherein the information on the PDU session includes an N3 interface user plane address and an uplink core network tunnel identifier of a user plane function (UPF) and a quality of service (QoS) parameter indicating that the information on the PDU session is information for a radio access network (RAN).

5. The method of claim 1, further comprising:
releasing the PDU session in which the handover is not accepted.

6. The method of claim 1, further comprising:
checking whether a change of the user plane function (UDF) is required.

7. The method of claim 6, further comprising:
when a new UPF is selected, transmitting an N4 interface session establishment request message for providing a rule related to a packet to the selected UPF.

8. The method of claim 1, wherein when the PDU session corresponds to a local area data network (LADN) and the UE deviates from an available area of the LADN, user plane connectivity to a UPF corresponding to the PDU session corresponding to the LADN is deactivated.

9. The method of claim 1, wherein when the PDU session corresponds to the LADN and an indication that the UE is expected to deviate from the available area of the LADN is received from the AMF, the handover of the PDU session corresponding to the LADN is not accepted.

10. A method for performing handover of a user equipment (UE) by an access and mobility management function (AMF) including a communication module and a process in a wireless communication system, the method comprising:
receiving, from a session management function (SMF), only information on some PDU sessions in which handover is accepted among PDU sessions of the UE; and
generating a list of PDU sessions to be transferred to a radio access network (RAN) based on the received information on the PDU session.

11. The method of claim 10, wherein instead of information on a PDU session in which the handover is not accepted, information for announcing that the PDU session is not accepted is received.

12. The method of claim 10, wherein instead of the information on the PDU session in which the handover is not accepted, an unaccepted cause of the PDU session which is not accepted is received.

13. The method of claim 10, wherein a list of PDU sessions which are not accepted is generated as the list of the PDU sessions, and
the list of the PDU sessions which are not accepted includes a PDU which is not accepted by the SMF, a PDU session which is not accepted by the AMF because there is no response from the SMF within a maximum waiting time, and a PDU session which is not accepted by the AMF because there is no sine network slice selection assistance information (S-NSSAI) available within the AMF.

14. The method of claim 13, wherein a PDU session list which fails in set-up and a cause of a failure are generated based on the list of the PDU sessions which is not accepted by the RAN.

15. The method of claim 14, wherein the cause of the failure includes a decision of the SMF, a too late SMF response, a decision of the RAN, and unavailability of the S-NSSAI.
